Europäisches Patentamt

European Patent Office

Office européen des brevets

(19)

(11) **EP 1 605 382 A1**

(12) **EUROPEAN PATENT APPLICATION**
published in accordance with Art. 158(3) EPC

(43) Date of publication:
**14.12.2005 Bulletin 2005/50**

(51) Int Cl.⁷: **G06F 17/60**

(21) Application number: **04717809.0**

(86) International application number:
**PCT/JP2004/002865**

(22) Date of filing: **05.03.2004**

(87) International publication number:
**WO 2005/086049 (15.09.2005 Gazette 2005/37)**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(71) Applicant: **Toyota Tsusho Corporation
Nagoya-shi, Aichi 4508575 (JP)**

(72) Inventors:
• **SUGIYAMA, Eiji,
c/o Toyota Tsusho Corp. Century
Nagoya-shi, Aichi 4508575 (JP)**
• **OSAKABE, Kenichi,
c/o Toyota Tsusho Corp. Century
Nagoya-shi, Aichi 4508575 (JP)**

• **KATAYANAGI, M.,
c/o Toyota Tsusho Corp. Century
Nagoya-shi, Aichi 4508575 (JP)**
• **ONO, Reiko, c/o Toyota Tsusho Corp. Century
Nagoya-shi, Aichi 4508575 (JP)**
• **KAIDEN, Tatsunori,
c/o Toyota Tsusho Corp. Century
Nagoya-shi, Aichi 4508575 (JP)**
• **SATOU, Shinichi,
c/o Toyota Tsusho Corp. Century
Nagoya-shi, Aichi 4508575 (JP)**

(74) Representative: **Schöniger, Franz-Josef
Betten & Resch,
Patentanwälte,
Theatinerstrasse 8
80333 München (DE)**

(54) **ECOLOGICAL VALUE TRANSFER**

(57) In respect to emissions trading, although the emission of carbon dioxide may be reduced, there arises a need for reduction of energy so used in conjunction therewith with the possibility of global recession. The present invention purports to facilitate supply of organic compounds having environmentally-friendly values by providing a support system, an certification system and a method of trading environmentally-friendly values of organic compounds, in conjunction with accompanying computer software, to operators creating environmentally-friendly values of organic compounds; to a wide range of companies wishing to purchase organic compounds having said environmentally-friendly values and products produced by using said organic compounds; and to individual consumers.

Fig.37

EP 1 605 382 A1

**Description**

**BACKGROUND OF THE INVENTION**

**Field of the Invention**

The present invention relates to a method of transferring eco-value and an apparatus, which transfers a labeling right, which is a right accrued by producing a product by using a plant-based resource, to an entity wishing to exercise the labeling right on a product produced by using a fossil-based resource.

**Description of the Related Art**

Currently, fixed carbon, which has been accumulated, is used as a main energy source (fuel) or chemical raw material. Emissions of carbon dioxide and the like caused by using the above fixed carbon as an energy source (fuel) or chemical raw material is deemed to be the cause of global warming. As for use as a chemical raw material, plastic is representative, and a large quantity of carbon dioxide is generated by its incineration after use. Moreover, a total amount of fossil-based resources, available to the mankind in the form of fixed carbon, (mainly, in the form of hydrocarbon) is estimated to last for 45 years in case of oil, 20 years in case of coal, and 100 years in case of natural gas. It is clear that they will be exhausted if the current situation of one-sided use and disposal continues. With respect to global warming, the emission trading system of carbon dioxide has been proposed, to suppress the emissions of carbon dioxide by providing trading of emission rights of carbon dioxide. Further, with respect to exhaustion of fossil fuel, measures have been proposed that entail using natural energy such as wind energy or recycling of plastic (Patent Reference 1, Japanese Patent Publication No. 2003-178167).

However, with respect to recycling plastic, it is difficult to completely restore the quality of the recycled plastic to that of brand-new plastic and there is the further problem of requiring much energy for recycling. Moreover, with respect to emissions trading, although the emission of carbon dioxide may be reduced, there arises a need for reduction of energy so used in conjunction therewith with the possibility of global recession.

**SUMMARY**

The present invention presents solutions to the above problems.

The present invention purports to facilitate supply of organic compounds having environmentally-friendly values by providing a support system, a certification system and a method of trading environmentally-friendly values of organic compounds, in conjunction with accompanying computer software, to operators creating environmentally-friendly values of organic compounds; to a wide range of companies wishing to purchase organic compounds having said environmentally-friendly values and products produced by using said organic compounds; and to individual consumers.

The first embodiment of the present invention relates to a method of transferring eco-value, in relation to a right accrued by producing a first product by using a plant-based resource, which is a method of transferring eco-value for transferring a labeling right, which is a right to label a product that the products possesses environmentally-friendly value, to an entity who wishes to exercise the labeling right with respect to a second product produced by using a fossil-based resource equivalent to said plant-based resource, wherein said method comprises a step of acquiring an environmentally-friendly value index, which is an index for environmentally-friendly value based on a production volume and a production process of the first product; and a step of computing a corresponding production volume of a second product based on a production process of the second product, onto which said labeling right is exercised, in which said volume corresponds to the environmentally-friendly value index acquired by the above step of acquiring said environmentally-friendly value index.

The second embodiment of the present invention relates to a method of transferring eco-value, wherein said environmentally-friendly value index corresponds to an amount of carbon derived from plant-based and/or fossil-based resources used in producing said first product.

The third embodiment of the present invention relates to a method of transferring eco-value, wherein said environmentally-friendly value index corresponds to an amount of carbon derived from plant-based and/or fossil-based resources used in producing said first product; and to an amount of carbon derived from plant- and/or fossil-based resources in terms of energy in production used in said production.

The fourth embodiment of the present invention relates to a method of transferring eco-value, wherein said environmentally-friendly value index corresponds to an amount of carbon derived from plant- and/or fossil-based resources in terms of energy in production used for producing said first product.

The fifth embodiment of the present invention relates to a method of transferring eco-value, wherein said environmentally-friendly value index corresponds to an amount of carbon derived from plant- and/or fossil-based resources, which is contained in said first product; and to an amount of carbon derived from plant- and/or fossil-based resources in terms of energy used in said production.

The sixth embodiment of the present invention relates to a method of transferring eco-value, wherein said environmentally-friendly value index corresponds to an amount of carbon derived from plant- and/or fossil-based resources, which is contained in said first product.

The seventh embodiment of the present invention relates to a method of transferring eco-value, wherein said corresponding production volume corresponds to a production volume of a second product containing a predetermined proportion of an amount of carbon, which corresponds to the amount of carbon contained in said first product as produced.

The eighth embodiment of the present invention relates to a method of transferring eco-value, wherein said organic compound used in producing the first product is identical to an organic compound used in producing a second product; and said corresponding production volume corresponds to the production vol ume of the second product produced by using an amount of said organic compound, which is a predetermined proportion of the amount of the organic compound used in producing said first product.

The ninth embodiment of the present invention relates to a method of transferring eco-value, wherein said fossil-based resource is identical to the first product; and said corresponding production volume corresponds to a production volume of a second product produced from an amount of the fossil-based resource, which is a predetermined proportion of the amount of the first product produced.

The tenth embodiment of the present invention relates to a method of transferring eco-value, which comprises a step of acquiring certification request information, the gist of which is a request for certification of a labeling right; a step of outputting certification information including information on a corresponding production volume, based on the certification request information acquired in the step of acquiring certification request information; a step of acquiring transfer request information, the gist of which is a request for transfer of the labeling right received in correspondence with the output of the certification information according to the step of outputting said certification information; a step of acquiring acceptance request information, the gist of which is a request for acceptance of the labeling right; and a step of comparing the transfer request information acquired in the step of acquiring said transfer request information, and the acceptance request information acquired in the step of acquiring acceptance request information.

The present invention enables transfer of a labeling right, which is a right to label a product to the effect that it possesses environ mentally-friendly value, by means of providing a support system for trading environmentally-friendly value of organic compounds for purposes of trading environmentally-friendly value, a certification system for trading environmentally-friendly value of organic compounds, a method of trading environmentally-friendly value of organic compounds, and an apparatus for implementing said systems and method. Moreover, the present invention enables prevention of confusion caused by major changes in the existing dist ribution network of organic compounds. Further, in relation to the organic compounds used in producing end products, retail operators and individual consumers not in the position of determining what organic compounds in use may properly label a product to the effect that the product possesses environmentally-friendly value by way of purchasing a certain labeling right without the trouble of tracing the source of the product to be consumed thereby. Then, the present invention promotes supply of organic compo unds having environmentally-friendly value, and in relation to the organic compound market, the present invention enables saving of exhaustible fossil-based resources by promoting use of recyclable resources and thereby reduces the amount of carbon dioxide in air, which is deemed to be one of the main causes of global warming. Therefore, from the perspective of the total amount of environmental burden at a global level, the present invention enables substantial reduction of environmental burden, thereby promoting construction of a society capable of recycling for the lasting development of the mankind.

## BRIEF DESCRIPTION OF THE DRAWINGS

Fig. 1 is a schematic diagram of the first embodiment according to the present invention.
Fig. 2 is a schematic diagram of a system of the first embodiment according to the present invention.
Fig. 3 is a drawing, which illustrates an example of execution of a labeling right of the first embodiment according to the present invention.
Fig. 4 is a schematic diagram, which illustrates Equivalent 1 of the first embodiment according to the present invention.
Fig. 5 is a schematic diagram, which illustrates Equivalent 2 of the first embodiment according to the present invention.
Fig. 6 is a schematic diagram, which illustrates Equivalent 3 of the first embodiment according to the present invention.

Fig. 7 is a schematic diagram, which illustrates Equivalent 4 of the first embodiment according to the present invention.

Fig. 8 is a schematic diagram, which illustrates Equivalent 5 of the first embodiment according to the present invention.

Fig. 9 is a schematic diagram, which illustrates Equivalent 6 of the first embodiment according to the present invention.

Fig. 10 is a schematic diagram, which illustrates Equivalent 7 of the first embodiment according to the present invention.

Fig. 11 is a schematic diagram, which illustrates Equivalent 8 of the first embodiment according to the present invention.

Fig. 12 is a schematic diagram, which illustrates Equivalent 9 of the first embodiment according to the present invention.

Fig. 13 is a flow chart of step processes for the method transferring eco-value of the first embodiment according to the present invention.

Fig. 14 is a schematic diagram, which illustrates Corresponding Product 1 of the first embodiment according to the present invention.

Fig. 15 is a schematic diagram, which illustrates Corresponding Product 2 of the first embodiment according to the present invention.

Fig. 16 is a schematic diagram, which illustrates Corresponding Operator 1 of the first embodiment according to the present invention.

Fig. 17 is a schematic diagram, which illustrates Corresponding Operator 2 of the first embodiment according to the present invention.

Fig. 18 is a drawing, which illustrates Concrete Example 1 of computation of a corresponding production volume of the first embodiment according to the present invention.

Fig. 19 is a drawing, which illustrates Concrete Example 2 of computation of a corresponding production volume of the first embodiment according to the present invention.

Fig. 20 is a drawing, which illustrates Concrete Example 3 of computation of a corresponding production volume of the first embodiment according to the present invention.

Fig. 21 is a flow chart of concrete step processes for the first embodiment according to the present invention.

Fig. 22 is a drawing, which illustrates Concrete Example 4 of computation of a corresponding production volume of the first embodiment according to the present invention.

Fig. 23 is a function block diagram of an apparatus for transferring eco-value of the first embodiment according to the present invention.

Fig. 24 is a drawing of Concrete Example 1 of computation of a corresponding production volume of the second embodiment according to the present invention.

Fig. 25 is a drawing of Concrete Example 2 of computation of a corresponding production volume of the second embodiment according to the present invention.

Fig. 26 is a drawing of Concrete Example 1 of computation of a corresponding production volume of the third embodiment according to the present invention.

Fig. 27 is a drawing of Concrete Example 2 of computation of a corresponding production volume of the third embodiment according to the present invention.

Fig. 28 is a drawing of Concrete Example 1 of computation of a corresponding production volume of the forth embodiment according to the present invention.

Fig. 29 is a drawing of Concrete Example 2 of computation of a corresponding production volume of the forth embodiment according to the present invention.

Fig. 30 is a drawing of Concrete Example 1 of computation of a corresponding production volume of the fifth embodiment according to the present invention.

Fig. 31 is a drawing of Concrete Example 2 of computation of a corresponding production volume of the fifth embodiment according to the present invention.

Fig. 32 is a drawing of Concrete Example 1 of computation of a corresponding production volume of the sixth embodiment according to the present invention.

Fig. 33 is a drawing of Concrete Example 2 of computation of a corresponding production volume of the sixth embodiment according to the present invention.

Fig. 34 is a drawing, which illustrates a concrete example of computation of corresponding production volume of the seventh embodiment according to the present invention.

Fig. 35 is a drawing, which illustrates a concrete example of computation of corresponding production volume of the eighth embodiment according to the present invention.

Fig. 36 is a drawing, which illustrates a concrete example of computation of corresponding production volume of the ninth embodiment according to the present invention.

Fig. 37 is a function block diagram of an apparatus for transferring eco-value of the tenth embodiment according to the present invention.

Fig. 38 is a flow chart of step processes for an apparatus for transferring eco-value of the tenth embodiment according to the present invention.

Fig. 39 is a flow chart of the initial certification system of Example 1 of the tenth embodiment according to the present invention.

Fig. 40 is a flow chart of processes of a system for trading environmentally-friendly value of Example 1 of the tenth embodiment according to the present invention.

Fig. 41 is a flow chart of processes of the final certification system of Example 1 of the tenth embodiment according to the present invention.

Fig. 42 is a drawing, which illustrates an example of certification request data for environmentally-friendly value of Example 1 of the tenth embodiment according to the present invention.

Fig. 43 is a drawing, which illustrates an example of certification order data for environmentally-friendly value of Example 1 of the tenth embodiment according to the present invention.

Fig. 44 is a drawing, which illustrates an example of certification data for environmentally-friendly value of Example 1 of the tenth embodiment according to the present invention.

Fig. 45 is a drawing, which illustrates an example of transfer request data of Example 1 of the tenth embodiment according to th e present invention.

Fig. 46 is a drawing, which illustrates an example of a method of computing a transfer index of Example 1 of the tenth embodiment according to the present invention.

Fig. 47 is a drawing, which illustrates acceptance request data of Example 1 of the tenth embodiment according to the present invention.

Fig. 48 is a drawing, which illustrates an example of a method of computing an acceptance index of Example 1 of the tenth embodiment according to the present invention.

Fig. 49 is a drawing, which illustrates of an example of Example 1 (transferable article information + transfer approval entry screen) of the tenth embodiment according to the present invention.

Fig. 50 is a drawing, which illustrates of an example of Example 1 (acceptable article information + acceptance approval entry screen) of the tenth embodiment according to the present invention.

Fig. 51 is a drawing, which illustrates an example of an acceptance certificate for environmentally-friendly value and a certification certificate of a product of Example 1 of the tenth embodiment according to the present invention.

Fig. 52 is a drawing, which illustrates an example of an acceptance certificate for environmentally-friendly value and a transfer-enabling certificate of a product of Example 1 of the tenth embodiment according to the present invention.

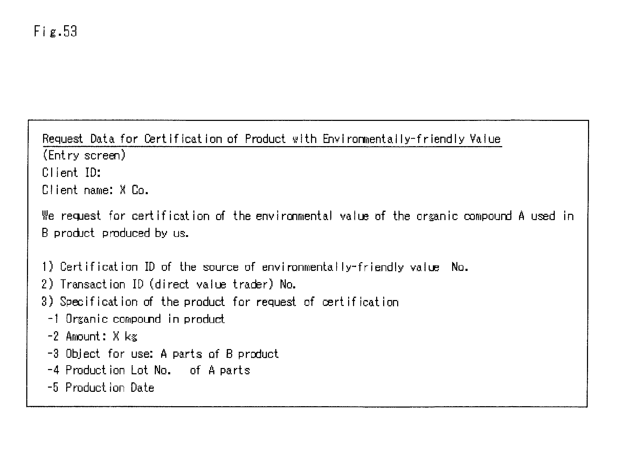

Fig. 53 is a drawing of an example of certification request data of a product having environmentally-friendly value of Example 1 of the tenth embodiment according to the present invention.

Fig. 54 is a drawing of a certification of a product having environmentally-friendly value of Example 1 of the tenth embodiment according to the present invention.

Fig. 55 is a flow chart of process es of an initial certification system of Example 2 of the tenth embodiment according to the present invention.

Fig. 56 is a flow chart of processes of a system for allotting environmentally-friendly value of Example 2 of the tenth embodiment according to the present invention.

Fig. 57 is a flow chart of processes of a final certification system of Example 2 of the tenth embodiment of the present invention.

Fig. 58 is a drawing of an example of certification request data for environmentally-friendly value of Example 2 of the tenth embodiment according to the present invention.

Fig. 59 is a drawing of an example of certification order data for environmentally-friendly value of Example 2 of the tenth embodiment according to the present invention.

Fig. 60 is a drawing of an example of a certification result data for environmentally-friendly value of Example 2 of the tenth embodiment according to the present invention.

Fig. 61 is a drawing of an example of an allotment request data for environmentally-friendly value of Example 2 of the tenth embodiment according to the present invention.

Fig. 62 is a drawing of an example of a method of computing an amount of allotment products of Example 2 of the tenth embodiment according to the present invention.

Fig. 63 is a drawing of an example of a certification certificate for a product of environmentally-friendly value of Example 2 of the tenth embodiment according to the present invention.

Fig. 64 is a drawing of an example of a certification request data for a product of environmentally-friendly value of Example 2 of the tenth embodiment according to the present invention.
Fig. 65 is a drawing of an example of a certification for a product of environmentally-friendly value of Example 2 of the tenth embodiment according to the present invention.

**DETAILED DESCRIPTION OF THE PREFERRED EMBODIMENTS**

Hereinafter, the embodiments of the present invention will be described. The relations between the embodiments and the Claims are as indicated below. The present invention will not be limited to these embodiments and may be embodied i n various forms without departing from the essential characteristics thereof.

In the first embodiment, Claims 1 and 11 will be mainly described.

In the second embodiment, Claims 2 and 12 will be mainly described.

In the third embodiment, Claims 3 and 13 will be mainly described.

In the fourth embodiment, Claims 4 and 14 will be mainly described.

In the fifth embodiment, Claims 5 and 15 will be mainly described.

In the sixth embodiment, Claims 6 and 16 will be mainly described.

In the seventh embodiment, Claims 7 and 17 will be mainly described.

In the eighth embodiment, Claims 8 and 18 will be mainly described.

In the ninth embodiment, Claims 9 and 19 will be mainly described.

In the tenth embodiment, Claims 10 and 20 will be mainly described.

**(The first embodiment)**

Hereinafter, the first embodiment will be described.

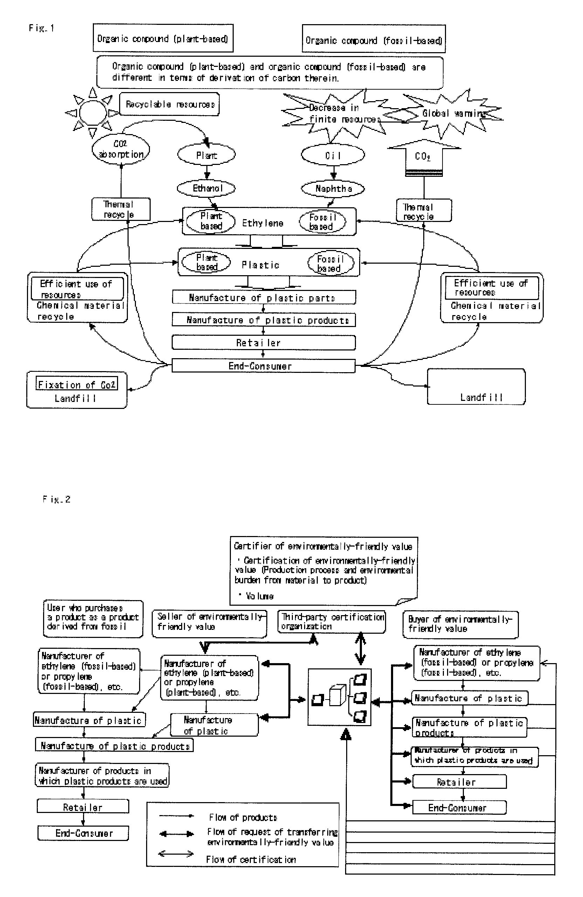

Fig. 1 is a schematic diagram, illustrating the differences between the fossil-based resources and the plant-based resources of the present embodiment.

With respect to the compounds as below, there are two types of compounds, which are respectively produced from plant-based resources or fossil-based resources (e.g., oil, coal, and gas): alcohol such as ethanol, methanol, and butanol; hydrocarbon such as methane, ethane, propane, ethylene, propylene, butadiene; and organic compounds, derivative of hydrocarbons such as ethyleneglycol, styrene monomer, polyvinyl chloride, polypropylene, polypropylene, ethylene/propylene-copolymer, polyethylene, polyethylene, polyethylene-telephthalate, polystyrene, vinyl chloride, and ABS. It seems that if there were two organic compounds having the same molecular structures and the same chemical or physical characteristics, the social values thereof should be the same. However, in fact, there are differences between the two compounds in terms environmental value in relation to social problems of environmental burden causing global warming and exhaustion of finite resources. Carbon contained in an organic compound produced by using plant-based resources is produced when plant materials in the growth process absorb carbon dioxide ($CO_2$) in air by means of photosynthesis. Meanwhile, carbon contained in an organic compound produced by using fossil-based resources is one that is unearthed. Therefore, there is a difference between the two compounds in terms of the degree of effects on an increase and decrease of atmospheric carbon dioxide, which is considered to be one of the causes of global warming.

Moreover, from the view point of finiteness of resources, the plant-based resources are short-term, recyclable unlimited resources, whereas fossil-based resources are finite resources. Therefore, there is a difference in degree in relation to the effects on exhaustion of resources between an organic compound produced from plant-based resources and an organic compound produced from fossil-based resources.

In this manner, the present invention provides a system and a method, which formulates the differences of environmentally-friendly values of organic compounds into environmentally-friendly value enabling tradability of environmental-friendly value, independent of physical and chemical properties, by severing environmental-friendly value therefrom.

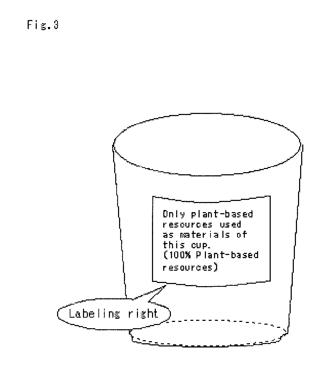

Fig. 2 is a schematic diagram of a system of the present embodiment. The system comprises a seller who sells an environmental value of a product which is produced from a plant-based resource; a buyer who buys the environmental value; a third-party certification that certifies the environmental value; and a user who buys a fossil-based product incorporating the severed environmentally-friendly value of the product produced from the plant-based resource.

First, the method of transferring eco-value of the present embodiment will be described, hereinafter.

The method of transferring eco-value of the present embodiment purports to transfer a labeling right to is an entity, who wishes to exercise the labeling right with respect to the second product, which is produced by using a fossil-based resource equivalent to said plant-based resource, wherein said labeling right is a right to label a product stating that it possesses environmentally-friendly value, which is a right accrued by producing a first product using a plant-based resource.

A "plant-based resource" corresponds to a plant-based resource used for producing a first product. The plant-based resource is produced by using mainly the plant-based materials. Here, in cases of "use" as above, the meaning of the term includes using energy for producing a first product. Hereinafter, in the description of the present invention, the meaning of the term "use" includes using energy for producing a first product unless stated otherwise. Here, "plant-based materials" correspond to materials derived from plants. Examples of plant-based materials include starch and sugar crops such as sugarcane, corn, and potato; aquatic plants such as seaweed and chlorella; natural rubber; oil plant such as a palm tree; wood materials such as eucalyptus; and fiber. Note that a plant-based material may be used as a plant-based resource.

A "first product" refers to a product produced by using a plant-based resource. The first product refers to hydrocarbon produced from plant-materials, such as ethanol, methanol, butanol, ethylene, propylene and butadiene (hereinafter, referred to as a first organic compound); derivatives from a first organic compound, such as ethyleneglycol, polyester, PE (polyethylene), PP (polypropylene), styrene, PS (polystyrene), ABS (acrylonitrile butadiene styrene) resins, PVC (poly vinyl chloride), EO (ethylene oxide), and PET (polyethylene terephthalate); and components or products produced from the above compounds by a molding process. Examples of the components and products produced using the above compounds include, in case of using polyethylene, films, foam products, shopping bags, garbage bags, bottles, gasoline tanks for cars, sheet pallets, artificial esophagus, and artificial trachea; in case of using polypropylene, tableware containers, bathing products, toiletry containers, films, ropes, storage containers, electronic products, and artificial hair; in case of using polystyrene, cups, trays, toys, tableware (spice racks), fish boxes, synthetic papers, and foam polystyrene; in case of using polyvinylchloride, pipes, hoses, wraps, vinyl sheets for agricultural purposes, building materials (e.g. floor materials and wall papers), electric wire coating, synthetic leather, record discs, artificial flower, and erasers; in case of using ABS resins, exteriors for refrigerators, televisions and audio devices, luggage, camera parts, and foam products; and in case of using polyethylene telephthalate, parts of household appliance s, recording tapes, PET bottles, housings, connectors, and films.

Moreover, a "fossil-based resource" refers to a resource used for producing a second product. The fossil-based resource is produced by using mainly fossil-based materials. Here, "fossil-based materials" refer to materials derived from fossils. Examples of fossil-based materials include crude oil, petroleum, heating oil, light oil, heavy oil, lubrication oil, petroleum gas, naphtha, gasoline, natural gas, and coal. Note that a fossil-based material may be a fossil-based resource.

A "second product" refers to a product for which the labeling right is exercised, wherein said product is produced by using a fossil-based resource equivalent to a plant-based resource. Examples of a second product include hydrocarbon from fossil-based materials (hereinafter, referred to as a first organic compound), such as ethanol, methanol, butanol, ethylene, propylene, and butadiene; derivatives from a first organic compound, such as ethyleneglycol, polyester, PE (polyethylene), PP (polypropylene), styrene, PS (polystyrene), ABS (acrylonitrile butadiene styrene) resins, PVC (poly vinyl chloride), EO (ethylene oxide), and ET (polyethylene terephthalate); and components or products produced from the above compounds by a molding process.

Moreover, an "environmentally-friendly value" refers to a value accrued by producing a first product using a plant-based resource. A "labeling right" refers to a right accrued by producing a first product using a plant-based resource, that is, a right to label a product stating that the product possesses an environmentally-friendly value. An example of a labeling right includes a right to label a product stating that "Only plant-based resources were used as materials for this cup (100% Plant-based resources)."

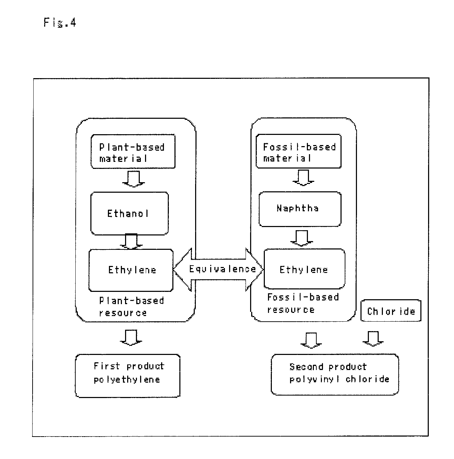

Fig. 3 is a drawing, which illustrates an example of executing a labeling right. In Fig. 3, for the purposes of showing contribution to the environment, for example, a cup, which is a second product having received the transfer of the labeling right, can be labeled "Only plant-based resources used as materials for this cup (100% Plant-based resources)."

Moreover, the term "equivalent" refers to a relation between a first product and a second product that stipulates the necessary requirements for transferring said labeling right, or more particularly, to a relation embodying parity between a plant-based resource used in the production process for producing a first product and a fossil-based resource used in the production process for producing a second product .

For example, where a first product and a second product are different products, if a plant-based resource used for producing the first product is identical with one of the fossil-based resources used for producing the second product, it may be said that the "equivalent" relation is established. Moreover, where a first product and a second product are identical, it follows that there must be identical resources as between the plant-based resources and the fossil-based resources that are used for producing the first product and the second product, respectively. Therefore, the "equivalent" relation is established between the plant-based resource of the first product and the fossil-based resource of the second product.

Hereinafter, the "equivalent" relation will be described by using the drawings with specific examples.

In Fig. 4, polyethylene is the first product, and polyvinyl-chloride is the second product. Ethylene, which is derived from ethanol, is included in the plant-based resources used in the production process of the first product. The fossil-based resources used in the production process of the second product of polyvinyl-chloride include ethylene derived from naphtha. Therefore, since the "equivalent" ethylene is included in the plant-based resources and the fossil-based resources, this enables transfer of a labeling right embodied by polyethylene, which is derived from a plant-based resource of ethanol, to an entity who wishes to exercise the labeling right onto the second product of polyvinyl-chloride derived from the fossil-based resource of naphtha.

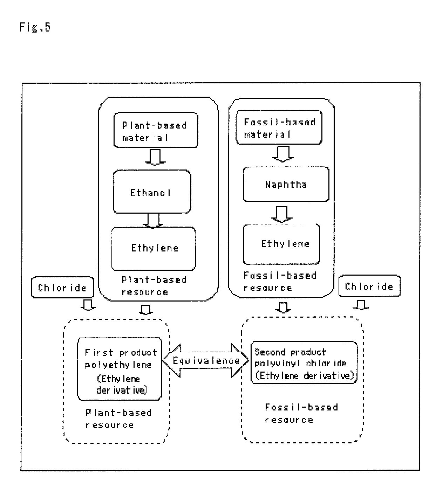

In Fig. 5, unlike Fig. 4, a first product is identical to a second product. In Fig. 5, the first product is polyvinyl-chloride produced via a series of processes from a plant-based resource of ethanol. Meanwhile, polyvinyl-chloride as a second product is produced via a series of processes from a fossil-based resource of naphtha. In this case, in a broader sense, the first product itself can be viewed as a plant-based resource for producing another product, and the second product as a fossil-based resource in the same manner. It follows that the plant-based resource, and the fossil-based resource as above for producing the first and second products, respectively, can be considered to be equivalent.

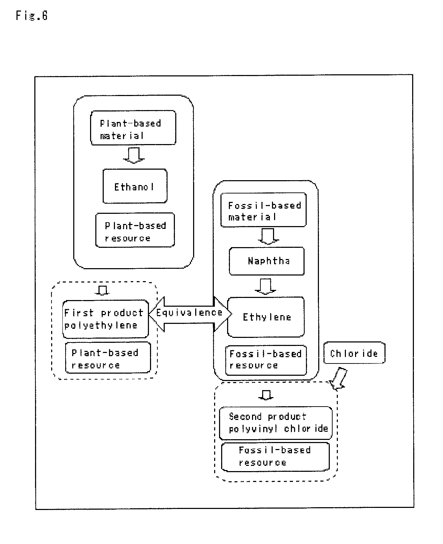

In Fig. 6, unlike Figs. 4 and 5, a first product is equivalent to the fossil-based resource for producing a second product. In Fig. 6, the first product is ethylene, which is produced from a plant-based resource of ethanol. Meanwhile, the second product is polyvinyl-chloride derived from ethylene, which is produced from a fossil-based resource of naphtha. In the same manner of Fig. 5, ethylene as a first product can be deemed to be a plant-based resource, so that the plant-based resource for producing the first product can be considered to be equivalent with the fossil-based resource for producing the second product.

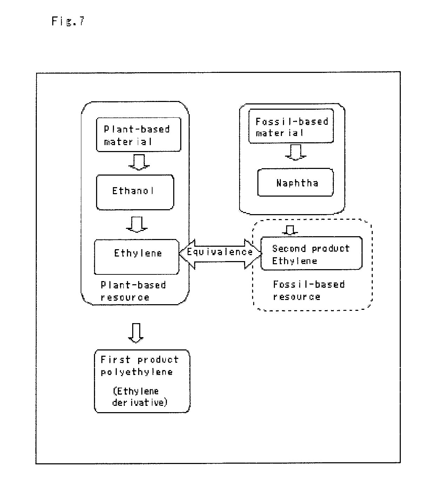

In Fig. 7, in contrast to Fig. 6, a second product is equivalent to a plant-based resource for producing a first product. In the same manner of Fig. 6, ethylene as a second product can be deemed to be a fossil-based resource, so that the plant-based resource for producing the first product can be considered to be equivalent with the fossil-based resource for producing the second product.

However, it is somewhat difficult to make a determination as to whether or not a plant-based resource is identical to a fossil-based resource while tracing back the production process for producing a first or second product. For example, there may be a case where a plant-based resource used for producing a first product in the production process thereof is unclear. As a method of determination as above, for example, it involves figuring out whether there are identical compounds present in the production processes taken as a whole, which also includes the first and second products into consideration (also including the production processes for producing other products based on the first and/or second product). If there are identical compounds present in the entire series of production processes of first and second products, the identical plant-based resource and fossil-based resource are presumed to be included in the production processes using the respective resources for producing the first and second products. Therefore, in this case as well, it follows that the "equivalent" relation is established as between the plant-based resource and the fossil-based resource.

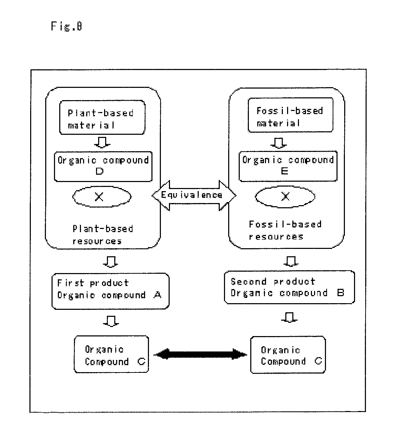

Fig. 8 shows a first product of Organic Compound A, and a second product of Organic Compound B, wherein a plant-based resource, and a fossil-based resource for producing them, respectively, are unclear. In this case, in order to make a determination as to "equivalence," first, it involves considering the product produced by using the first product of Organic Compound A. Here, it shows that Organic Compound C is produced. In the same manner, the same organic compound C exists as a product produced by using the second product of Organic Compound B. Thus, the same Organic Compounds C exist in the production processes taken as a whole (the determination also includes looking at first and second products), and therefore, it is inferable that the "equivalent" compound X is included in the unknown plant-based resources and in the unknown fossil-based resources, which are used for producing the first and second products, respectively. Therefore, in this case, it follows that the "equivalent" relation is established as between the plant-based resource and the fossil-based resource.

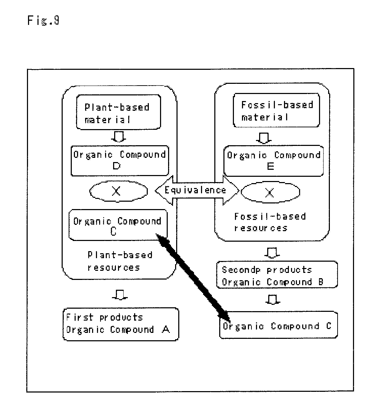

In Fig. 9, as in Fig. 8, the plant-based resources or the fossil-based resources include an unknown compound, respectively. The first product is Organic Compound A produced from Organic Compound C, which is derived from Organic Compound D of the plant-based resources. The second product is Organic Compound B, which is derived from Organic Compound E of the fossil-based resources. In the same manner of Fig. 8, Organic Compound C is produced by the entire series of production process, in which the second product of Organic compound B is present. Moreover, Organic Compound C is included in the plant-based resources used in producing the first product of Organic Compound A. Therefore, the "equivalent" Compound X is presumed to be included as an unknown compound of plant-based resources and as an unknown compound of fossil-based resources, which are used respectively in producing the first and second products. Hence, it follows that the "equivalent" relation is established as between the plant-based resource and the fossil-based resource.

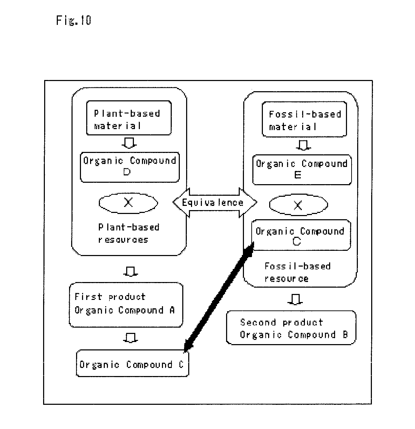

In Fig. 10, contrary to Fig. 9, the second product is Organic Compound B produced from Organic Compound C, which is derived from Organic Compound E of the fossil-based resources. The first product is Organic Compound A, which is derived from Organic Compound D of the plant-based resources. In the same manner of Fig. 9, Organic Compound C is produced from the first product of Organic Compound A. Therefore, the "equivalent" Compound X is presumed to be included as an unknown compound of plant-based resources and as an unknown compound of fossil-based resources, which are used respectively in producing the first and second pro ducts. Hence, it follows that the "equivalent" relation is established as between the plant-based resource and the fossil-based resource.

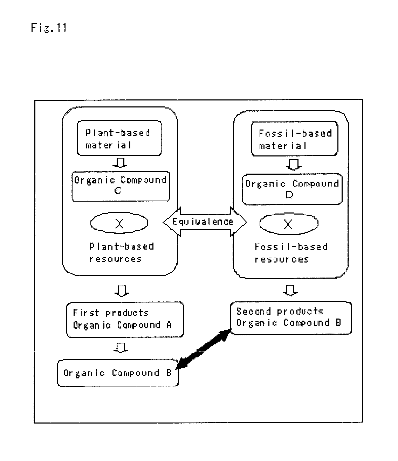

In Fig. 11, the first product is Organic Compound A, which is capable of being used for producing Organic Compound B, and the second product is Organic Compound B, wherein the "equivalent" relation can be established. Due to the fact that Organic Compound B produced in the entire series of production processes of the first product is identical to the second product of Organic Compound B, the "equivalent" Compound X is presumed to be included as an unknown compound of plant-based resources and as an unknown compound of fossil-based resources, which are used respectively in producing the first and second products, as explain ed above in Figs. 9 and 10.

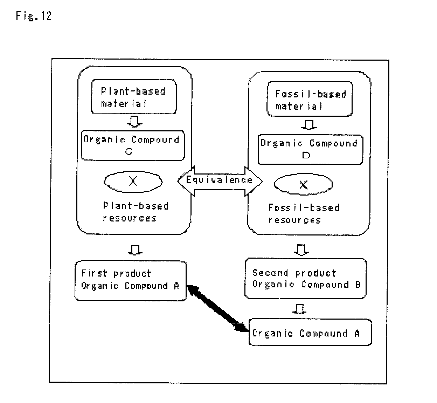

In Fig. 12, contrary to Fig. 11, the second product is Organic Compound B, which is capable of being used for producing Organic Compound A, and the first product is Organic Compound A, wherein the "equivalent" relation can be es tablished according to the same manner as that of Fig. 11.

Hereinafter, the processing steps of the method of transferring eco-value according to the present embodiment will be described.

The method of transferring eco-value according to the present embodiment comprises the steps of acquiring information on the production process of the first product; computing the environmentally-friendly value index; acquiring the production volume of the second product; acquiring information on the production process of the second product; acquiring the environmentally-friendly value index; and computing the corresponding production volume.

Note that the flow of the processing steps to be described hereinafter may be implemented as a method, a program for execution on a computer, or a readable recording medium stored with said program (the same is applicable to other flows of processes described here).

The processing steps of the first embodiment according to the present invention will be described, hereinafter.

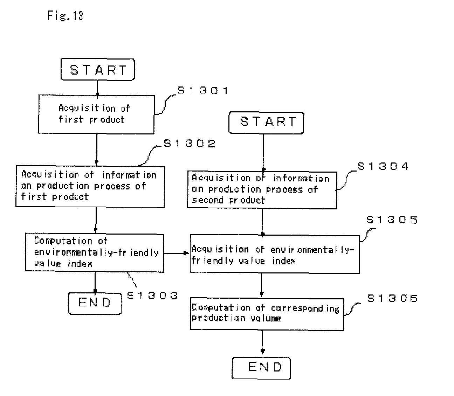

Fig. 13 is a flow chart of processing step s of the first embodiment according to the present invention.

In the method for transferring eco-value of the first embodiment, a production volume of a first product is acquired (Step S1301). Next, the information of the production process of the first product is acquired (Step S1302). Next, an environmentally-friendly value index is computed based on the production volume of the first product and the production process of the first product (Step S1303).

The information of the production process of a second product is acquired (Step S1304). Next, an environmentally-friendly value index, computed by Step S1303, is acquired (Step S1305). Next, a corresponding production volume of a second product based on the production process of the second product, onto which said labeling right is exercised, is computed, wherein said volume corresponds to the environmentally-friendly value index acquired (Step S1306).

Hereinafter, the processing steps of the method for transferring eco-value of the present embodiment will be described.

Hereinafter, the step of acquiring the production volume of the first product will be described (Fig. 13, S1301).

In this step, the production volume of the first product is acquire. Here, "the production volume of a first product" corresponds to the weight or capacity of the first product, or the amount of carbon contained in first product so produced. For example, "the production volume of a first product" of ethylene may correspond to 100 kg.

Hereinafter, the step of acquiring the information of the production process of the first product will be described (Fig. 13, S1302).

In this step, the information of the production process of the first product is acquired. Here, "the information of the production process of the first product" corresponds to the information on the amount of plant- or fossil-based resources used in the production process of the first product, or to the amount of plant- or of fossil-based resources used as energy in the production process of the first product. Examples of the information such as the use of the production process of the first product include information of 1,000 tons as an amount of carbon, 1t of an organic compound, or 1l of an organic compound used as plant-based resources; information such as the use of 500 mol as an amount of carbon, 2t of an organic compound, or 3l of an organic compound used as energy in production; and information such as the use of 1,000kg as an amount of carbon in the plant-based resource, the yield of which is 80%.

Hereinafter, the step of computing an environmentally-friendly value index will be described (Fig. 13, S1303).

In this step, an environmentally-friendly value index is computed. Here, "an environmentally-friendly value index" corresponds to an index for an environmentally-friendly value based on the production volume of a first product, and the production process of the first product. Examples of the environmentally-friendly value index include A ton as an amount of carbon of plant-based resources used for 100kg of the production volume of a first product, or B ton as an amount of carbon derived from plant-based resources, which is contained in the first product for 2t of the production volume of the first product. In computation of the environmentally-friendly value index, the information of the production volume of the first product and the production process of the first product are used. In particular, the following may be used to compute an amount or the ratio of the following for the production volume of the first product as an environmentally-friendly value index: an amount of carbon, or an amount or weight percentage of an organic compound, which is contained in the first product; an amount of carbon, or an amount or weight percentage of an organic compound of plant-based resources; an amount of carbon, or an amount or weight percentage of an organic compound of fossil-based resources (used as a negative environmentally-friendly value index); and an amount or weight percentage of an organic compound contained in plant- or fossil-based resources used for producing the first product.

Hereinafter, the step of acquiring the information of the production process of the second product will be described (Fig. 13, S 1304).

In this step, information of the production process of the second product is acquired. Here, "the information of the production process of the second product" corresponds to the information on the amount of plant- or fossil-based resources, which have been used in the production process of the second product, or to the information on the amount of plant- or fossil-based resources, which have been used as energy in the production process of the second product. Examples of the information of the production process of the second product include information such as the use of 2,000 tons as an amount of carbon, 3t of an organic compound, 41 of an organic compound used as fossil-based resources; and information such as the use of 3,000 tons as an amount of carbon, 4t of an organic compound, 11 of an organic compound used as fossil-based resources as energy used in production.

Hereinafter, the step of acquiring an environmentally-friendly value index will be described (Fig. 13, S1305).

In this step, an environmentally-friendly value index is acquired by computing the environmentally-friendly value index.

Hereinafter, the step of computing the corresponding production volume will be described (Fig. 13, S1306).

In this step, the corresponding production volume is computed. Here, the "corresponding production volume" corresponds to the production volume of a second product based on a production process of the second product, onto which said labeling right is exercised, in which said volume corresponds to the environmentally-friendly value index acquired. Moreover, "corresponding" means a corresponding relation between the first product, and the second product, onto which said labeling right is exercised. In trading environmentally-friendly values, the corresponding production volume is mainly used for computing the amount of the second product correspond ing to the environmentally-friendly value index possessed by the first product.

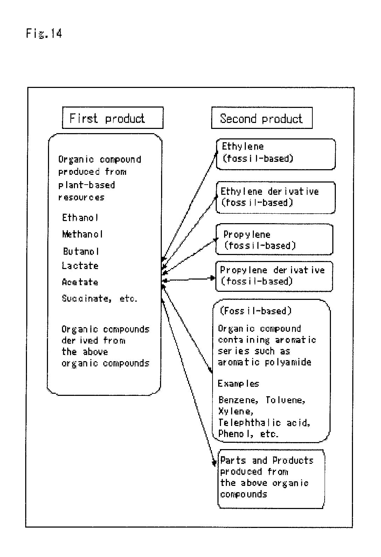

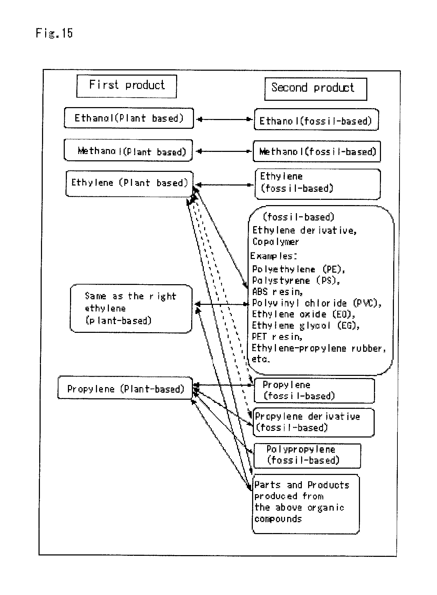

Figs. 14 and 15 are drawings illustrating correspondence between the first product and the second product.

Fig. 14 illustrates a corresponding relation between the first product and the second product, which is used for computing a corresponding production volume, in cases where the environmentally-friendly value index can be converted to the amount of carbon. Fig. 15 illustrates a corresponding relation between the first product and the second product, which is used for computing the corresponding production volume, in cases where the environmentally-friendly value index can be converted to the amount of an organic compound of the same chemical formula. A solid line represents a type of use in correspondence of comparatively frequent occurrence . A dotted line represents a type of use in correspondence of comparatively low frequency. The environmentally-friendly value of the first product can be transferred to the second product, which has a corresponding relation with the first product.

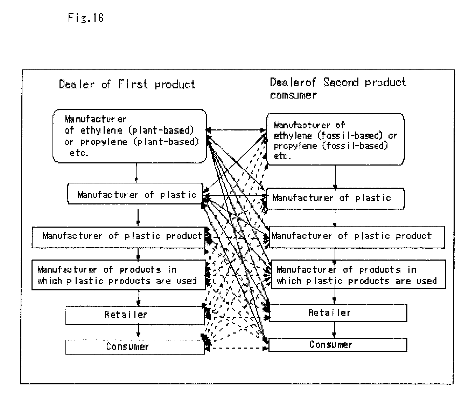

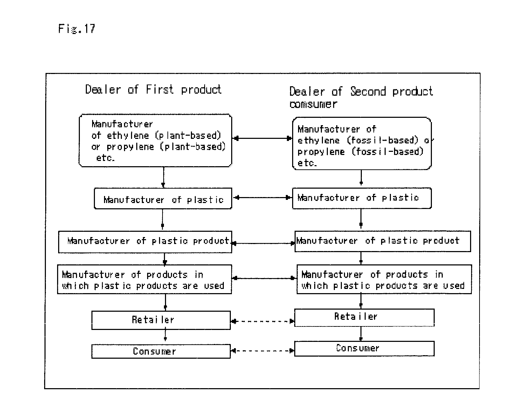

Figs. 16 and 17 are drawings illustrating correspondence between a deal er of a first product and a dealer of a second product. Fig. 16 illustrates a corresponding relation, which is used for computing the corresponding production volume, as between a dealer of a first product and a dealer of a second product; and illustrates a corresponding relation between the first product and the se cond product, which are used for computing the corresponding production volume, in cases where the environmentally-friendly value index of Fig. 15 can be converted to the amount of carbon. Fig. 17 illustrates a corresponding relation, which is used for computing a corresponding production volume, between a dealer of a first product and a dealer of a second product; and illustrates a corresponding relation between the first product and the second product, which is used for computing a corresponding production volume, in cases where the environmentally-friendly value index of Fig. 15 can be converted to an amount of an organic compound of the same chemical formula. A solid line represents a type of use in correspondence of comparatively frequent occurrence. A dotted line represents a type of use in correspondence of comparatively low frequency. The environmentally-friendly value of the dealer of the first product can be transferred to the dealer of the second product, who has a corresponding relation with the dealer of the first product.

There a number of methods of computing a corresponding production volume (Q). Hereinafter, examples of computational formulas for corresponding production volume are described below.

(Example 1)

Corresponding production volume,

Q = Production volume of the second

product $\times$ (Amount contained in fossil-based resources equivalent to plant-based

resources, corresponding to the environmentally-friendly value index / Amount contained in the second product, corresponding to the environmentally-friendly value

index)

(Example 2)

Corresponding production volume,

Q = Production volume of the second

product $\times$ (Amount contained in plant-based resources, represented by an

environmentally-friendly value index / Amount contained in the second product, corresponding to an environmentally-friendly value index)

(Example 3)

Corresponding production volume,

Q = Production volume of the second

product $\times$ (Amount contained in plant-based resources, represented by an

environmentally-friendly value index $\times$ fixed ratio / Amount contained in the second product, corresponding to an environmentally-friendly value index)

In cases of Examples 1, 2, and 3, a labeling could be made to the effect that portion of a corresponding production volume of the production volume of the second product possesses an environmentally-friendly value.

(Example 4)

Corresponding production volume,

Q = Production volume of the second

product $\times$ (Amount contained in plant-based resources, represented by an

environmentally-friendly value index / Amount contained in fossil-resources

equivalent to plant-based resources, corresponding to an environmentally-friendly

value index)

(Example 5)

Corresponding production volume,

Q = Production volume of the second

product $\times$ (Amount contained in plant-based resources, represented by an

environmentally-friendly value index $\times$ fixed ratio / Amount contained in

fossil-resources equivalent to plant-based resources, corresponding to an

environmentally-friendly value index)

Here, the "amount corresponding to an environmentally-friendly value index" corresponds to an amount of a substance, which is identical or equivalent to the substance represented by the environmentally-friendly value index. For example, if the environmentally-friendly value index corresponds to 50kg of carbon contained in 100kg of First Product of Organic Compound A, and the Second Product corresponds to 150kg of carbon of 200kg of Organic Compound B, the "amount corresponding to an environmentally-friendly value index" corresponds to 150kg of carbon of Second Product. Moreover, for example, if the environmentally-friendly value index corresponds to 200kg of Organic Compound B of plant-based resources for 100kg of First Product of Organic Compound A, and the fossil-based resource equivalent to the plant-based resource corresponds to is 100kg of Organic Compound B, the "amount corresponding to the environmentally-friendly value index of the fossil-based resource equivalent to the plant-based resource" corresponds to 100kg of the fossil-based resource equivalent to the plant-based resource.

Note that the computation of a corresponding production volume shall not be limited to the above examples. The method of computing the corresponding production volume may be selected according to the type of trading system of environmentally-friendly value.

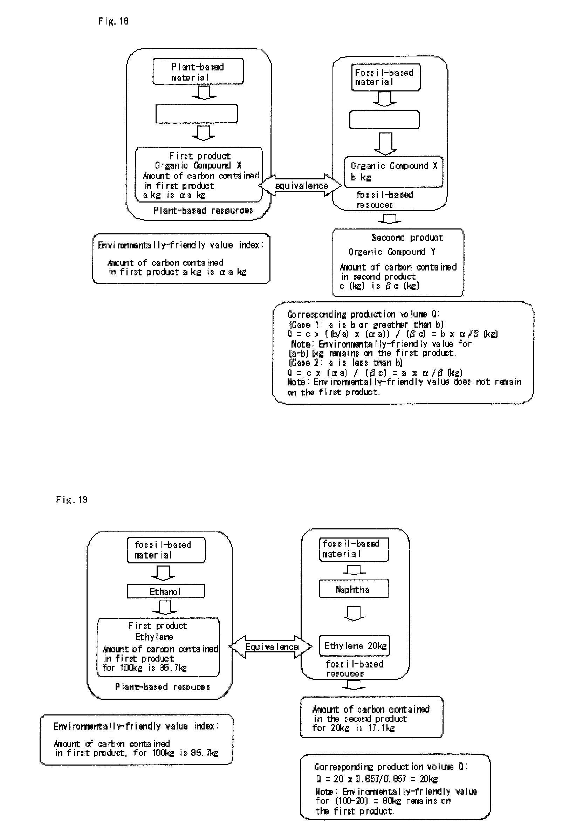

Fig. 18 is an illustration of computation of a corresponding production volume. Assume that the amount of carbon contained in the first product (Organic Compound X: a kg) is $\alpha$a kg, the amount of carbon contained in the second product (Organic Compound Y: c kg) is $\beta$c kg, the fossil-based resource equivalent to the plant-based resource (i.e., the first product) is Organic Compound X at b kg, and the environmentally-friendly value index corresponds to $\alpha$a kg of carbon contained a kg of the first product. In this case, the corresponding production volume is computed by the following formula.

(Case 1: a is b or greater than b)

Corresponding production volume,

Q = Production volume of the second

product $\times$ (Amount contained in the fossil-based resources equivalent to the

plant-based resources, represented by the environmentally-friendly value index / Amount contained in the second product, corresponding to the

environmentally-friendly value index)

$$= c \times ((b/a) \times (\alpha a))/(\beta c)$$

$$= b \times \alpha/\beta \ \ kg$$

In Case 1, an environmentally-friendly value for (A-B) kg remains on the first product.

(Case 2: a is less than b)

Corresponding production volume,

Q = Production volume of the second

product $\times$ (Amount contained in the fossil-based resource equivalent to the plant-based

resource, represented by an environmentally-friendly value index / Amount contained in the second product, corresponding to an environmentally-friendly value index)

$$= c \times (\alpha a))/(\beta c)$$

$$= a \times \alpha/\beta \ \mathrm{kg}$$

In Case 2, an environmentally-friendly value does not remain on the first product.

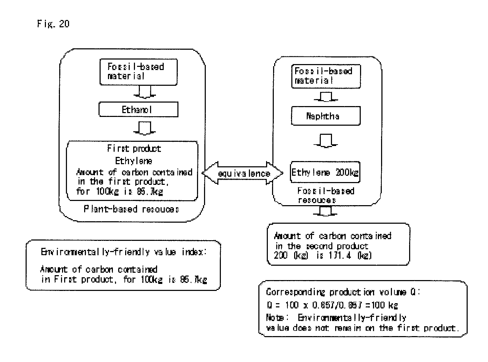

Fig. 19 is an illustration of computation of a corresponding production volume of Case 1 of Fig. 18. Assume that the amount of carbon contained in the first product (ethylene: 100kg) is $0.857 \times 100$kg, the amount of carbon contained in the second product (polyethylene: 20kg) is $0.857 \times 20$kg, the fossil-based resource equivalent to the plant-based resource (i.e., the first product.) is ethylene at 20kg, and the environmentally-friendly value index corresponds to is 85.7kg of carbon contained in 100kg of the first product. In this case, the corresponding production volume is computed by the following formula:

$$Q = 20 \times 0.857 \ / \ 0.857$$

$$= 20 \mathrm{kg}$$

In Case 1, the environmentally-friendly value for 80kg (= 100 - 20) remains on the first product.

Note that the amount of carbon in 100kg of ethylene is computed as below: Since the molecular formula of ethylene is $C_2H_4$, the ratio of the amount of carbon contained in ethylene is 24/28 (the atomic mass of C is 12; and for H is 1). Therefore, the amount of carbon contained in 100kg of polyethylene is 85.7kg (= $100 \times 24 \ / \ 28$).

Moreover, the amount of carbon in 20kg of polyethylene is computed as below : Since the molecular formula of ethylene is $(C_2H_4)_n$ (n is a natural number), the ratio of the amount of carbon contained in polyethylene is 24n /28n (the atomic mass of C is 12; and for H is 1). Therefore, the amount of carbon contained in 20kg of polyethylene is 17.1k g (= $20 \times 24 \ / \ 28$).

Fig. 20 is an illustration of computation of a corresponding production volume of Case 2 of Fig. 18. Assume that the amount of carbon contained in the first product (ethylene: 100kg) is $0.857 \times 100$kg, the amount of carbon contained in the second product (polyethylene: 200kg) is $0.857 \times 200$kg, the fossil-based resource equivalent to the plant-based resource (i.e., the first product.) is ethylene at 200kg, and the environmentally-friendly value index corresponds to 85.7kg of carbon contained in 100kg of the first product. In this case, the corresponding production volume is computed by the following formula:

$$Q = 100 \times 0.857 \ / \ 0.857$$

In Case 2, the environmentally-friendly value does not remain on the first product. The remaining portion of the environmentally-friendly value in the second product can be transferred from another dealer of the first product.

Hereinafter, the flow of specific processing steps of the first embodiment will be described.

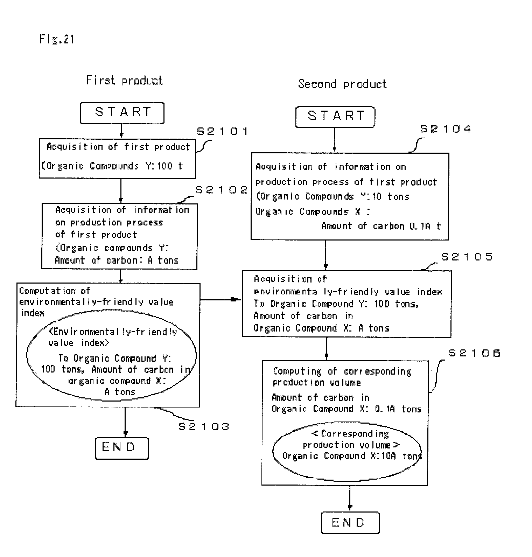

Fig. 21 is a flow chart of specific processing steps of the first embodiment.

In the method for transferring eco-value of the first embodiment, first, a production volume of a first product (Organic Compound Y: 100 tons) is acquired (Step S2101). Next, the information of the production process of the first product (Organic Compound X: amount of carbon of A tons) is acquired (Step S2102). Next, an environmentally-friendly value index (amount of carbon of A tons of Organic Compound X for 100 tons of Organic Compound Y) is computed based on the production volume of the first product and the production process of the first product (Step S2103).

Moreover, the information of the production process of a second product (10 tons of Organic Compound Y, amount of carbon 0.1A tons for Organic Compound X) is acquired (Step S2104). Next, the step of acquiring an environmentally-friendly value index acquires an environmentally-friendly value index (amount of carbon of A tons of Organic Compound X for 1pp tons of Organic Compound Y), which has been computed by Step S2103 (Step S2105). Next, the step of computing a corresponding production volume computes a corresponding production volume of a second product (Organic Compound Z: 10 tons) based on the production process of the second product, onto which said labeling right is exercised, in which said volume corresponds to th e environmentally-friendly value index acquired by the above step of acquiring said environmentally-friendly value index (Step S2106).

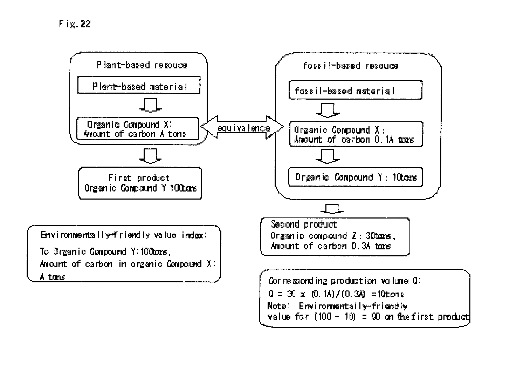

Fig. 22 is a drawing which outlines the computation of a corresponding production volume, which corresponds to the flow of specific processing steps of Fig. 21. In this case, the environmentally-friendly value for 90 tons (= 100 - 10) remains on the first product.

Hereinafter, an apparatus for transferring eco-value according to the embodiment herein will be described.

The apparatus for transferring eco-value of the first embodiment transfers a labeling right, which is a right to label a product that the products possesses environmentally-friendly value, to an entity who wishes to exercise the labeling right with respect to a second product produced by using a fossil-based resource equivalent to said plant-based resource.

Hereinafter, the constituent elements of the apparatus for transferring eco-value according to the first embodiment will be described.

Note that each functional block described hereinafter can be implemented as hardware; software deployed onto a memory, achieving the effects thereof by controlling the hardware; or both of hardware and software. Concrete examples include CPU, and memories in cases of using computers; reading drives such as hard-disk drives, CD-ROM and DVD-ROM; various input/output ports for communication, interfaces, hardware components such as peripheral devices; driver programs for controlling hardware; and application programs.

Moreover, the present invention can be implemented not only as a n apparatus or a system, but also as a method. Moreover, a portion of the present invention can be implemented as software. Furthermore, software products for causing computer to execute such software, and memory media onto which software products are stored are naturally within the boundary of the technical scopes of the present invention (as is true for other elements described in the specification).

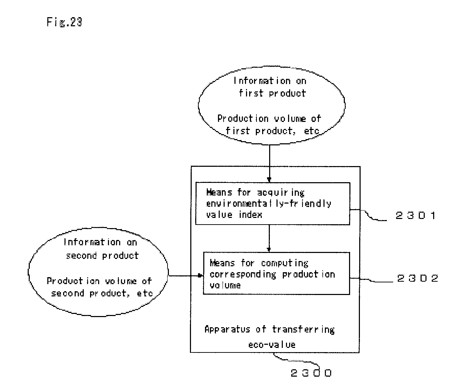

Fig. 23 is a functional block diagram of an apparatus for transferring eco-value according to the first embodiment. An apparatus for transferring eco-value comprises a means for acquiring an environmentally-friendly value index 2301; and a means for computing a corresponding production volume 2302.

Moreover, the description of constituent elements are the same as those in the above description for the method of transferring eco-value by substituting "a step of acquiring an environmentally-friendly value index" with "a means for acquiring an environmentally-friendly value index," "a step of computing a corresponding production volume" to "a means for computing a corresponding production volume." As such, the description thereof is omitted.

Accordingly, the first embodiment enables transfer of an environmentally-friendly value of a first product produced from plant-based resources to the second product produced from fossil-based resources according to the production volume of the first product.

**(The second embodiment)**

Hereinafter, the second embodiment will be de scribed.

The second embodiment relates to a method of transferring eco-value according to the first embodiment, wherein the environmentally-friendly value index corresponds to an amount of carbon derived from plant-based and/or fossil-based resources used in producing the first product. Here, "used" does not include use of energy used for producing the first product. Hereinafter, in this description of the present invention, the term "use" does not include the use of energy in production unless stated. The second embodiment enables transfer of an environmentally-friendly value to a second product based on the amount of carbon derived from plant-based and/or fossil-based resources used in producing a first product. The second embodiment enables determination of the amount of carbon derived from the fossil-based resource used in producing the first product before and after transferring the environmentally-friendly value by accentuating the amount of carbon derived from the fossil-based resource used in producing the first product. Moreover, in the second embodiment, the amount of carbon derived from the plant- and/or fossil-based resource used in producing the first product is not included. The second embodiment is the same as the first embodiment except the environmentally-friendly value index corresponds to an amount of carbon derived from plant-based and/or fossil-based resources used in producing the first product, so that the description thereof is omitted.

The environmentally-friendly value index of the second embodiment is characterized by corresponding to an amount of carbon derived from plant-based and/or fossil-based resources used in producing the first product. Examples of the environmentally-friendly value index include "for the first product A kg, an amount of carbon B kg derived from the plant-based resource and/or an amount of carbon C kg derived from the fossil-based resource." In the second embodiment, there are a number of usages of an environmentally-friendly value index as follows:

(A) The amount of carbon derived from a plant-based resource is used as an environmentally-friendly value index.
(B) The amount of carbon derived from a plant-based resource minus the amount of carbon derived from the fossil-based resource is used as an environmental ly-friendly value index.

(C) The amount of carbon derived from a plant-based resource and the amount of carbon derived from a fossil-based resource is used as an environmentally-friendly value index.

Hereinafter, concrete examples of computing a corresponding production volume of the second embodiment will be described.

Assume that the amount of carbon derived from a plant-based resource, U, required for producing the first product (Organic Compound X: A kg) is $\alpha$A kg; the amount of carbon derived from a fossil-based resource, U, is $\beta$A kg; and an environmentally-friendly value index corresponds to $\alpha$A kg of carbon of a plant-based resource, U and/or to $\beta$A kg of carbon of a fossil-based resource, U, for A kg of the first product. Moreover, Organic Compound X of a fossil-based resource at B kg is required for producing the second product (C kg of Organic Compound Y, and $\gamma$C kg of carbon). In this case, the fossil-based resource, U, which is required for producing Organic Compound X of a fossil-based resource at B kg, becomes $(\alpha+\beta)$B kg when converted to the amount of carbon, if the production process es of the first product and those of the second product are the same.

In Case (A):

In Case (A), since the amount of carbon derived from the plant-based resource is used as the environmentally-friendly value index, $\alpha$A kg becomes the amount of the plant-based resource represented by the environmentally-friendly value index. Therefore, a corresponding production volume (Q) is computed by the following formula:

(Case 1: A is B or greater than B)

Corresponding production volume,

Q = Production volume of the second

product $\times$ (Amount, which is contained in fossil-based resource equivalent to

plant-based resource, corresponding to an environmentally-friendly value index /

Amount, which is contained in the second product, corresponding to an environmentally-friendly value index)

$$=C\times((B/A)\times(\alpha A))/(\gamma C)$$

$$=B\times\alpha/\gamma \text{ kg}$$

In Case 2, an environmentally-friendly value for (A-B) kg remains on the first product.

(Case 2: A is less than B)

Corresponding production volume,

Q = Production volume of the second

product $\times$ (Amount, which is contained in fossil-based resource equivalent to

plant-based resource, corresponding to an environmentally-friendly value index /

Amount, which is contained in the second product, corresponding to an environmentally-friendly value index)

$$=C\times(\alpha A))/(\gamma C)$$

$$=A\times\alpha/\gamma \text{ kg}$$

In Case 2, an environmentally-friendly value does not remain on the first product.

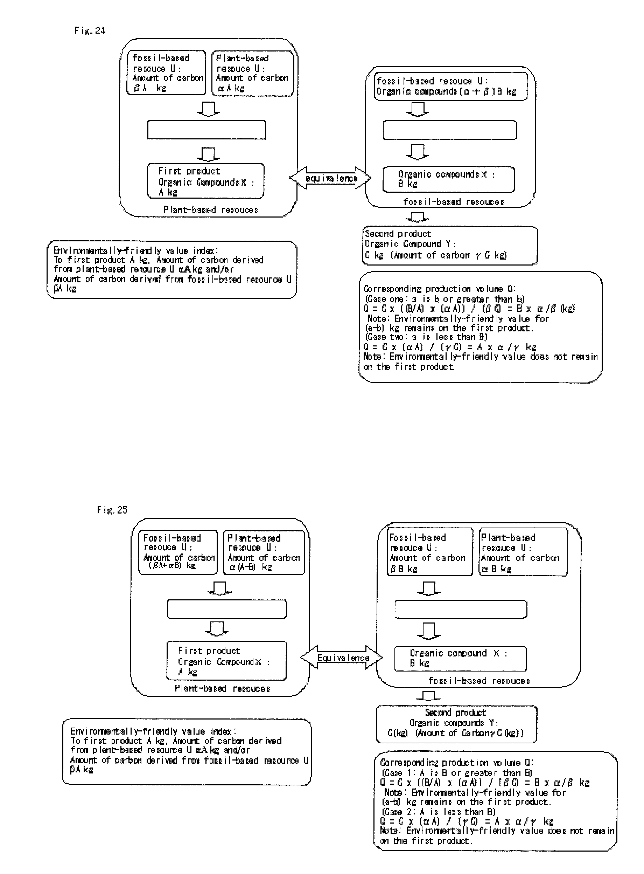

Fig. 24 illustrates an example of computation of a corresponding production volume of (A).

Fig. 25 illustrates a state of processes after transferring an environmentally-friendly value from the first product to the second product shown in Fig. 24. As a result of transferring the value, the amount of carbon derived from a plant-based resource, U, which is required for producing the first product (Organic Compound X: A kg), becomes $\alpha(A-B)$ kg; the amount of carbon derived from a fossil-based resource, U, becomes $(\beta A+\alpha B)$ kg. Moreover, the second product (C kg of Organic Compound Y, $\gamma C$ kg of carbon) can be labeled to be produced by using the amount of carbon derived from a plant-based resource, U, at $\alpha B$ kg and the amount of carbon derived from a fossil-based resource, U at $\beta B$ kg.

In Case (B):

In Case (B), since the amount of carbon derived from the plant-based resource minus the amount of carbon derived from the fossil-based resource is used as the environmentally-friendly value index, $(\alpha-\beta)A$ kg becomes the amount of the plant-based resource represented by the environmentally-friendly value index. Therefore, a corresponding production volume (Q) is computed by the following formula:

(Case 1: A is B or greater than B)

Corresponding production volume,

Q = Production volume of the second

product $\times$ (Amount, which is contained in the fossil-based resource equivalent to the plant-based resource, corresponding to an environmentally-friendly value index /

Amount, which is contained in the second product, corresponding to an environmentally-friendly value index)

$$=C\times((B/A)\times(\alpha-\beta)A)/(\gamma C)$$

$$=B\times(\alpha-\beta)/\gamma \text{ kg}$$

In Case 1, an environmentally-friendly value for (A-B) kg remains on the first product.

(Case 2: A is less than B)

$$Q = C\times((\alpha-\beta)A)/(\gamma C)$$

$$= (\alpha-\beta)\times\alpha/\gamma \text{ kg}$$

In Case 2, an environmentally-friendly value does not remain on the first product.

In Case (C):

Since the amount of carbon derived from the plant-based resource ($\alpha$A kg) and the amount of carbon derived from the fossil-based resource and ($\beta$A kg) are used as the environmentally-friendly value index, in cases where the second product is produced from the amount of carbon derived from the plant-based resource ($\alpha$A kg) and the amount of carbon derived from the fossil-based resource ($\beta$B kg), and the production volume of the first product A = the production volume of the second product B; the above case C is applied. Therefore, the corresponding production volume becomes:

$$Q = A = B \text{ kg}$$

This case corresponds to the case where the first product and the second product are swapped.
According to the second embodiment, an environmentally-friendly value index corresponds to an amount of carbon derived from plant-based and/or fossil-based resources used in producing the first product, so that it enables the determination of the amount of carbon derived from the fossil-based resource used for producing the first product before and after transferring the environmentally-friendly value by brining up the amount of carbon derived not only from the plant-based resource but also from the fossil-based resource used in producing the fi rst product.

**(The third embodiment)**

Hereinafter, the third embodiment will be described.
The third embodiment relates to a method of transferring eco-value according to the first embodiment, wherein the environmentally-friendly value index corresponds to an amount of carbon derived from plant-based and/or fossil-based resources used in producing the first product; and to an amount of carbon derived from plant- and/or fossil-based resources in terms of energy used in production. According to the third embodiment, by brining up not only the amount of carbon derived from plant- and/or fossil-based resource used for producing the first product, but also the energy used in production; the embodiment enables determination of the amount of carbon derived from plant- and/ or fossil-based resource in terms of energy used in production before and after transferring the environmentally-friendly value. Moreover, the embodiment enables a transfer of an environmentally-friendly value embodying the energy used in production. With respect to the amount of carbon derived from plant-based resources in terms of energy used in production, the amount of $CO_2$ emissions is deemed to be offset by the amount of $CO_2$ absorbed by using the plant-based resource. However, regarding the amount of carbon derived from the fossil-based resources in terms of energy used in production, there is no process of absorbing the amount of $CO_2$ emission. Here, the embodiment enables determination of an increase and decrease of $CO_2$ emission before and after transferring the environmentally-friendly value by brining up the amount of carbon derived from the plant- and/or fossil-based resource in terms of energy used in production. The third embodiment is the same as the first embodiment except the point that the environmentally-friendly value index corresponds to an amount of carbon derived from plant-based and/or fossil-based resources used in producing the first product; and to an amount of carbon derived from plant- and/or fossil-based resources in terms of energy used in production, so that the description thereof is omitted.
The environmentally-friendly value index of the third embodiment is characterized by corresponding to an amount of carbon derived from plant- and/or fossil-based resources used in producing the first product, and to an amount of carbon derived from plant- and/or fossil-based resources in terms of energy used in production. Examples of the environmentally-friendly value index include "for the first product of A kg, the amount of carbon of A kg derived from a plant-based resource and/or the amount of carbon of B kg derived from a fossil-based resource used in producing the first product, and the amount of carbon of C kg derived from plant-based resource and/or the amount of carbon of D kg derived from a fossil-based resource in terms of energy used in production." In the third embodiment, there are a number of usages of an environmentally-friendly value index as follows:

(A) The amount of carbon derived from a plant-based resource, and the amount of carbon derived from a plant-based resource in terms of energy used in production are used as an environmentally-friendly value index.
(B) The amount of carbon derived from a plant-based resource minus the amount of carbon derived from a fossil-based resource; and the amount of carbon derived from a plant-based resource in terms of energy used in production minus the amount of carbon derived from a fossil-based resource in terms of energy used in production are used as an environmentally-friendly value index.
(C) The amount of carbon derived from plant-based resource and the amount of carbon derived from a fossil-based resource, and the amount of carbon derived from a plant-based resource in terms of energy used in production and the amount of carbon derived from a fossil-based resource in terms of energy used in production are used as an environmentally-friendly value index.

Hereinafter, a concrete example of computing a corresponding production volume of the third embodiment will be described.

Assume that the amount of carbon derived from a plant-based resource, U, which is required for producing the first product (Organic Compound X: A kg), is $\alpha 1A$ kg, and the amount of carbon derived from a fossil-based resource, U, which is required for producing the first product, which is required for producing the first product (Organic Compound X: A kg), is $\beta 1A$ kg; the amount of carbon derived from a plant-based resource V in terms of energy used in production is $\alpha 2A$ kg and/or the amount of carbon derived from a fossil-based resource, W, in terms of energy used in production is $\beta 2A$ kg; and an environmentally-friendly value index corresponds to $\alpha 1A$ kg of carbon derived from a plant-based resource and/or $\beta 1A$ kg of carbon derived from a fossil-based resource for A kg the first product; and the amount of carbon derived from a plant-based resource, V, in terms of energy used in production is $\alpha 2A$ kg and/or the amount of carbon derived from a fossil-based resource, W ,in terms of energy used in production is $\beta 2A$ kg. Moreover, Organic Compound X of a fossil-based resource at B kg is required for producing the second product (C kg of Organic Compound Y, and $\gamma C$ kg of carbon). In this case, the amount of the fossil-based resource, U, which is required for producing B kg of Organic Compound X of a fossil-based resource, becomes $(\alpha 1 + \beta 1)$ B kg when converted to the amount of carbon, if the production processes of the first product, and the production process of the second product are the same. Furthermore, the amount of carbon derived from the fossil-based resource, W, used for producing the second product, is $\beta 3B$ kg.

In Case (A):

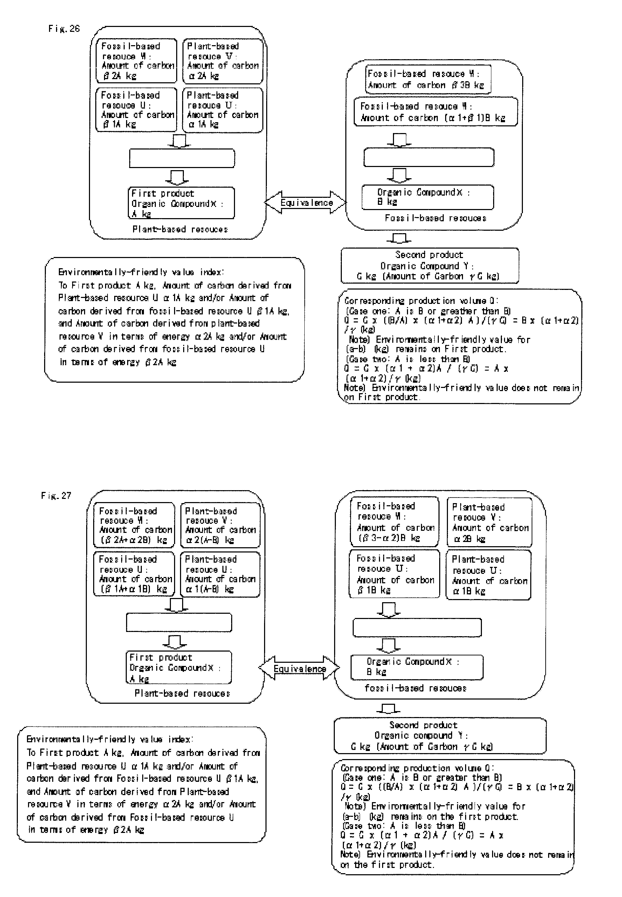

Fig. 26 illustrates computation of a corresponding production volume in Case (A).

In Case (A), since the amount of carbon derived from the plant-based resource and amount of carbon derived from a plant-based resource in terms of energy used in production are used as the environmentally-friendly value index; $(\alpha 1+\alpha 2)$ A kg thereof becomes the amount of the plant-based resource represented by the environmentally-friendly value index. Therefore, a corresponding production volume (Q) is computed by the following formula:

(Case 1: A is B or greater than B)

Corresponding production volume,

Q = Production volume of the second

product $\times$ (Amount, which is contained in a fossil-based resource equivalent to a

plant-based resource, corresponding to an environmentally-friendly value index /

Amount, which is contained in the second product, corresponding to an environmentally-friendly value index)

$$=C\times((B/A)\times(\alpha 1+\alpha 2)A)/(\gamma C)$$

$$=B\times(\alpha 1+\alpha 2)/\gamma \ \mathrm{kg}$$

In Case 2, an environmentally-friendly value for (A-B) kg remains on the first product.

(Case 2: A is less than B)

Corresponding production volume,

Q = Production volume of the second

product $\times$ (Amount, which is contained in a fossil-based resource equivalent to a

plant-based resource, corresponding to an environmentally-friendly value index /

Amount, which is contained in the second product, corresponding to an environmentally-friendly value index)

$$=C \times ((\alpha 1 + \alpha 2)A)/(\gamma C)$$

$$=A \times (\alpha 1 + \alpha 2)/\gamma \ kg$$

In Case 2, an environmentally-friendly value does not remain on the first product.

Fig. 27 illustrates a state of processes after transferring an environmentally-friendly value from the first product to the second product as in Fig. 26. As a result of transferring the value, the amount of carbon derived from a plant-based resource U, which is required for producing the first product (Organic Compound X: A kg), becomes $\alpha 1(A-B)$ kg; and the amount of carbon derived from a fossil-based resource, U, which is required for producing the first product (Organic Compound X: A kg) becomes $(\beta 1A + \alpha 1B)$ kg; and the amount of carbon derived from a plant-based resource, V, in terms of energy used in production becomes $\alpha 2(A-B)$ kg, and the amount of carbon derived from a fossil-based resource, W, becomes $(\beta 2A + \alpha 2B)$ kg. Moreover, it can be labeled that the second product (C kg of Organic Compound Y, and $\gamma C$ kg of carbon) is produced by using the amount of carbon derived from a plant-based resource, U at $\alpha 1B$ kg; the amount of carbon derived from a fossil-based resource, U at $\beta 1B$ kg; the amount of carbon derived from a plant-based resource, V, in terms of energy used in production at $\alpha 2B$ kg; and the amount of carbon derived from a fossil-based resource, W at $(\beta 3 - \alpha 2)B$ kg.

In Case (B):

In Case (B), since the amount of carbon derived from the plant-based resource minus the amount of carbon derived from the fossil-based resource, and the amount of carbon derived from plant-based resource in terms of energy used in production minus the amount of carbon derived from fossil-based resource in terms of energy used in production are used as the environmentally-friendly value index; $((\alpha 1 + \alpha 2) - (\beta 1 + \beta 2))A$ kg thereof becomes the amount of the plant-based resource represented by the environmentally-friendly value index. Therefore, a corresponding production volume (Q) is computed by the following formula.

(Case 1: A is B or greater than B)

Corresponding production volume,

Q = Production volume of the second

product $\times$ (Amount, which is contained in a fossil-based resource equivalent to a

plant-based resource, corresponding to an environmentally-friendly value index /

Amount, which is contained in the second product, corresponding to an environmentally-friendly value index)

$$=C \times ((B/A) \times ((\alpha 1 + \alpha 2) - (\beta 1 + \beta 2))A)/(\gamma C)$$

$$=B \times ((\alpha 1 + \alpha 2) - (\beta 1 + \beta 2))/\gamma \ kg$$

In Case 1 an environmentally-friendly value for (A-B) kg remains on the first product.

(Case 2: A is less than B)

Corresponding production volume,

Q = Production volume of the second

product × (Amount of plant-based resource represented by an environmentally-friendly

value index / Amount, which is contained in the second product, corresponding to an environmentally-friendly value index)

$$Q = C \times ((\alpha 1 + \alpha 2) - (\beta 1 + \beta 2))A)/(\gamma C)$$

$$= A \times ((\alpha 1 + \alpha 2) - (\beta 1 + \beta 2))/\gamma \ kg$$

In Case 2, an environmentally-friendly value does not remain on the first product.

In Case (C):

Since the amount of carbon derived from the plant-based resource (($\alpha1+\alpha2$)A kg) and the amount of carbon derived from the fossil-based resource (($\beta1+\beta2$)A kg) are used as the environmentally-friendly value index, in cases where the second product is produced from the amount of carbon derived from the plant-based resource (($\beta1+\beta2$)B kg) and the amount of carbon derived from the fossil-based resource (($\alpha1+\alpha2$)B kg), and the production volume of the first product A = the production volume of the second product B; the above case C is applied. Therefore, the corresponding production volume becomes:

$$Q = A = B \ kg$$

This case corresponds to the case where the first product and the second product are swapped.

The third embodiment enables accentuating not only the amount of carbon derived from plant- and/or fossil-based resource used for producing the first product, but also the amount of carbon derived from plant- and/or fossil-based resource in terms of the energy used in production; so that it enables determination of the amount of carbon derived from plant- and/or fossil-based resource in terms of energy used in production before and after transferring the environmentally-friendly value. Moreover, the embodiment enables transfer of an environmentally-friendly value embodying the energy used in production. Furthermore, by accentuating the amount of carbon derived from the plant- and/or fossil-based resource in terms of energy used in production, the embodiment enables determination of an increase and decrease of $CO_2$ emission before and after transferring the environmentally-friendly value.

**(The fourth embodiment)**

Hereinafter, the fourth embodiment will be described.

The fourth embodiment relates to the method of transferring eco-value according to the first embodiment, wherein the environmentally-friendly value index corresponds to an amount of carbon derived from plant- and/or fossil-based resources in terms of energy used in production for producing the first product. According to the fourth embodiment, it becomes possible to transfer an environmentally-friendly value to the second product based on an amount of carbon derived from plant-based and/or fossil-based resources in terms of energy used in production for producing the first product. Regarding the amount of carbon derived from plant-based resources in terms of energy used in production, it is inferable that the amount of $CO_2$ emissions and amount of $CO_2$ absorbed by using the plant-based resource are offset. However, regarding the amount of carbon derived from the fossil-based resources in terms of energy used in production, there is no process of absorbing the amount of $CO_2$ emission. Here, the embodiment enables determination of an increase and decrease of $CO_2$ emission before and after transferring the environmentally-friendly value by accentuating the amount of carbon derived from the plant- and/or fossil-based resource in terms of energy used in production. The fourth embodiment is the same as the first embodiment except the point that the environmentally-friendly value index corresponds to an amount of carbon derived from plant-based and/or fossil-based resources in terms of energy used in production for producing the first product, so that the description thereof is omitted.

The environmentally-friendly value index of the fourth embodiment is characterized by corresponding to an amount of carbon derived from plant- and/or fossil-based resources in terms of energy used in production used producing the first product. Examples of the environmentally-friendly value index include "an amount of carbon A kg derived from plant-based resource and/or amount of carbon B kg derived from fossil-based resource in terms of energy used in production for the first product A kg". In the fourth embodiment, there are a number of usages of an environmentally-friendly value index as follows.

(A) The amount of carbon derived from a plant-based resource in terms of energy used in production is used as an environmentally-friendly value index.

(B) The amount of carbon derived from a plant-based resource in terms of energy used in production minus the amount of carbon derived from a fossil-based resource in terms of energy used in production is used as an environmentally-friendly value index.

(C) The mount of carbon derived from a plant-based resource in terms of energy used in production and the amount of carbon derived from a fossil-based resource in terms of energy used in production is used as an environmentally-friendly value index.

Hereinafter, a concrete example of computing a corresponding production volume of the fourth embodiment will be described.

Assume that the amount of carbon derived from a plant-based resource, V, in terms of energy used in production required for producing the first product (Organic Compound X: A kg) is $\alpha$A kg; the amount of carbon derived from a fossil-based resource, W, in terms of energy used in production required for producing the first product (Organic Compound X: A kg) is $\beta$1A kg, and an environmentally-friendly value index corresponds to $\alpha$A kg of carbon derived from a plant-based resource, V, in terms of energy used in production and/or $\beta$1A kg of carbon derived from a fossil-based resource, W, in terms of energy used in production for A kg of the first product. Moreover, B kg of Organic Compound X of a fossil-based resource is required for producing the second product (C kg of Organic Compound Y, and $\gamma$C kg of carbon). Furthermore, the amount of carbon derived from the fossil-based resource, W, used for producing the second product is $\beta$2B kg.

In Case (A):

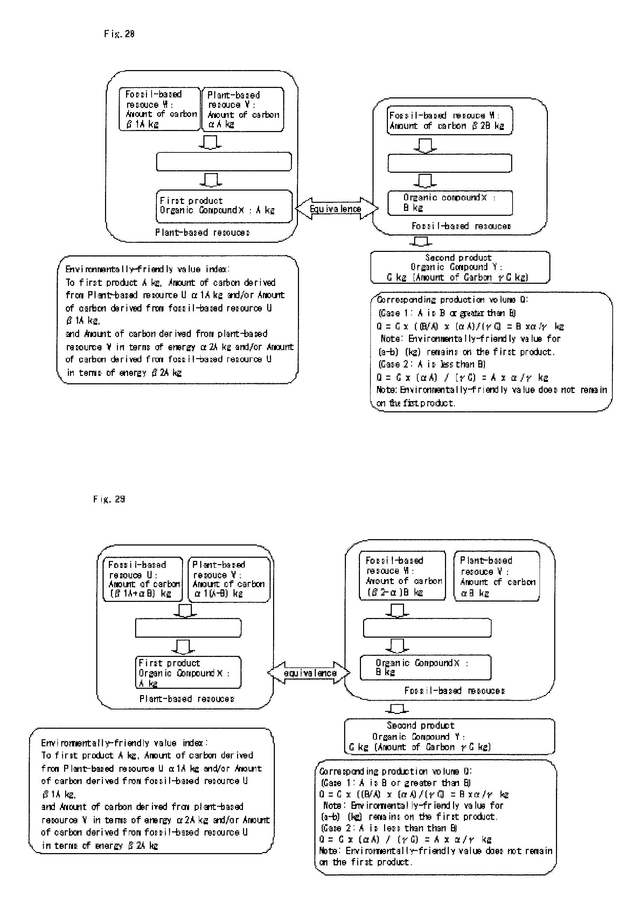

Fig. 28 illustrates computation of a corresponding production volume In Case (A).

In Case (A), since the amount of carbon derived from the plant-based resource in terms of energy in production is used as the environmentally-friendly value index, $\alpha$A kg thereof becomes the amount of the plant-based resource represented by the environmentally-friendly value index. Therefore, the corresponding production volume (Q) is computed by the following formula:

(Case 1: A is B or greater than B)

Corresponding production volume,

$$Q = \text{Production volume of the second}$$

$$\text{product} \times \text{(Amount, which is contained in fossil-based resource equivalent to}$$

$$\text{plant-based resource, corresponding to an environmentally-friendly value index /}$$

$$\text{Amount, which is contained in the second product, corresponding to an}$$

$$\text{environmentally-friendly value index)}$$

$$= C \times ((B/A) \times (\alpha A))/(\gamma C)$$

$$= B \times \alpha / \gamma \ \text{kg}$$

In Case 2, an environmentally-friendly value for (A-B) kg remains on the first product.

(Case 2: A is less than B)

Corresponding production volume,

Q = Production volume of the second

product $\times$ (Amount, which is contained in fossil-based resource equivalent to

plant-based resource, corresponding to an environmentally-friendly value index /

Amount, which is contained in the second product, corresponding to an environmentally-friendly value index)

$$= C \times (\alpha A)) / (\gamma C)$$

$$= A \times \alpha / \gamma \ \mathrm{kg}$$

In Case 2, an environmentally-friendly value does not remain on the first product.

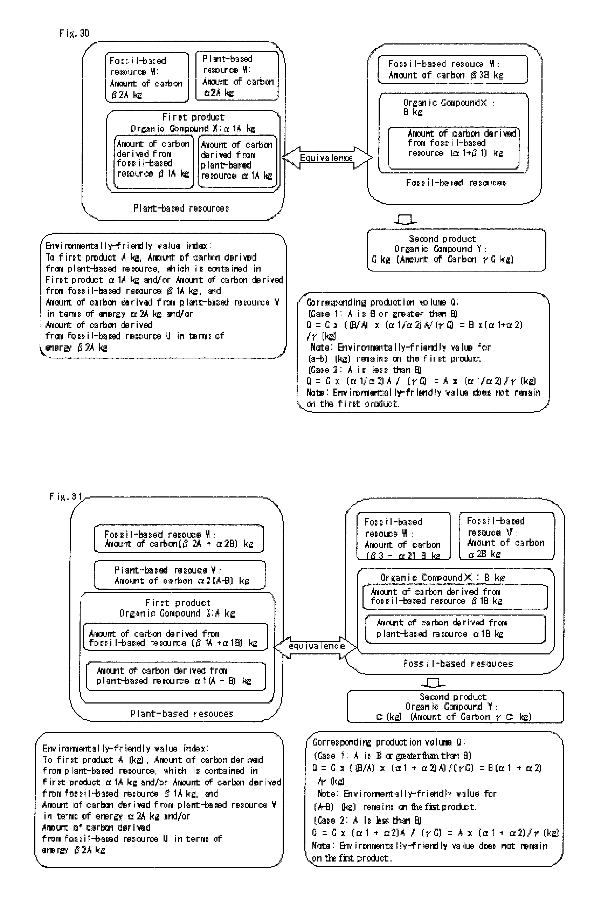

Fig. 29 illustrates a state processes after transferring an environmentally-friendly value from the first product to the second product as shown in Fig. 28. As a result of transferring the value, the amount of carbon derived from a plant-based resource, V, in terms of energy used in production for the first product becomes $\alpha$(A-B) kg; the amount of carbon derived from a fossil-based resource W becomes ($\beta$1A+$\alpha$B) kg. Moreover, the second product (C kg of Organic Compound, and $\gamma$C kg of carbon) can be labeled to the effect that it has been produced by using $\alpha$B kg of carbon derived from a plant-based resource V in terms of energy used in production, and ($\beta$2-$\alpha$)B kg of carbon derived from a fossil-based resource, W.

In Case (B):

In Case (B), since the amount of carbon derived from the plant-based resource in terms of energy used in production minus the amount of carbon derived from the fossil-based resource in terms of energy in production is used as the environmentally-friendly value index, ($\alpha$-$\beta$1)A kg thereof becomes the amount of the plant-based resource represented by the environmentally-friendly value index. Therefore, a corresponding production volume (Q) is computed by the following formula.

(Case 1: A is B or greater than B)

Corresponding production volume,

Q = Production volume of the second

product $\times$ (Amount, which is contained in fossil-based resource equivalent to

plant-based resource, corresponding to an environmentally-friendly value index /

Amount, which is contained in the second product, corresponding to an environmentally-friendly value index)

$$= C \times ((B/A) \times (\alpha - \beta 1)A) / (\gamma C)$$

$$= B \times (\alpha - \beta 1) / \gamma \ \mathrm{kg}$$

In Case 2, an environmentally-friendly value for (A-B) kg remains on the first product.

(Case 2: A is less than B)

$$Q = C \times ((\alpha - \beta 1)A)/(\gamma C)$$

$$= A \times (\alpha - \beta 1)/\gamma \ \text{kg}$$

In Case 2, an environmentally-friendly value does not remain on the first product.

In Case (C):

Since the amount of carbon derived from the plant-based resource in terms of energy used in production ($\alpha$A kg), and the amount of carbon derived from the fossil-based resource in terms of energy used in production ($\beta$1A kg) are used as the environmentally-friendly value index; in cases where the second product is produced from the amount of carbon derived from the plant-based resource in terms of energy used in production ($\beta$1B kg) and the amount of carbon derived from the fossil-based resource in terms of energy used in production ($\alpha$B kg), and the production volume of the first product A = the production volume of the second product B; the above case C is applied. Therefore, the corresponding production volume becomes:

$$Q = A = B \ \text{kg}$$

This case corresponds to the case where the first product and the second product are swapped.
According to the fourth embodiment, an amount of carbon derived from plant-based and/or fossil-based resources in terms of energy used in production are brought up. Therefore, the embodiment enables determination of an increase and decrease of $CO_2$ emission.

**(The fifth embodiment)**

Hereinafter, the fifth embodiment will be described.
The fifth embodiment relates to the method of transferring eco-value accord ing to the first embodiment, wherein the environmentally-friendly value index corresponds to an amount of carbon derived from plant- and/or fossil-based resources, which is contained in the first product; and to an amount of carbon derived from plant- and/or fossil-based resources in terms of energy in production used in the production. The fifth embodiment is characterized in that an amount of carbon derived from plant-based and/or fossil-based resources is contained in the first product. In this case, it is only required to know an amount of carbon contained in the first product, to which an environmentally-friendly value is transferred, and no need of tracing a production history of the first product; thereby enabling easy computation of a corresponding production volume. Moreover, regarding the amount of carbon derived from plant-based resources in terms of energy used in production, it is inferable that the amount of $CO_2$ emissions and amount of $CO_2$ absorbed by using the plant-based resource are offset. However, regarding the amount of carbon derived from the fossil-based resources in terms of energy used in production, there is no process of absorbing the amount of $CO_2$ emission. Here, the embodiment enables determination of an increase and decrease of $CO_2$ emission before and after transferring the environmentally-friendly value by accentuating the amount of carbon derived from the plant- and/or fossil-based resource in terms of energy used in production. The fifth embodiment is the same as the first embodiment except the point that the environmentally-friendly value index corresponds to an amount of carbon derived from plant- and/or fossil-based resources, which is contained in the first product; and to an amount of carbon derived from plant- and/or fossil-based resources in terms of energy in production used in the production, so that the description thereof is omitted.
According to the fifth embodiment, it becomes possible to transfer an environmentally-friendly value to the second product based on an amount of carbon derived from plant- and/or fossil-based resources, which is contained in the first product; and to an amount of carbon derived from plant- and/or fossil-based resources in terms of energy in production used in the production.
The environmentally-friendly value index of the fifth embodiment is characterized by corresponding to an amount of carbon derived from plant- and/or fossil-based resources, which is contained in the first product; and to an amount of carbon derived from plant- and/or fossil-based resources in terms of energy in production used in the production. Examples of the environmentally-friendly value index include "for the first product A kg, amount of carbon $\beta A$ kg derived from plant-based resource and/or amount of carbon C kg derived from fossil-based resource; and amount of carbon D kg derived from plant-based resource and/or amount of carbon E kg derived from fossil-based resource in terms of energy used in production". In the fifth embodiment, there are a number of usages of an environmentally-friendly value index as follows:

(A) The amount of carbon derived from a plant-based resource, which is contained in the first product, and amount of carbon derived from a plant-based resource in terms of energy used in production are used as an environmentally-friendly value index.

(B) The amount of carbon derived from a plant-based resource, which is contained in the first product, minus the amount of carbon derived from a fossil-based resource, which is contained in the first product ; and the amount of carbon derived from plant-based resource in terms of energy used in production minus the amount of carbon derived from fossil-based resource in terms of energy used in production are used as an environmentally-friendly value index.

(C) The amount of carbon derived from a plant-based resource, which is contained in the first product, and the amount of carbon derived from a fossil-based resource, which are contained in the first product, respectively; and the amount of carbon derived from a plant-based resource in terms of energy used in production, and the amount of carbon derived from a fossil-based resource are used as an environmentally-friendly value index.

Hereinafter, a concrete example of computing a corresponding production volume of the fifth embodiment will be described.

Assume that the amount of carbon derived from a plant-based resource, which is contained in the first product (Organic Compound X: A kg), is $\alpha 1A$ kg, and the amount of carbon derived from a fossil-based resource, which is contained in the first product (Organic Compound X: A kg), is $\beta 1A$ kg; the amount of carbon derived from a plant-based resource, V, in terms of energy used in production is $\alpha 2A$ kg, and the amount of carbon derived from a fossil-based resource, W, in terms of energy used in production is $\beta 2A$ kg; and an environmentally-friendly value index corresponds to $\alpha 1A$ kg of carbon from a plant-based resource, which is contained in the first product, for A kg of the first product, and/or $\beta 1A$ kg of carbon derived from a fossil-based resource, which is contained in the first product, for A kg of the first product; and the amount of carbon derived from a plant-based resource, V, in terms of energy used in production is $\alpha 2A$ kg, and/or the amount of carbon derived from a fossil-based resource, W, in terms of energy used in production is $\beta 2A$ kg. Moreover, B kg of Organic Compound X of fossil-based resource is required for producing the second product (C kg of Organic Compound Y, and $\gamma C$ kg of carbon). In this case, the amount of the fossil-based resource contained in B kg of Organic Compound X of fossil-based resource becomes $(\alpha 1 + \beta 1) B$ kg when converted to the amount of carbon, if the production process of the first product, and the production process of the second product are the same. Furthermore, the amount of carbon derived from the fossil-based resource, W, used for producing the second product, is $\beta 3B$ kg.

In Case (A):

Fig. 30 illustrates computation of a corresponding production volume In Case (A).

In Case (A), since the amount of carbon derived from the plant-based resource, which is contained in the first product, and amount of carbon derived from a plant-based resource in terms of energy used in production, are used as the environmentally-friendly value index; $(\alpha 1 + \alpha 2) A$ kg thereof becomes the amount of the plant-based resource represented by the environmentally-friendly value index. Therefore, a corresponding production volume (Q) is computed by the following formula.

(Case 1: A is B or greater than B)

Corresponding production volume,

Q = Production volume of the second

product $\times$ (Amount, which is contained in fossil-based resource equivalent to

plant-based resource, corresponding to an environmentally-friendly value index /

Amount, which is contained in the second product, corresponding to an environmentally-friendly value index)

$$=C\times((B/A)\times(\alpha 1+\alpha 2)A)/(\gamma C)$$

$$=B\times(\alpha 1+\alpha 2)/\gamma \ \ kg$$

In Case 2, an environmentally-friendly value for (A-B) kg remains on the first product.

(Case 2: A is less than B)

Corresponding production volume

Q = Production volume of the second

product $\times$ (Amount, which is contained in fossil-based resource equivalent to

plant-based resource, corresponding to an environmentally-friendly value index /

Amount, which is contained in the second product, corresponding to an environmentally-friendly value index)

$$=C\times((\alpha 1+\alpha 2)A)/(\gamma C)$$

$$=A\times(\alpha 1+\alpha 2)/\gamma \ \ kg$$

In Case 2, an environmentally-friendly value does not remain on the first product.

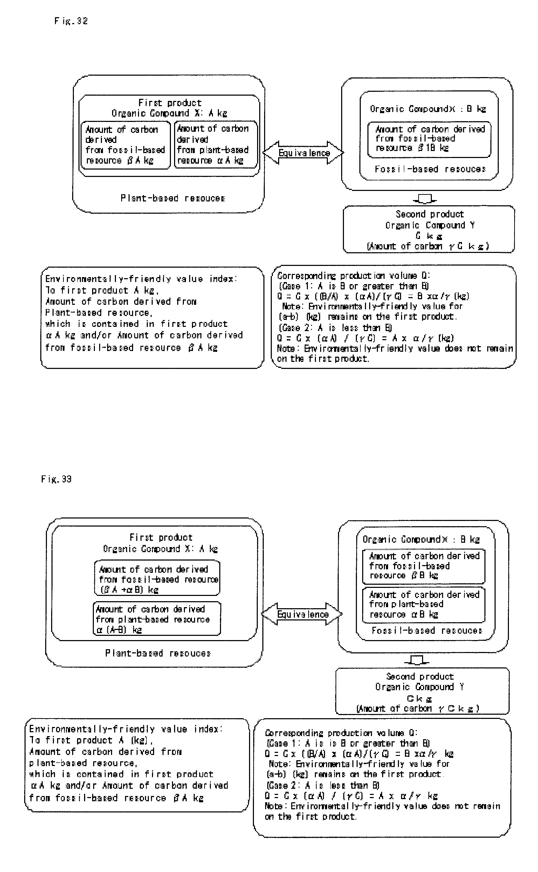

Fig. 31 illustrates a state of processes after transferring an environmentally-friendly value from the first product to the second product shown in Fig. 30. As a result of transferring the value, the amount of carbon derived from a plant-based resource, which is contained in the first product (Organic Compound X: A kg), becomes $\alpha1(A-B)$ kg; and the amount of carbon derived from a fossil-based resource, which is contained in the first product (Organic Compound X: A kg) becomes $(\beta1A+\alpha1B)$ kg; and the amount of carbon derived from a plant-based resource, V, in terms of energy used in production becomes $\alpha2(A-B)$ kg, and the amount of carbon derived from a fossil-based resource, W, becomes $(\beta2A+\alpha2B)$ kg. Moreover, it can be labeled as the amounts used in production that the amount of carbon derived from a plant-based resource, which is contained in the second product (C kg of Organic Compound Y, and $\gamma$C kg of carbon) is $\alpha1B$ kg; the amount of carbon derived from a fossil-based resource, which is contained in the second product (C kg of Organic Compound Y, and $\gamma$C kg of carbon) is $\beta1B$ kg; the amount of carbon derived from a plant-based resource, V, in terms of energy used in production is $\alpha2B$ kg; and the amount of carbon derived from a fossil-based resource, W, is $(\beta3-\alpha2)B$ kg.

In Case (B):

In Case (B), since the amount of carbon derived from the plant-based resource, which is contained in the first product minus the amount of carbon derived from the a fossil-based resource, which is contained in the first product , and the amount of carbon derived from a plant-based resource in terms of energy used in production minus the amount of carbon derived from a fossil-based resource in terms of energy used in production are used as the environmentally-friendly value index; $((\alpha1+\alpha2)-(\beta1+\beta2))A$ kg thereof becomes the amount of the plant-based resource represented by the environmentally-friendly value index. Therefore, a corresponding production volume (Q) is computed by the following formula.

(Case 1: A is B or greater than B)

Corresponding production volume,

Q = Production volume of the second

product $\times$ (Amount, which is contained in fossil-based resource equivalent to

plant-based resource, corresponding to an environmentally-friendly value index /

Amount, which is contained in the second product, corresponding to an environmentally-friendly value index)

$$=C\times((B/A)\times((\alpha 1+\alpha 2)-(\beta 1+\beta 2))A)/(\gamma C)$$

$$=B\times((\alpha 1+\alpha 2)-(\beta 1+\beta 2))/\gamma \ kg$$

In Case 2, an environmentally-friendly value for (A-B) kg remains on the first product.

(Case 2: A is less than B)

$$Q = C\times((\alpha 1+\alpha 2)-(\beta 1+\beta 2))A)/(\gamma C)$$

$$=A\times((\alpha 1+\alpha 2)-(\beta 1+\beta 2))/\gamma \ kg$$

In Case 2, an environmentally-friendly value does not remain on the first product.

In Case (C):

Since the amount of carbon derived from the plant-based resource, in terms of energy used in production $((\alpha 1+\alpha 2)A$ kg) and the amount of carbon derived from the fossil-based resource in terms of energy used in production $((\beta 1+\beta 2)A$ kg) are used as the environmentally-friendly value index, in cases where the second product is produced from the amount of carbon derived from the plant-based resource in terms of energy used in production $((\beta 1+\beta 2)B$ kg) and the amount of carbon derived from the fossil-based resource in terms of energy used in production $((\alpha 1+\alpha 2)B$ kg), and the production volume of the first product A = the production volume of the second product B; the above case C is applied. Therefore, the corresponding production volume becomes:

$$Q = A = B \ kg$$

This case corresponds to the case where the first product and the second product are swapped.
The fifth embodiment enables accentuating not only the amount of carbon derived from plant- and/or fossil-based resources, which is contained in the first product, but also the amount of carbon derived from plant-based and/or fossil-based resources in terms of energy used in production. By accentuating the amount of carbon derived from plant-based and/or fossil-based resources in terms of energy used in production, the embodiment enables determination of an increase and decrease of $CO_2$ emission before and after transferring an environmentally-friendly value.

**(The sixth embodiment)**

Hereinafter, the sixth embodiment will be described.

The sixth embodiment relates to the method of transferring eco-value according to the first embodiment, wherein the environmentally-friendly value index corresponds to an amount of carbon derived from plant- and/or fossil-based resources, which is contained in said first product.

The sixth embodiment is characterized in that an amount of carbon derived from plant-based and/or fossil-based resources is contained in the first product. In this case, it is only required to know an amount of carbon contained in the first product, to which an environmentally-friendly value is transferred, and no need of tracing a production history of the first product; thereby enabling easy computation of a corresponding production volume.

The sixth embodiment is the same as the first embodiment except the point that the environmentally-friendly value index corresponds to an amount of carbon derived from plant-based and/or fossil-based resources is contained in the first product, so that the description thereof is omitted.

The environmentally-friendly value index of the sixth embodiment is characterized by corresponding to an amount of carbon derived from plant- and/or fossil-based resources contained in the first product. Examples of the environmentally-friendly value index include an "amount of carbon B kg derived from plant-based resource and/or amount of carbon C kg derived from fossil-based resource for the first product A kg." In the sixth embodiment, there are a number of usages of an environmentally-friendly value index as follows.

(A) The amount of carbon derived from a plant-based resource, which is contained in the first product, is used as an environmentally-friendly value index.
(B) The amount of carbon derived from a plant-based resource, which is contained in the first product, minus the amount of carbon derived from fossil-based resource, which is contained in the first product, is used as an environmentally-friendly value index.
(C) The amount of carbon derived from a plant-based resource, which is contained in the first product, and/or the amount of carbon derived from a fossil-based resource, which is contained in the first product, is used as an environmentally-friendly value index.

Hereinafter, a concrete example of computing a corresponding production volume of the sixth embodiment will be described.

Assume that the amount of carbon, derived from a plant-based resource, which is contained in the first product (Organic Compound X: A kg) is $\alpha$A kg; the amount of carbon, derived from a fossil-based resource, which is contained in the first product (Organic Compound X: A kg) is $\beta$A kg; and an environmentally-friendly value index corresponds to $\alpha$A kg of carbon derived from a plant-based resource and/or $\beta$A kg of carbon derived from a fossil-based resource, which are respectively contained in the first product, for A kg the first product. Moreover, B kg of Organic Compound X of a fossil-based resource is required for producing the second product (C kg of Organic Compound Y, and $\gamma$C kg of carbon). In this case, the fossil-based resource contained in B kg of Organic Compound X of a fossil-based resource becomes $(\alpha + \beta)$ B kg when converted to the amount of carbon, if the production process of the first product and the production process of the second product are the same.

In Case (A):

Fig. 32 illustrates computation of a corresponding production volume In Case (A).
In Case (A), since the amount of carbon, derived from the plant-based resource, which is contained in the first product, is used as the environmentally-friendly value index, $\alpha$A kg thereof becomes the amount of the plant-based resource represented by the environmentally-friendly value index. Therefore, a corresponding production volume (Q) is computed by the following formula:

(Case 1: A is B or greater than B)

Corresponding production volume,

Q = Production volume of the second

product $\times$ (Amount, which is contained in the fossil-based resource equivalent to the plant-based resource, corresponding to an environmentally-friendly value index /

Amount, which is contained in the second product, corresponding to an environmentally-friendly value index)

$$=C\times((B/A)\times(\alpha A))/(\gamma C)$$

$$=B\times\alpha/\gamma \ kg$$

In Case 2, an environmentally-friendly value for (A-B) kg remains on the first product.

(Case 2: A is less than B)

Corresponding production volume,

Q = Production volume of the second

product $\times$ (Amount, which is contained in the fossil-based resource equivalent to the plant-based resource, corresponding to an environmentally-friendly value index /

Amount, which is contained in the second product, corresponding to an environmentally-friendly value index)

$$=C\times(\alpha A))/(\gamma C)$$

$$=A\times\alpha/\gamma \ kg$$

In Case 2, an environmentally-friendly value does not remain on the first product.
Fig. 33 illustrates state of processes after transferring an environmentally-friendly value from the first product to the second product shown in Fig. 32. As a result of transferring the value, the amount of carbon, derived from a plant-based resource, which is contained in the first product (Organic Compound X: A kg), becomes $\alpha$(A-B) kg; and the amount of carbon, derived from a fossil-based resource, whi ch is contained in the first product (Organic Compound X: A kg) becomes ($\beta$A+$\alpha$B) kg. Moreover, it can be labeled, as the amounts contained in the second product (C kg of Organic Compound Y, and $\gamma$C kg of carbon), that the amount of carbon derived from a plant-based resource is $\alpha$B kg, and that the amount of carbon derived from a fossil-based resource is $\beta$B kg.

In Case (B):

In Case (B), since the amount of carbon derived from the plant-based resource, which is contained in the first product minus the amount of carbon derived from the fossil-based resource, which is contained in the first product) is used as the environmentally-friendly value index, ($\alpha$-$\beta$)A kg thereof becomes the amount of the plant-based resource represented by the environmentally-friendly value index. Therefore, a corresponding production volume (Q) is computed by the following formula.

(Case 1: A is B or greater than B)

Corresponding production volume,

Q = Production volume of the second

product $\times$ (Amount, which is contained in the fossil-based resource equivalent to the plant-based resource, corresponding to an environmentally-friendly value index /

Amount, which is contained in the second product, corresponding to an environmentally-friendly value index)

$$=C \times ((B/A) \times (\alpha-\beta)A)/(\gamma C)$$

$$=B \times (\alpha-\beta)/\gamma \ \mathrm{kg}$$

In Case 2, an environmentally-friendly value for (A-B) kg remains on the first product.

(Case 2: A is less than B)

$$Q = C \times ((\alpha-\beta)A)/(\gamma C)$$

$$=A \times (\alpha-\beta)/\gamma \ \mathrm{kg}$$

In Case 2, an environmentally-friendly value does not remain on the first product.

In Case (C):

$\alpha A$ kg of carbon derived from the plant-based resource, which is contained in the first product, and $\beta A$ kg of carbon derived from the fossil-based resource, which is contained in the first product, are used as the environmentally-friendly value index. As such, in cases where the second product is produced from $\beta B$ kg of carbon derived from the plant-based resource, which is contained in the second product , and from $\alpha B$ kg of carbon derived from the fossil-based resource, which is contained in the first product, and the production volume of First Product A equals the production volume of Second Product B. Therefore, the corresponding production volume becomes:

$$Q = A = B \text{ kg}$$

This case corresponds to the case where the first product and the second product are swapped.
According to the sixth embodiment, it is only required to know an amount of carbon contained in the first product, to which an environmentally-friendly value is transferred, and no need of tracing a pro duction history of the first product; thereby enabling easy computation of a corresponding production volume.

**(The seventh embodiment)**

Hereinafter, the seventh embodiment will be described.
The seventh embodiment relates to the method of transferring eco-value according to the first embodiment, wherein the corresponding production volume corresponds to a production volume of a second product containing predetermined proportion of an amount of carbon, which corresponds to the amount of carbon contained in the first product as produced. Here, "a predetermined proportion" corresponds to a proportion of an amount of carbon contained in the first product for an amount of carbon contained in the second product. The predetermined proportion corresponds to a positive real-value such as 0.1, 0.3, 0.5, and 1.0... In this case, generally, the predetermined proportion becomes less than one. The seventh embodiment is the same as the first embodiment except the point that the corresponding production volume corresponds to a production volume of a second product containing predetermined proportion of an amount of carbon, which corresponds to the amount of carbon contained in the first product as produced, so that the description thereof is omitted.
Hereinafter, a concrete example of computing a corresponding production volume of the seventh embodiment will be described.

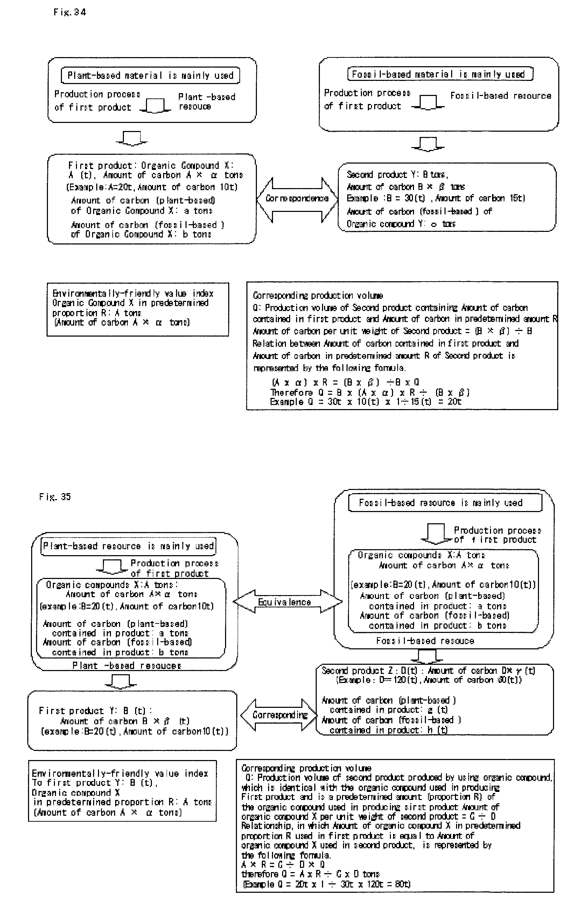

Fig. 34 is an illustration of example of computation of corresponding production volume.

Assume that the first product is of A tons of Organic Compound X, A $\times$ $\alpha$ tons of carbon, a tons of carbon derived from a plant-based resource, and b tons of a fossil-based resource); a ratio is R; and the environmentally-friendly value index corresponds to as follows: A tons of ratio R of Organic Compound X, A tons , R $\times$ (A $\times$ $\alpha$) tons of carbon, a tons of carbon derived from a plant-based resource, and b tons of carbon derived from a fossil-based resource. Moreover, the second product is of B tons of Organic Compound Y, B $\times$ $\beta$ tons of carbon, and c tons of carbon derived from a fossil-based resource.

In the seventh embodiment, the following equation can be established:

(Amount, which is contained in the first product, corresponding to an environmentally-friendly value index) $\times$ (Given ratio) = (Amount, which is contained in the second product, corresponding to an environmentally-friendly value index) / (Production volume of the second product) $\times$ (Corresponding production volume)

Corresponding production volume, Q = (Production volume of the second

product) $\times$ (Amount, which is contained in the first product, corresponding to an environmentally-friendly value index) $\times$ (Given ratio) / (Amount, which is contained in the second product, corresponding to an environmentally-friendly value index)

Therefore, a corresponding production volume (Q) is computed by the following formula.

Corresponding production volume, Q = B $\times$ ($\alpha$A $\times$ R) / (B$\beta$)

For example, assume that A = 20 tons, $\alpha$A = 10 tons, R = 1, B = 30 tons, and B$\beta$ = 15t; Corresponding production volume, Q = 30 $\times$ (10 $\times$ 1) / 15t = 20 tons.

According to the seventh embodiment, the corresponding production volume corresponds to a production volume of a second product containing a predetermined a predetermined proportion of an amount of carbon, which corresponds to the amount of carbon contained in the first product as produced. Therefore, it is not required to trace a history of carbon, thereby enabling easy computation of a corresponding production volume.

**(The eighth embodiment)**

Hereinafter, the eighth embodiment will be described.

The eighth embodiment relates to the method of transferring eco-value according to the first embodiment, wherein the organic compound used in producing the first product is identical to an organic compound used in producing a second product; and said corresponding production volume corresponds to the production volume of the second product produced by using an amount of said organic compound, which is a predetermined proportion of the amount of the organic compound used in producing said first product. Here, "a predetermined proportion" corresponds to a proportion of an amount of carbon contained in the first product for an amount of carbon contained in the second product. The predetermined proportion corresponds to a positive real-value such as 0.1, 0.3, 0.5, and 1.0... In this case, generally, the predetermined proportion becomes less than one. The eighth embodiment is the same as the first embodiment except the point that the organic compound used in producing the first product is identical to an organic compound used in producing a second product; and said corresponding production volume corresp onds to the production volume of the second product produced by using an amount of said organic compound, which is a predetermined proportion of the amount of the organic compound used in producing said first product, so that the description thereof is omitted.

Hereinafter, a concrete example of computing a corresponding production volume of the eighth embodiment will be described.

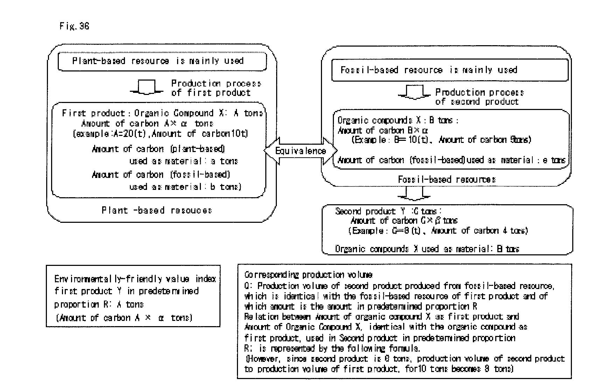

Fig. 35 is an illustration of example of computation of corresponding production volume.

Assume that the plant-based resource as the first product is as follows: A tons of Organic Compound X, A $\times$

α tons of carbon A, a tons of carbon derived from a plant-based resource, b tons of carbon derived from a plant-based resource. The first product is as follows: B tons of Organic Compound Y, B × β tons of carbon derived from a plant-based resource, c tons of carbon derived from a plant-based resource, and d tons of carbon derived from a fossil-based resource. With a given ratio of R, the environmentally-friendly value index corresponds to A × α tons of carbon (a tons of carbon derived from a plant-based resource, and b tons of carbon derived from a fossil-based resource) of a given ratio R of Organic Compound Y (A tons) for the first product (B tons, B × β tons of carbon). Moreover, the fossil-based resource as the second product is as follows: C tons of Organic Compound X, C × α tons of carbon (e tons of carbon derived from a plant-based resource, and f tons of carbon derived from a plant-based resource). The second product is as follows: D tons of Organic Compound Z, D × γ tons of carbon (g tons of carbon derived from plant-based resource, and h tons of carbon derived from plant-based resource).

In the eighth embodiment, the following equation is established:

$$\text{(Amount, which is contained in the plant-based resource, corresponding to an}$$

$$\text{environmentally-friendly value index)} \times \text{(Given ratio)} = \text{(Amount, which is contained}$$

$$\text{in the fossil-based resource equivalent to the plant-based resource, corresponding to an}$$

$$\text{environmentally-friendly value index)} / \text{(Production volume of the second product)} \times$$

$$\text{(Corresponding production volume)}$$

$$\text{Corresponding production volume} = \text{(Production volume of the second product)}$$

$$\times \text{(Amount, which is contained in the first product, represented by an}$$

$$\text{environmentally-friendly value index)} \times \text{(Given ratio)} / \text{(amount, which is contained in}$$

$$\text{the second product, corresponding to an environmentally-friendly value index)}$$

Therefore, a corresponding production volume (Q) is computed by the following formula.

$$\text{Corresponding production volume, } Q = D \times (\alpha A \times R) / (\alpha C) \text{ tons}$$

For example, assume that A = B = 20 tons, αA = Bβ = 10 tons, R = 1, C = 30 tons, αC = 15t, D = 120 tons, and Dγ = 60 tons; Corresponding production volume, Q = 120 × (10 × 1) / 15t = 80 to ns.

According to the eighth embodiment, the corresponding production volume corresponds to the organic compound used in producing the first product is identical to an organic compound used in producing a second product; and the corresponding production volume corresponds to the production volume of the second product produced by using an amount of the organic compound, which is a predetermined proportion of the amount of the organic compound used in producing the first product. Therefore, it is usable in cases where the first product and the second product, which are produced from the above organic compound, are produced from the same substance.

**(The ninth embodiment)**

Hereinafter, the ninth embodiment will be described.

The ninth embodiment relates to the method of transferring eco-value according to the first embodiment, wherein the fossil-based resource is identical to the first product; and the corresponding production volume corresponds to a production volume of a second product produced from an amount of the fossil-based resource, which is a predetermined proportion of the amount of the first product produced. Here, "a predetermined proportion" corresponds to a proportion of an amount of carbon contained in the first product for an amount of carbon contained in the second product. The predetermined proportion corresponds to a positive real-value such as 0.1, 0.3, 0.5, and 1.0... Generally, in cases where the first product and the fossil-based resource are identical, the first product is more expensive than the fossil-based resource, it follows that a price per unit of the first product is more expensive than that of the fossil-based resource. Therefore, the ninth embodiment is usable in cases where it is required to compute the amount of fossil-based resource used in producing the second product, th e price thereof is the same as that of the total price of the first product. In this case, generally, the predetermined proportion becomes less than one. The ninth embodiment is the same as the first embodiment except the point that the fossil-based resource is identical to the first product; and the corresponding production volume corresponds to a production volume of a second product produced from an amount of the fossil-based resource, which is a predetermined proportion of the amount of the first product produced, so that the description thereof is omitted.

Hereinafter, a concrete example of computing a corresponding production volume of the ninth embodiment will be described.

Fig. 36 is an illustration of example of computation of corresponding production volume.

Assume that the plant-based resource as the first product is of as follows: A tons of Organic Compound X, A $\times \alpha$ tons of carbon (a tons of carbon derived from a plant-based resource, b tons of carbon derived from a fossil-based resource), c tons of carbon derived from a plant-based resource, and/or d tons of carbon derived from a fossil-based resource. With a given ratio of R, the environmentally-friendly value index corresponds to A $\times \alpha$ tons of carbon of a given ratio of R of the first product (A tons). Moreover, the fossil-based resource as the second product is of as follows: B tons of Organic Compound X, B $\times \alpha$ tons of carbon (e tons of carbon derived from plant-based resource, and f tons of carbon derived from a plant-based resource). The second product is of as follows: C tons of Organic Compound Y, C $\times \beta$ tons of carbon (B tons of Organic Compound X).

In the ninth embodiment, the following equation is established.

(Amount, which is contained in the first product, corresponding to an environmentally-friendly value index) $\times$ (Given ratio) = (Amount, which is contained in the fossil-based resource equivalent to the plant-based resource, corresponding to an environmentally-friendly value index) / (Production volume of the second product) $\times$

(Corresponding production volume)

Corresponding production volume = (Production volume of the second product)

$\times$ (Amount, which is contained in the first product, represented by an

environmentally-friendly value index) $\times$ (Given ratio) / (Amount, which is contained in the fossil-based resource equivalent to the plant-based resource, corresponding to an environmentally-friendly value index)

Therefore, a corresponding production volume (Q) is computed by the following formula.

$$Q = C \times (\alpha A \times R) / (\alpha B) \text{ tons}$$

Note that, in the above formula, the amount of Organic Compound X per unit weight of the second product = B/C.

For example, assume that A = 20 tons, $\alpha$A = 10 tons, R = 1, B = 10 tons, $\alpha$B = 5t, C = 8t, and $\beta$C = 4t; Corresponding production volume, Q = 8 $\times$ (10 $\times$ 1) / 5t = 16t.

According to the ninth embodiment, the fossil-based resource is identical to the first product; and said corresponding production volume corresponds to a production volume of a second product produced from an amount of the fossil-based resource, which is a given ratio of the amount of the first product produced. Therefore, it is usable in cases where the first product and the second product are produced from the same substance.

**(The tenth embodiment)**

Hereinafter, the tenth embodiment will be described.

The tenth embodiment relates to an apparatus for transferring eco-value which acquires a certification request information, outputs the certification information, acquires transfer request information and acceptance request information, and trades an environmentally-friendly value by comparing the transfer request information with the acceptance request information.

Hereinafter, the requirements of the apparatus for transferring eco-value of the tenth embodiment will be described.

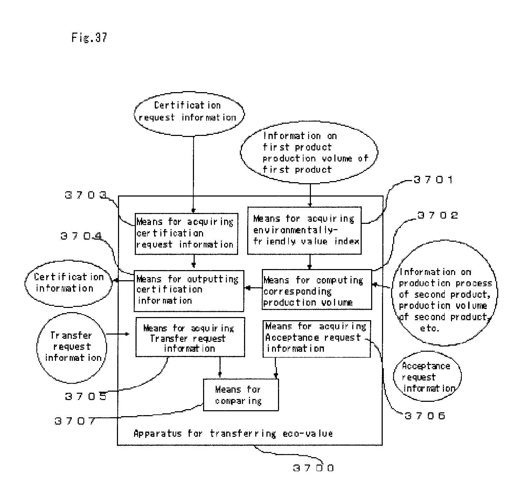

Fig. 37 is a functional block diagram of the apparatus for transferring eco-value 3700 of the tenth embodiment. The apparatus for transferring eco-value comprises a means for acquiring an environmentally-friendly value index 3701, a means for computing a corresponding production volume 3702, a means for acquiring certification request information 3703, a means for outputting certification information 3704, a means for acquiring transfer request information 3705, a means for acquiring acceptance request information 3706, and a means for comparison 3707.

Hereinafter, the requirements of the apparatus for transferring eco-value of the tenth embodiment will be described.

The means for acquiring an environmentally-friendly value index, and the means for computing a corresponding production volume are the same as those of the apparatus for transferring eco-value of the first embodiment, so that the description thereof is omitted.

Hereinafter, the means for acquiring certification request information will be described.

Here, "the certification request information" corresponds to information of request for certification of the labeling right. Here, a "request for certification" may include an item of request for certification. Examples of certification request information include: a substance for environmental value certification (e.g., ethylene (plant-based)), certification items of environmentally-friendly value (source of carbon contained in the object substance and the energy amount and energy source for production of the object substance, quantity (e.g. ethylene 100 (kg)), the production history of the object substance (the date of production, lot numbers of pr oducts, the name of the factory and the address thereof, the name of plant materials, source of plant materials and the manufacturer thereof, production processes, the amount and the source of energy for production), usages for the object substance (e.g., used for production of PE, PS, PET), and secondary users of the object substance (e.g., X Plastic Industry Co., Y Plant).

Acquisition of the certification request information is executed by a manufacturer of the first product (hereinafter, referred to as a originator of an environmentally-friendly value.) who inputs the certification request information into a terminal via network. The acquired certification request information is outputted to a third-party certification organization by the means for outputting certification order information. The certification order information is inputted as certification result information by the means for inputting the certification result information. The certification result information inputted by the means for inputting the certification result information is, for example, stored in the certification information database, which stores the certification information including the certification result information. The certification information stored in the certification information database is transmitted to the means for outputting the certification information.

Hereinafter, the means for outputting certification information will be described.

The means for inputting certification information outputs the certification information. Here, "the certification information" corresponds to information including a corresponding production volume based on the certification information acquired. Here, "based on the certification request information" is defined as the "productio n volume of the first product, which requires certification, and is included in the certification request information." Examples of the certification information include: the certification ID of the originator of an environmentally-friendly value number (e.g., No. XXX), the substance for environmental value certification (e.g., ethylene (plant-based)), certification items of environmentally-friendly value (e.g. the source of the object substance, the name of the factory and the address thereof, the name of plant materials, the source of plant materials and the manufacturer thereof, production processes, and the amount and the source of energy for production), the amount of the substance (e.g., ethylene: 100 kg), production history of the object substance (th e date of production, lot numbers of products, the name of the factory and the address thereof, the name of plant materials, the source of plant materials and the manufacturer thereof, production processes (e.g., sugar → ethanol → ethylene)), the amount and source of energy for production, usages for the object substance (e.g., used for production of PE, PS, PET), secondary users of the object substance (e.g., X Plastic Industry Co., Y Plant), a certifier (X Certification Organization, A month, B date, C year, digital signature), and the corresponding production volume (e.g., second product: X kg). The certification information is acquired from the certification database by the means for acquiring certification request information. The certification information is outputted to the originator of environmentally-friendly value, who orders the certification request. The originator of the environmentally-friendly value will be informed about the details of the certification including the corresponding production volume.

Hereinafter, the means for acquiring transfer request information will be described.

Here, the "transfer request information" corresponds to information such as a request for transfer of a labeling right, which corresponds to the output of the certification information. Note that a request for transfer may include items requested to be transferred. Moreover, the phrase "received corresponding to output" refers to receiving by the apparatus of the transfer request information transmitted according t o the certification information outputted from the apparatus. Examples of the transfer request information include: certification ID of the originator of an environmentally-friendly value number (e.g., No. XXX), the substance for environmental value certification (e.g., ethylene (plant-based)), certification ID of the originator of environmentally-friendly value number (e.g., No. XXX), the substance for environmental value certification (e.g., ethylene (plant-based)), environmental value which is requested to be transferred (the source and proportion of carbon contained in the object substance, the amount and source of energy for production), the amount of the substance (e.g., the amount of the object substance: X kg, sale of forward contract may be permitted other than spots), transfer request price (unit price of X yen/ kg of ethylene for environmental value), and the corresponding production volume (e.g., the second product: X kg). Moreover, the information, which allows computation of a corresponding production volume of any second product, may be included. For example, the computation method of a corresponding production volume is cited. The acquisition of the transfer request information is executed by the originator of an environmentally-friendly value, who inputs the transfer request information into a terminal via network. The acquired transfer request information is outputted to the means for comparison. The transfer request information may be outputted to the means for computing a transfer index, which computes a transfer production volume, a production volume of the first product transferred based on the transfer request information, and after that, may be outputted to the means for comparison from the means for computing transfer index. Note that the method of a computing transfer index by the means for computing transfer index will be described, hereinafter.

The "acceptance request information" refers to information requesting acceptance of a labeling right. Examples of the acceptance request information include: the object substance for acceptance of environmentally-friendly value (e.g., polystyrene), the history thereof (e.g., the name of materials and basic units (0.3kg of naphtha-based ethylene, 0.8kg of naphtha-based benzene, and 1.1 kg of styrene-monomer), the manufacturer of materials and plants, and the energy for production), the classification of value swap or value allotment, the purpose of purchasing a value, environmental value for the acceptance request (e.g., a percentage of plant-based carbon: X%; swap or allotment of energy for production), quantity (e.g., 100 kg of polystyrene, sale of forward contracts thereof may be permitted other than spot), suggested price for acceptance (unit price of X yen/kg of A%B of an organic compound). The acquisition of the acceptance request information is executed by the manufacturer of the second product (hereinafter, referred to as a potential consumer of an environmentally-friendly value), who inputs the acceptance request information into a terminal via network. The acquired acceptance request information is outputted to the means for comparison. Furthermore, the acceptance request information may be outputted to the means for computing acceptance index, which computes an acceptance production volume, a production volume of the second product accepted based on the acceptance request information, and after that, may be outputted to the means for comparison. Note that the method of computing acceptance index of the means for computing acceptance index w ill be described, hereinafter.

Hereinafter, the means for comparison will be described.

The means for comparison compares the transfer request information acquired with the acceptance request information. The term "compare" refers to judgment as to whether or not the information corresponding to the acceptance request information or the information corresponding to the acceptance request information has a predetermined relation. Examples of the "predetermined relation" include instances where the content suggested by an originator of an environmentally-friendly value and the content suggested by a potential consumer of an environmentally-friendly value are the same or within an allowance and have the same relation that has been preset to the present apparatus. Examples of the "relation" include the following conditions: the case where the corresponding production volume included in the transfer request information and the production volume of the second product included in the acceptance request information a re equal and the total price of the corresponding production volume included in the transfer request information and the total price of the production volume of the second product included in the acceptance request information are equal. As a result of the comparison, in cases where the transferable first product exists, the transferable item information is transmitted to the originator of an environmentally-friendly value by the means for outputting transferable item information, information indicating the existence of the transferable first product. Moreover, as a result of the comparison, in cases where the acceptable first product exists, the acceptable item information is transmitted to the potential consumer of an environmentally-friendly value by the means for outputting acceptable item information, which is information indicating the existence of the acceptable first product.

Hereinafter, the flow of processes of the tenth embodiment will be described.

Fig. 38 is a process flow drawing of the tenth embodiment.

First, the step of acquiring certification request information acquires certification request information, which is information requesting for certification of labeling right (Step S3801). The step of outputting certification information outputs certification information including a corresponding production volume based on the certification request information acquired (Step S3802). The step of acquiring transfer request information acquires transfer request information, which is information requesting transfer of a labeling right that is received corresponding to the output of the certification information (Step S3803). The step of acquiring acceptance request information acquires information requesting for acceptance of the labeling right (Step S3804). The step of comparison compares the transfer request information with the acceptance request information acquired (Step S3805).

(The first example)

Hereinafter, the trading system of an environmentally-friendly value using an apparatus of transferring an eco-value in the first example will be described.

In the first example, the environmentally-friendly value is a trading object. The trading system of an environmentally-friendly value provides a system in which the environmentally-friendly value of a first product as an object item of trading is traded by swapping with the environmentally-friendly value of a second product at an arbitrary proportion within an appropriate scope. Trading by allotment is done with an organic compound produced by mixing the first and the second product, or with a product produced therefrom (hereinafter, referred to as the third product.); and supports certification by computing an environmentally-friendly value of the second product or the third product, which are traded in value swap or in allotment.

Moreover, the trading system of an environmentally-friendly value can be classified into a system of distribution of goods with an environmentally-friendly value and a system in which non-deliverable goods are separated from the environmentally-friendly value (i.e., only the environmentally-friendly value is distributed).

In relation to the system in which goods are distributed with an environmentally-friendly value, the environmentally-friendly value of the first product is traded in allotment to the third product, in which the first and the second product are mixed at an arbitrary proportion within an appropriate scope, e.g., in cases where a plant-based and a fossil-based ethylene manufacturer are connected to the other manufacturers of polyethylene and polystyrene, the manufacturer of polyethylene requests value trading. Examples of items of the distributed environmentally-friendly value in trading include: (1) the source of carbon contained in the organic compound (plant- or fossil-based) and (2) the amount of energy for the production of the organic compound.

In relation to the system in which non-deliverable goods are separated from the environmentally-friendly value, the environmentally-friendly value of the first product is traded in swapping with the environmentally-friendly value of the second product at an arbitrary proportion within an appropriate scope. Examples of the object for the value swapping include: the second product of the same molecule structure as the fi rst product (e.g., ethylene as the first product, ethylene as the second product or polyethylene as the first product, polyethylene as the second product), the second product producible from the first product (e.g., ethylene as the first product; styrene-monomer, polyethylene, polyethylene used in a litter bag, or PS used in a container as the second product) and the second product non-producible from the first product (e.g., ethylene as the first product, and phenol, etc. as the second product).

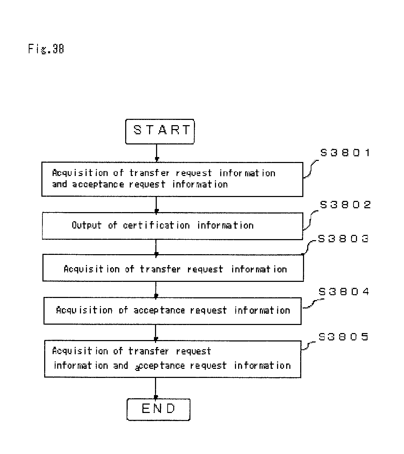

Hereinafter, concrete descriptions will be provided in Figs. 39 to 41, which are drawings describing the scheme and the process flows of the system of transferring an environmentally-friendly value of the first example. The system of transferring an environmentally-friendly value of the first example comprises an initial certification system, a system of transferring an environmentally-friendly value, and a final certification system. Moreover, in this system, there exists an apparatus for transferring eco-value of a system operator, an originator of an environmentally-friendly value, a potential consumer of a product having an environmentally-friendly value, a manufacturer or user of an environmentally-friendly value who purchases an environmentally-friendly value product (hereinafter, referred to as a user of an environmentally-friendly value product), and a third-party certification organization.

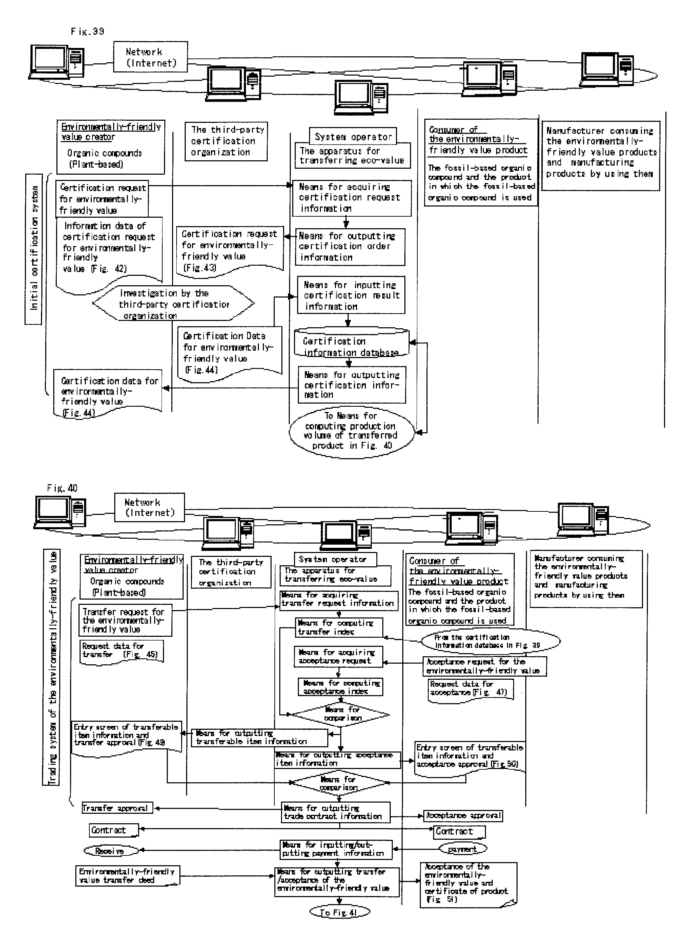

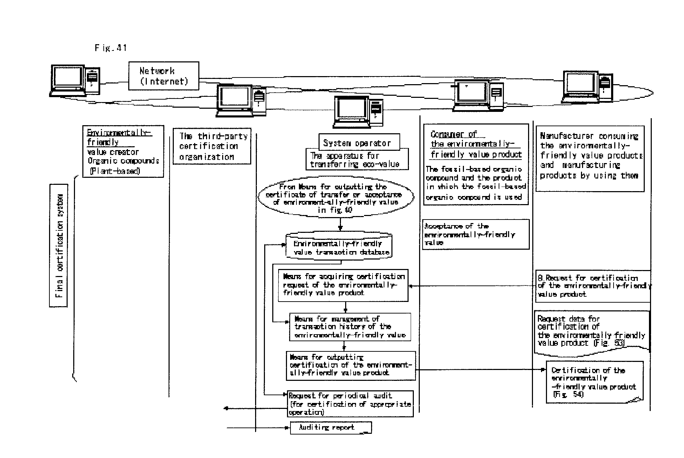

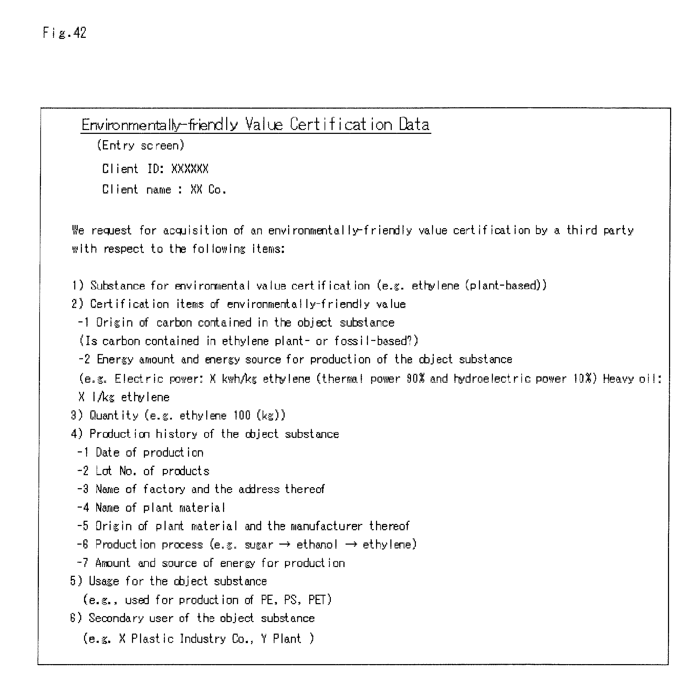

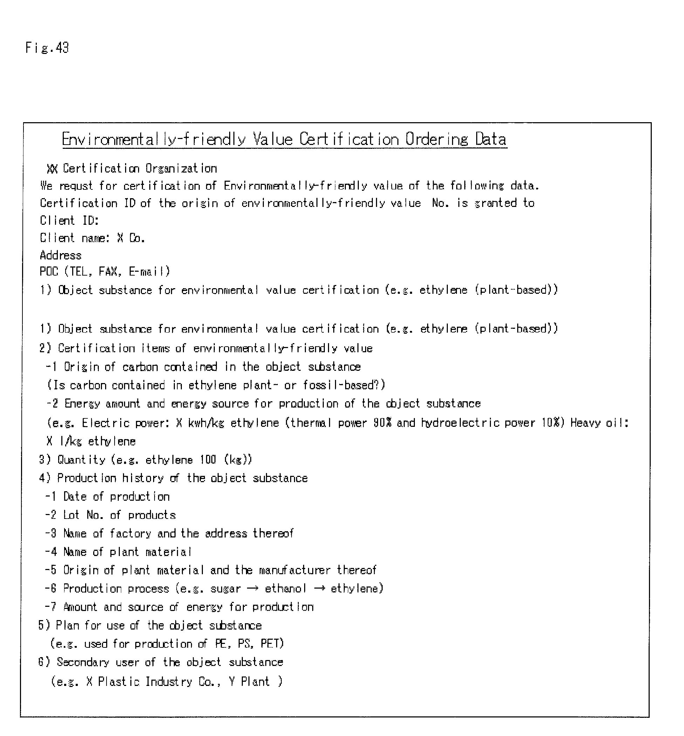

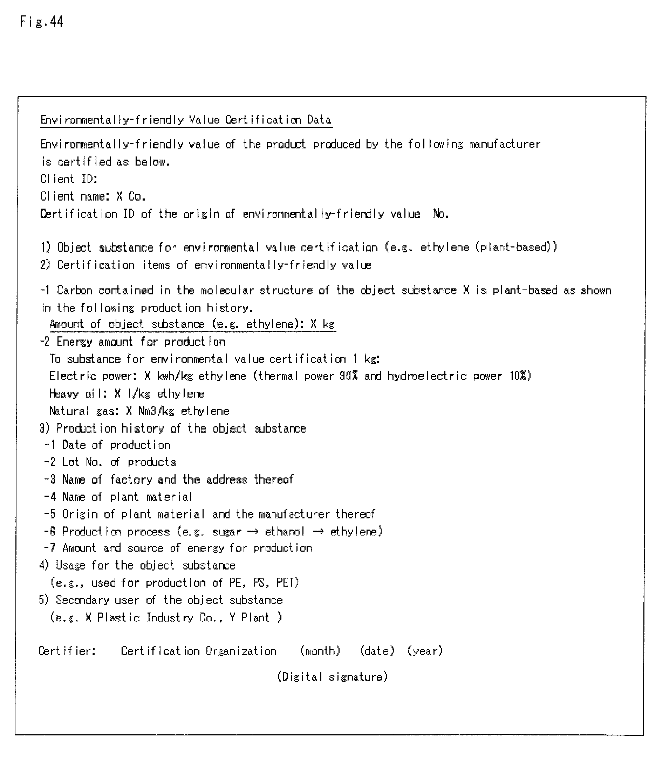

Fig. 39 is a process flow drawing of an initial certification system. The originator of an environmentally-friendly value transmits a certification request of an environmentally-friendly value of the certification request information (an example of environmentally-friendly value certification request data is depicted in Fig. 42.) to the apparatus for transferring eco-value. The means for acquiring certification request information of the apparatus for transferring eco-value acquires the environmentally-friendly value certification request. The means for outputting the certification request information of the apparatus for tr ansferring eco-value transmits an environmentally-friendly value ordering data of the certification ordering information (an example thereof is depicted in Fig. 43.) to a third-party certification organization. The third-party certification organization tr ansmits the environmentally-friendly value certification data (an example thereof is depicted in Fig. 44.) to the means for inputting certification result information of the apparatus for transferring eco-value based on the environmentally-friendly value ordering data and on the investigation. The means for inputting certification result information stores the environmentally-friendly value certification data into a certification database. The means for outputting the certification information acquires the environmentally-friendly value certification data from the certification database and transmits to the originator of the environmentally-friendly value.

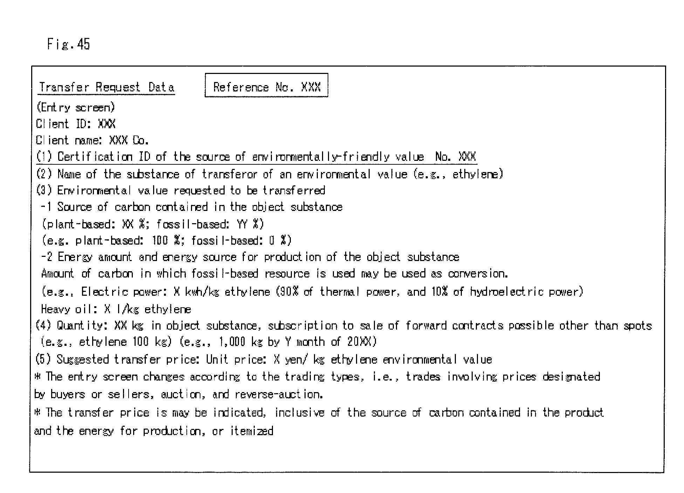

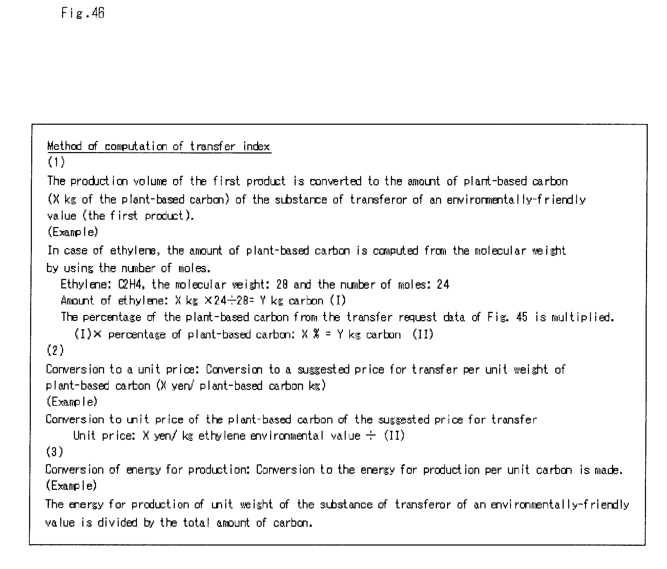

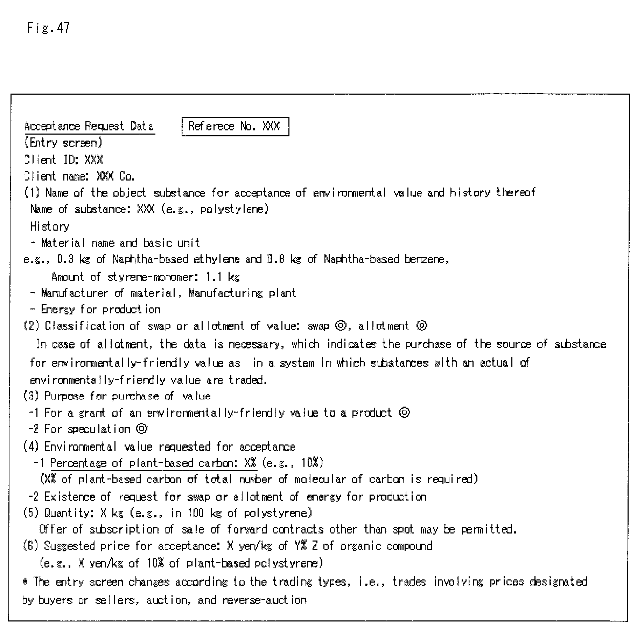

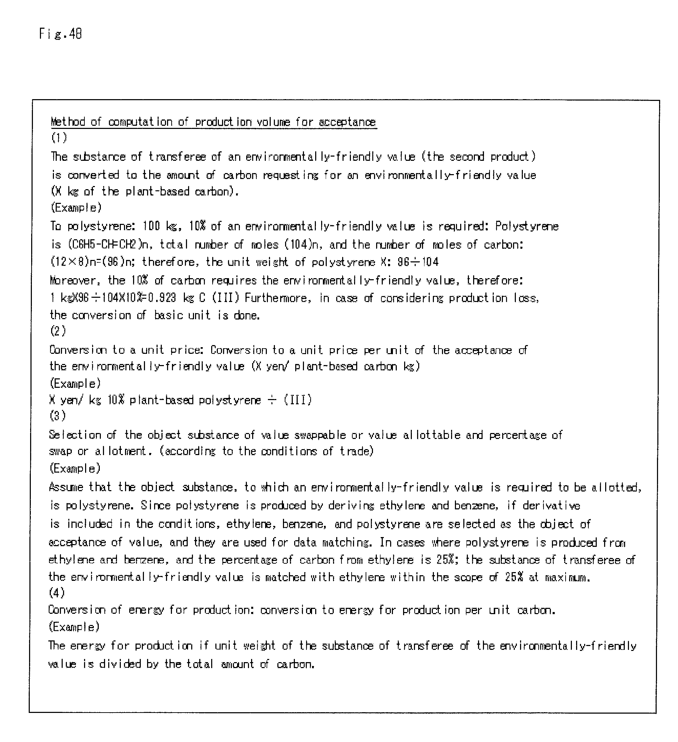

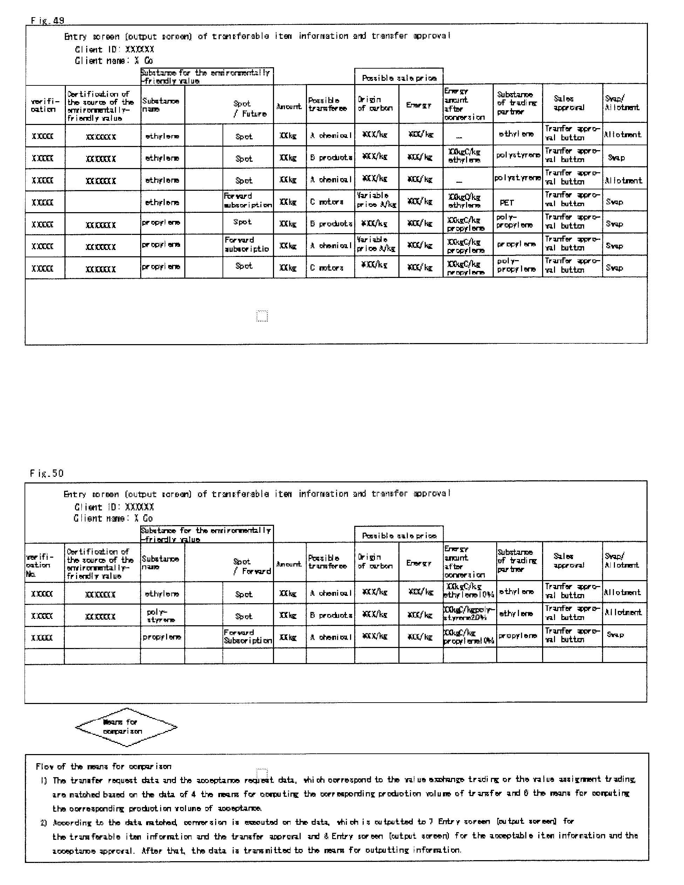

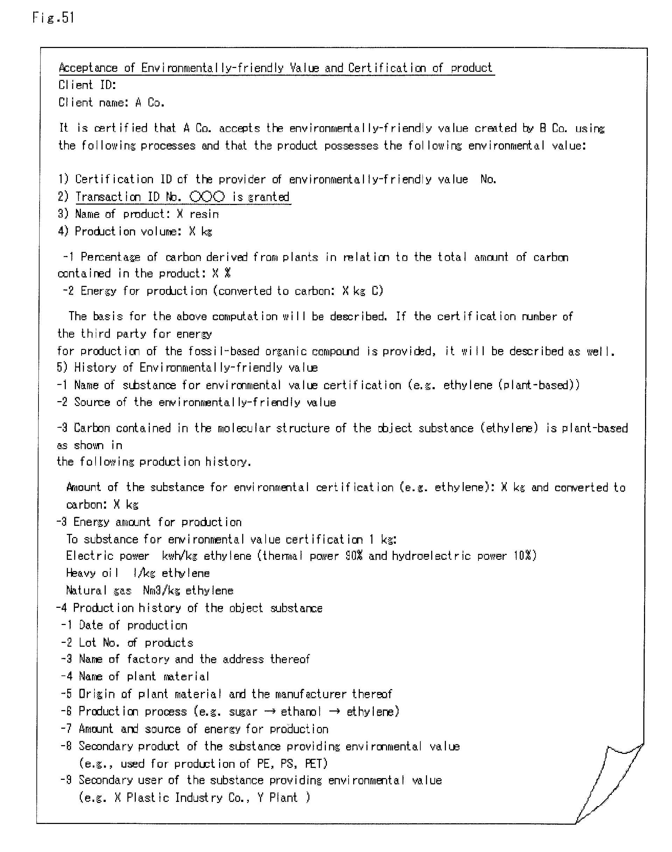

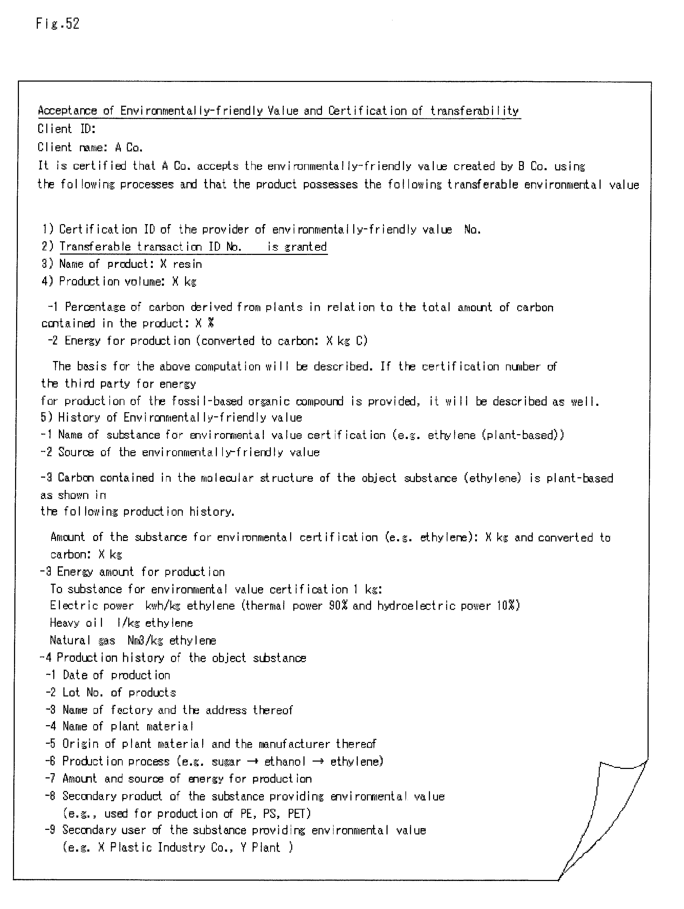

Fig. 40 is a process flow drawing of a trading system for environmentally-friendly value. The originator of the environmentally-friendly value transmits the transfer request of an environmentally-friendly value (an example of environmentally-friendly value transfer request data is depicted in Fig. 45) to the means for acquiring transfer request information of the apparatus. The means for acquiring transfer request information transmits the environmentally-friendly value transfer request to the means for computing transfer index (an example of the method of computing a transfer index is depicted in Fig. 46. The method of computing a transfer index will be described, hereinafter). The potential consumer of an environmentally-friendly value transmits the environmentally-friendly value acceptance request (an example of acceptance request data is depicted in Fig . 47) to the means for acquiring acceptance request information of the apparatus for transferring eco-value. The means for acquiring acceptance request information transmits the environmentally-friendly value acceptance request to the means for computing acceptance index (an example of the method of computing a acceptance index is depicted in Fig. 48. The method of computing an acceptance index will be described, hereinafter.). The means for comparison of the apparatus for transferring eco-value compares the environmentally-friendly value transfer request with the environmentally-friendly value acceptance request. The means for comparison transmits the comparison result to the means for outputting transferable item information and to the means for outputting acceptable item information. The means for outputting transferable item information outputs the transferable item information (an example of the transferable item information and the transfer approval entry screen is depicted in Fig. 49) to the originator of the environmentally-friendly value. The means for outputting acceptable item information transmits the acceptable item information (an example of the acceptable item information and the acceptance approval entry screen is depicted in Fig. 50) to the potential consumer of the environmentally-friendly value. The means for comparison of the apparatus for transferring eco-value compares the inputted information from the transfer approval entry screen and from the acceptance approval entry screen, and transmits the comparison result to the means for outputting constraint information for sales contract. The means for outputting constraint information for sales contract transmits the result to the originator and the potential consumer of the environmentally-friendly value. The potential consumer of the environmentally-friendly value makes acceptance approval on the result. The originator of the environmentally-friendly value makes transfer approval on the result. The means for inputting/outputting settlement information of the apparatus for transferring eco-value receives the amount of settlement from the potential consumer of the environmentally-friendly value and the originator of the environmentally-friendly value receives the payment. The means for inputting/outputting settlement information transmits the result to the means for outputting a certificate of an environmentally-friendly value transfer/acceptance. The means for outputting a certificate of an environmentally-friendly value transfer/acceptance receives a certificate of an environmentally-friendly value transfer from the originator of the environmentally-friendly value and transmits a certificate of an environmentally-friendly value acceptance and product (an example of the certificate of an environmentally-friendly value acceptance and product is depicted in Fig. 51; the certificate of an environmentally-friendly value acceptance and transferability is depicted in Fig. 52.) to the potential consumer of the environmentally-friendly value. Moreover, the means for outputting a certificate of an environmentally-friendly value transfer/acceptance transmits the result an environmentally-friendly value trading database, which stores trading information of environmentally-friendly value.

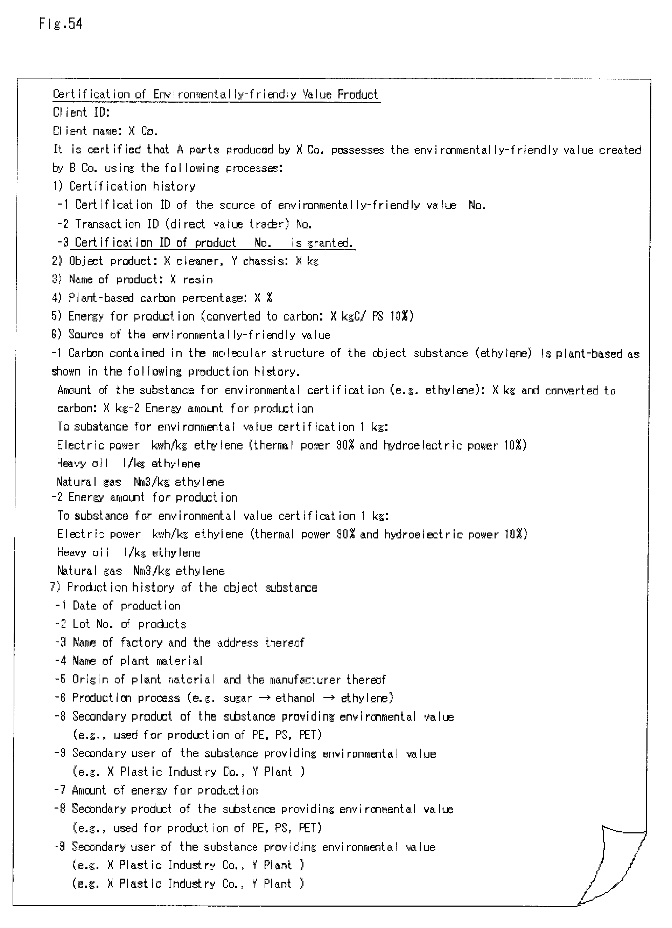

Fig. 41 is a drawing of processing flow of the final certification system. The user of an environmentally-friendly value 8 sends an environmentally-friendly value product certification request (an example of an environmentally-friendly value product certification request data is depicted in Fig. 51), which is a certification request of a product possessing an environmentally-friendly value. The means for acquiring an environmentally-friendly value product certification request of the apparatus for transferring eco-value transmits the acquired environmentally-friendly value product certification request to the means for managing trading history of an environmentally-friendly value. Moreover, the means for managing trading history of an environmentally-friendly value acquires information from the environmentally-friendly value database. The means for managing trading history of an environmentally-friendly value transmits the result to the means for outputting an environmentally-friendly value product certification, which outputs certification information of a product possessing an environmentally-friendly value. The means for outputting an environmentally-friendly value product certification transmits an environmentally-friendly value product certification (an example thereof is depicted in Fig. 54.) to the user of an environmentally-friendly value product. The apparatus for transferring eco-value transmits an order of a periodical audit for certification of an appropriate operation to the third-party certification organization based on the information of the environmentally-friendly value database. The third-party certification organization transmits the auditing report to the apparatus for transferring eco-value.

Hereinafter, an example of the meth od of computing a transfer index in Fig. 46 will be described. Here, the "transfer index" corresponds to information regarding the first product, which is requested to be transferred. Examples of the transfer index include: a production volume of the first product converted to an amount of plant-based carbon, an amount of plant-based carbon converted to a unit and energy for production per unit carbon.

Hereinafter, an example of the method of computing a transfer index in Fig. 46 will be described. Here, the "transfer index" corresponds to information regarding the first product, which is requested to be transferred. Examples of the transfer index include: a production volume of the first product converted to an amount of plant-based carbon, an amount of plant-based carbon converted to a unit, and energy for production per unit carbon.

(Step 1)

The production volume of the first product is converted to the amount of plant-based carbon (X kg of the plant-based carbon) of the substance of transferor of an environmentally-friendly value (the first product).

(Example) In case of ethylene, the amount of plant-based carbon is computed from the molecular weight by using the number of moles.
Ethylene: C2H4, the molecular weight: 28 and the number of moles: 24
Amount of ethylene:

$$X \text{ kg} \times 24 \div 28 = Y \text{ kg carbon} \qquad (I)$$

The percentage of the plant-based carbon from the transfer request data of Fig. 45 is multiplied.

$$(I) \times \text{ percentage of plant-based carbon: } X \% = Y \text{ kg carbon} \qquad (II)$$

(Step 2)

Conversion to a unit price: Conversion to a suggested price for transfer per unit weight of plant-based carbon (X yen/ plant-based carbon kg)
(Example) Conversion to unit price of the plant-based carbon of the suggested price for transfer
Unit price: X yen/ kg ethylene environmental value ÷ (II)

(Step 3)

Conversion of energy for production: Conversion to the energy for production per unit carbon is made. For example, the energy for production of unit weight of the substance of transferor of an environmentally-friendly value is divided by the total amount of carbon.
Hereinafter, an example of the method of computing an acceptance index in Fig. 48 will be described. Here, the "acceptance index" corresponds to information regarding the second product, which is requested to be accepted. Examples of the acceptance index include: a production volume of the first product converted to an amount of plant-based carbon, an amount of plant-based carbon converted to a unit, and energy for production per unit carbon.

(Step 1)

The substance of transferee of an environmentally-friendly value (the second product) is converted to the amount of carbon to determine an environmentally-friendly value (X kg of the plant-based carbon).

(Example)

To polystyrene: 100 kg, 10% of an environmentally-friendly value is required:
Polystyrene is (C6H5-CH=CH2)n, total number of moles (104)n, and the number of moles of carbon: $(12 \times 8)$n=(96)n; therefore, the unit weight of polystyrene X: 96÷104
Moreover, the 10% of carbon requires the environmentally-friendly value, therefore: 1 kgX96÷104X10%=0.923 kg C (III) Furthermore, in case of considering production loss, the conversion of basic unit is done.

(Step 2)

Conversion to a unit price: Conversion to a unit price per unit of the acceptance of the environmentally-friendly value (X yen/ plant-based carbon kg)

(Example)

X yen/ kg 10% plant-based polystyrene ÷ (III)

(Step 3)

Selection of the object substance of value swappable or value allottable and percentage of swap or allotment. (according to the conditions of trade)

(Example)

Assume that the object substance, to which an environmentally-friendly value is required to be allotted, is polystyrene. Since polystyrene is produced by deriving ethylene and benzene, if derivative is included in the conditions, ethylene, benzene, and polystyrene are selected as the object of acceptance of value, and they are used for data matching.

In cases where polystyrene is produced from ethylene and benzene, and the percentage of carbon from ethylene is 25%; the substance of transferee of the environmentally-friendly value is matched with ethylene within the scope of 25% at maximum.

(Step4)

Conversion of energy for production: conversion to energy for production per unit carbon.

(Example) The energy for production if unit weight of the substance of transferee of the environmentally-friendly value is divided by the total amount of carbon.

(The second example)

Hereinafter, the trading system of an environmentally-friendly value using an apparatus of transferring an eco-value in the second example will be described.

In the second example, an environmentally-friendly value is not a trading object. In the case of the second example, an originator and a potential consumer of an environmentally-friendly value are generally the same manufacturer, although not limited to that. In the trading system of an environmentally-friendly value, in which the environmentally-friendly value is not an object of sales, the system enables a provision of allotment at an arbitrary proportion within an appropriate scope without trading the environmentally-friendly value of the first product; certification of the third product; and a support of the certification; in cases where the third product is produced by mixing the first product and the second product, an environmentally-friendly value of the first product. For example, in cases where a company, which produces plant-based and fossil-based ethylene, and later, plastic, the environmentally-friendly value is allotted to usage according to necessity thereof without separating the environmentally-friendly value.

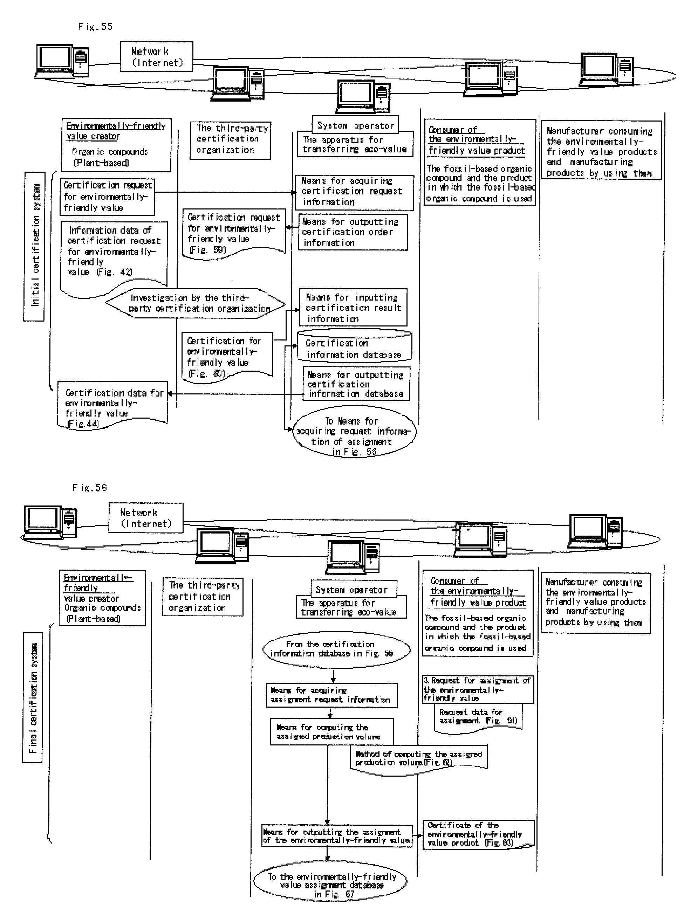

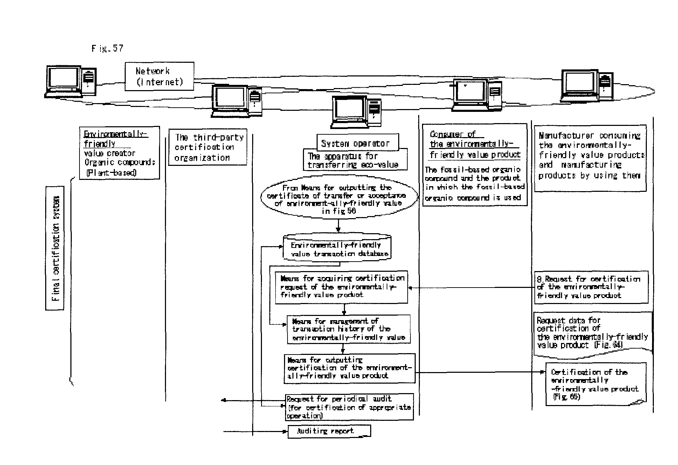

Hereinafter, concrete descriptions will be provided by using drawings. Figs. 55 to 57 are drawings depicting a scheme of the trading system of an environmentally-friendly value and process flows thereof. The system of Example 2 comprises the initial certification system, the allotment system for an environmentally-friendly value, and the final certification system. The system comprises the apparatus of transferring eco-value of a system operator, the originator of an environmentally-friendly value, the potential consumer of an environmentally-friendly value, the user who purchases an environmentally-friendly value, then produces and uses the product (hereinafter, referred to as an environmentally-friendly value user), and the third-party certification organization. The difference from Example 1 is that the allotment system of an environmentally-friendly value, different from the system of transferring an environmentally-friendly value, only allots the environmentally-friendly value to the same manufacturer without selling the environmentally-friendly value. Here, "allotment" corresponds to distribution of a predetermined proportion of the environmentally-friendly value of the first product as the environmentally-friendly value of the second product without selling the environmentally-friendly value of the first product. Here, "distribution" corresponds to a transfer without selling the environmentally-friendly value. The "predetermined proportion" may be optionally determined in the manufacturer.

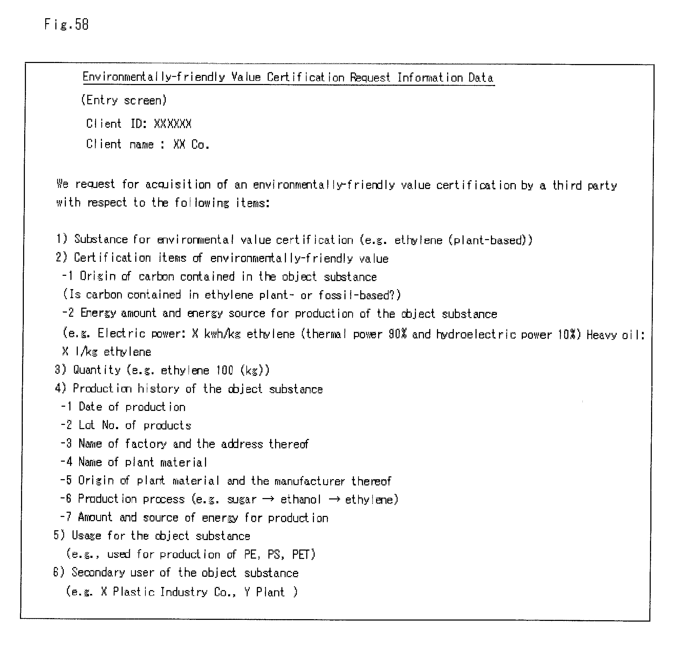

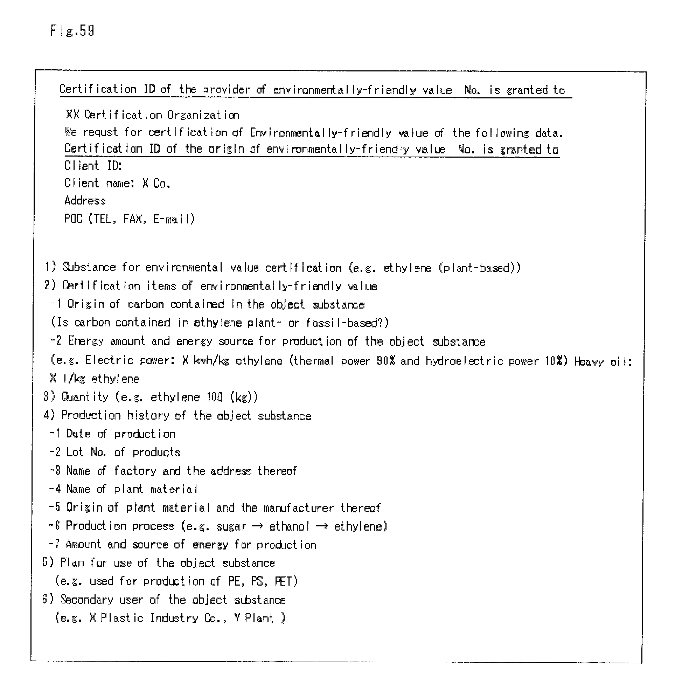

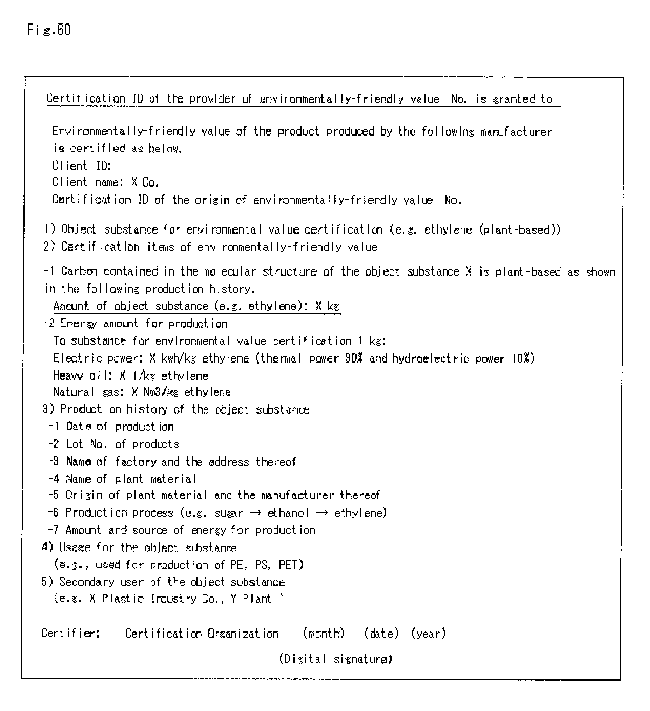

Fig. 55 is a process flow drawing of an initial certification system. The originator of an environmentally-friendly value transmits a certification request for an environmentally-friendly value (an example of environmentally-friendly value certification request data is depicted in Fig. 58.) to the apparatus for transferring eco-value. The means for acquiring certification request information of the apparatus for transferring eco-value acquires the environmentally-friendly value certification request. The means for outputting the certification request information of the apparatus for transferring eco-value transmits an environmentally-friendly value ordering data of the certification ordering information (an example thereof is depicted in Fig. 59 .) to the third-party certification organization. The third-party certification organization transmits the environmentally-friendly value certification data (an example thereof is depicted in Fig. 60.) to the means for inputting certification result inform ation of the apparatus for transferring eco-value based on the environmentally-friendly value ordering data and on the investigation. The means for inputting certification result information stores the environmentally-friendly value certification data in the certification database. The means for outputting the certification information acquires the environmentally-friendly value certification data from the certification database and transmits to the originator of the environmentally-friendly value.

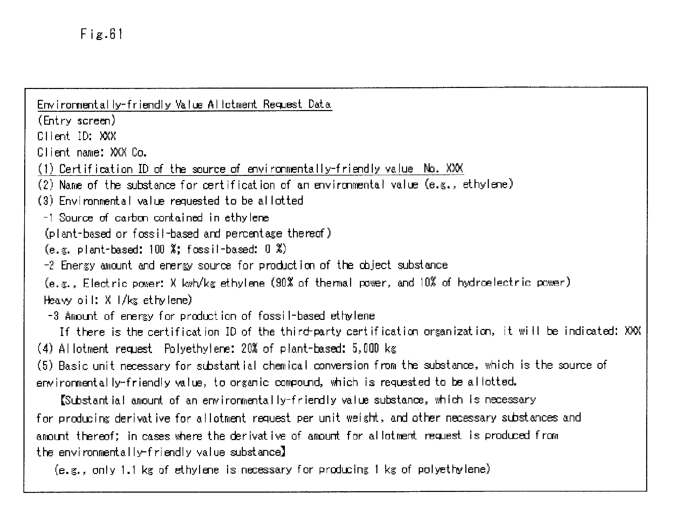

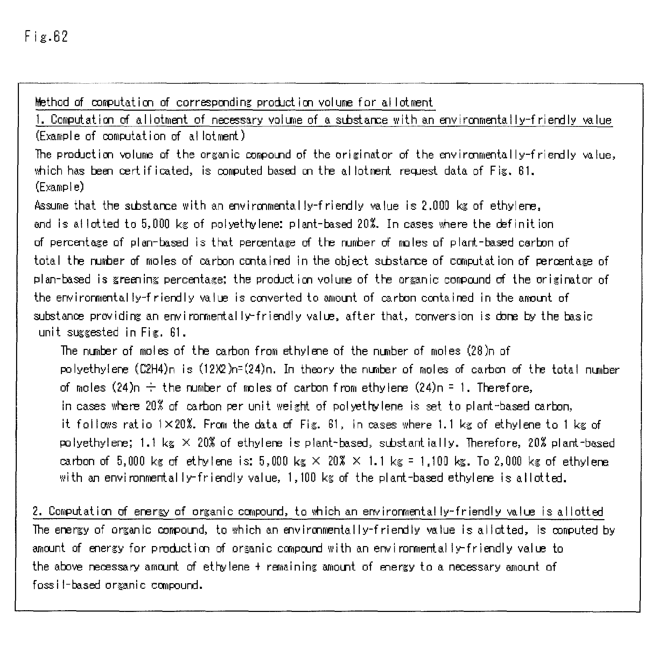

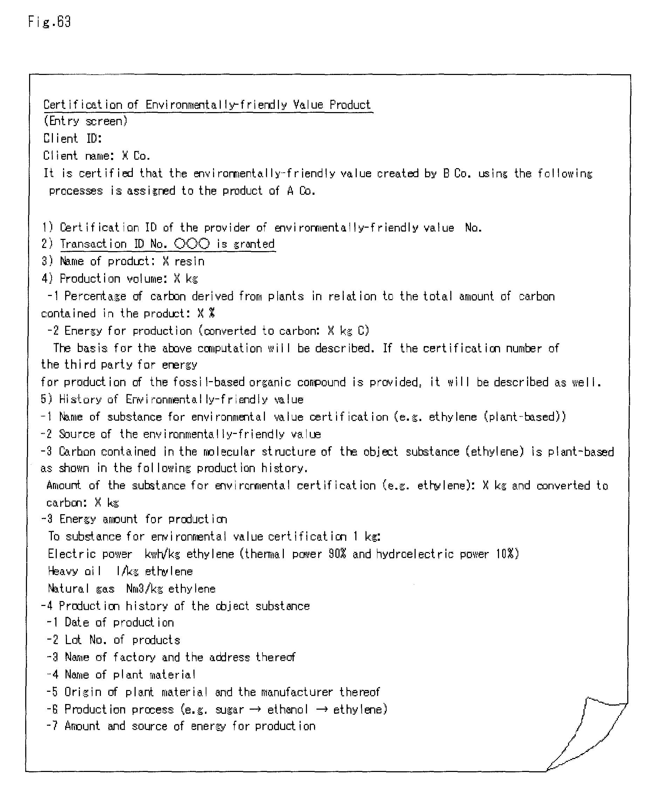

Fig. 56 is a process flow drawing of the allotment system for an environmentally-friendly value. The potential consumer of an environmentally-friendly value sends the environmentally-friendly value allotment request as an allotment information of an environmentally-friendly value (an example of an allotment request information is depicted in Fig. 61) to the means for acquiring an allotment request information of the apparatus for transferring an environmentally-friendly value. The means for acquiring an allotment request information transmits an environmentally-friendly value allotment request to the means for computing production volume to be allotted (an example of the method of computing production volume to be allotted is depicted in Fig. 62. The method of computing production volume to be allotted will be described, hereinafter). The means for computing production volume to be allotted outputs the result to the means for outputting allotment of an environmentally-friendly value. The means for outputting allotment of an environmentally-friendly value transmits a certificate of an environmentally-friendly value (an example thereof is depicted in Fig. 63) to a potential-consumer of an environmentally-friendly value. Moreover, the means for outputting allotment of an environmentally-friendly value transmits the result of the environmentally-friendly value database.

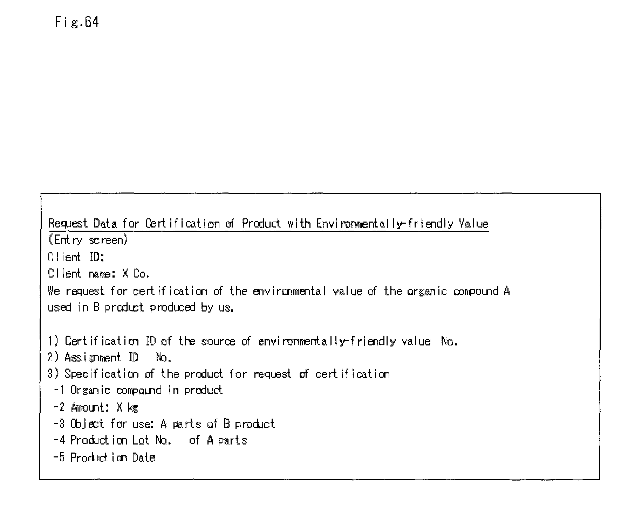

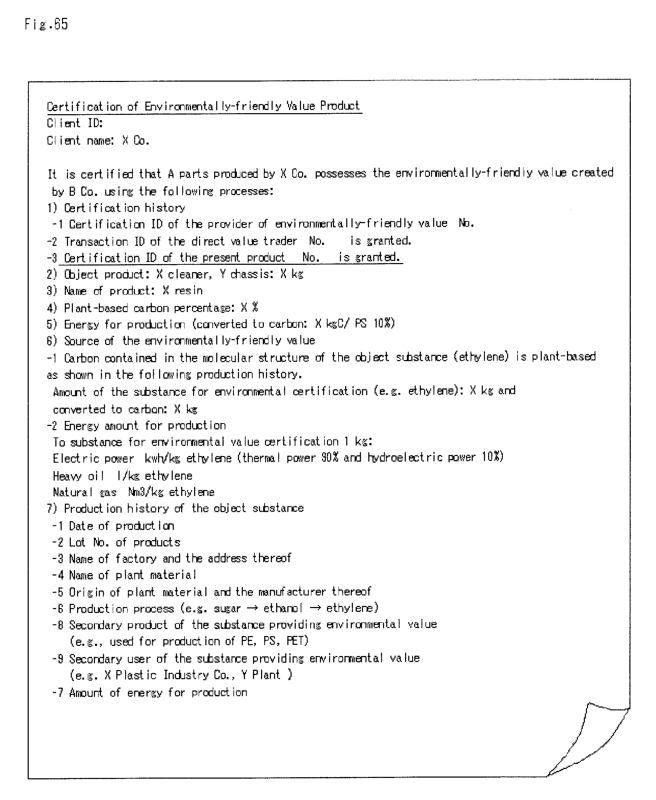

Fig. 57 is a process flow drawing of the final certification system. The user of an environmentally-friendly value 8 sends an environmentally-friendly value product certification request (an example of an environmentally-friendly value product certification request data is depicted in Fig. 64). The means for acquiring an environmentally-friendly value product certification request of the apparatus for transferring eco-value transmits the acquired environmentally-friendly value product certification request to the means for managing trading history of an environmentally-friendly value, which manages the trading history of an environmentally-friendly value. Moreover, the means for managing trading history of an environmentally-friendly value acquires information from the environmentally-friendly value database. The means for managing trading history of an environmentally-friendly value transmits the result to the means for outputting an environmentally-friendly value product certification, which outputs certification information of a product possessing an environmentally-friendly value. The means for outputting an environmentally-friendly value product certification transmits an environmentally-friendly value product certification (an example thereof is depicted in Fig. 65.) to the user of an environmentally-friendly value product. The apparatus for transferring eco-value transmits an order of a periodical audit for certification of an appropriate operation to the third-party certification organization based on the information of the environmentally-friendly value database. The third-party certification organization transmits the auditing report to the apparatus f or transferring eco-value.

Hereinafter, an example of the method of computing a production volume to be allotted in Fig. 62 will be described. Here, the "a production volume to be allotted" corresponds to information regarding the first product, which is requested to be allotted. Examples of the production volume to be allotted include: amount of organic compound of an originator of an environmentally-friendly value, which is certified, and energy of an organic compound, to which an environmentally-friendly value is allotted.

Computation of allotment of the necessary volume of a substance with an environmentally-friendly value

(Example of computation of allotment) The production volume of the organic compound of the substance of transferee of the environmentally-friendly value, which has been certified, is computed based on the allotment request data of Fig. 61.

(Example)

Assume that the substance with an environmentally-friendly value is 2.000 kg of ethylene, and is allotted to 5,000 kg of polyethylene: plant-based 20%. In cases where the definition of percentage of plant-based is that percentage of the number of moles of plant-based carbon of the total number of moles of carbon contained in the object substance of computation of percentage of plant-based is greening percentage; the production volume of the organic compound of the substance of transferee of the environmentally-friendly value is converted to an amount of carbon contained in the amount of substance providing an environmentally-friendly value. After that, conversion is done by the basic unit suggested in Fig. 61.

For example, the number of moles of the carbon from ethylene of the number of moles $(28)n$ of polyethylene $(C_2H_4)n$ is $(12 \times 2)n = (24)n$. In theory the number of moles of carbon of the total number of moles $(24)n \div$ the number of moles of carbon from ethylene $(24)n = 1$. Therefore, in cases where 20% of carbon per unit weight of polyethylene is set to plant-based carbon, it follows ratio $1 \times 20\%$. From the data of Fig. 61, in cases where 1.1 kg of ethylene to 1 kg of polyethylene; 1.1 kg $\times$ 20% of ethylene is plant-based, substantially. Therefore, 20% plant-based carbon of 5,000 kg of ethylene is: 5,000 kg $\times$ 20% $\times$ 1.1 kg = 1,100 kg. To 2,000 kg of ethylene with an environmentally-friendly value, 1,100 kg of the plant-based ethylene is allotted.

Computation of energy of organic compound, to which an environmentally-friendly value is allotted

The energy of organic compound, to which an environmentally-friendly value is allotted, is computed by the amou nt of energy for production of organic compound with an environmentally-friendly value to the above necessary amount of ethylene + remaining amount of energy to a necessary amount of fossil-based organic compound.

The tenth embodiment enables a system in which the environmentally-friendly value of the first product as an object item of trading is traded in swapping with the environmentally-friendly value of the second product at an arbitrary proportion within an appropriate scope. Trading by allotment is do ne with an organic compound produced by mixing the first and the second product or with a product produced therefrom (hereinafter, referred to as the third product). Moreover, it enables provision of allotment at an arbitrary proportion within an appropria te scope without trading the environmentally-friendly value of the first product, certification of the third product; and support of the certification, in cases where the third product is produced by mixing the first product and the second product, an environmentally-friendly value of the first product.

**Industrial Applicability**

The present invention facilitates supply of organic compounds having environmentally-friendly values by providing a support system, a certification system and a method of trading environmentally-friendly values of organic compounds, in conjunction with accompanying computer software. It also relates to a system, which enables the determination of an environmentally-friendly value of an organic compound by establishing a market in which an environmentally-friendly value of an organic compound is certified and traded via a network.

**Claims**

1. A method of transferring eco-value, in relation to a right accrued by producing a first product by using a plant-based resource, which is a method of transferring eco-value for transferring a labeling right, which is a right to label a product that the products possesses environmentally-friendly value, to an entity who wishes to exercise the labeling right with respect to a second product produced by using a fossil-based resource equivalent to said plant-based resource, wherein said method comprises;
a step of acquiring an environmentally-friendly value index, which is an index for environmentally-friendly value based on a production volume and a production process of the first product; and
a step of computing a corresponding production volume of a second product based on a production process of the second product , onto which said labeling right is exercised, in which said volume corresponds to the environmentally-friendly value index acquired by the above step of acquiring said environmentally-friendly value index.

2. The method of transferring eco-value according to Claim 1, wherein said environmentally-friendly value index corresponds to an amount of carbon derived from plant-based and/or fossil-based resources used in producing said first product.

3. The method of transferring eco-value according to Claim 1, wherein said environmentally-friendly value index corresponds to an amount of carbon derived from plant-based and/or fossil-based resources used in producing said first product; and to an amount of carbon derived from plant- and/or fossil-based resources in terms of energy in production used in said production.

4. The method of transferring eco-value according to Claim 1, wherein said environmentally-friendly value index corresponds to an amount of carbon derived from plant- and/or fossil-based resources in terms of energy in production used in producing said first product.

5. The method of transferring eco-value according to Claim 1, wherein said environmentally-friendly value index corresponds to an amount of carbon derived from plant- and/or fossil-based resources, which is contained in said first product; and to an amount of carbon derived from plant- and/or fossil-based resources in terms of energy in production used in said production.

6. The method of transferring eco-value according to Claim 1, wherein said environmentally-friendly value index corresponds to an amount of carbon derived from plant- and/or fossil-based resources, which is contained in said first product.

7. The method of transferring eco-value according to Claim 1, wherein said corresponding production volume corresponds to a production volume of a second product containing a predetermined proportion of an amount of carbon, which corresponds to the amount of carbon contained in said first product as produced.

8. The method of transferring eco-value according to Claim 1, wherein said organic compound used in producing the first product is identical to an organic compound used in producing a second product; and said corresponding production volume corresponds to the production volume of the second product produced by using an amount of said organic compound, which is a predetermined proportion of the amount of the organic compound used in producing said first product.

9. The method of transferring eco-value according to Claim 1, wherein said fossil-based resource is identical to the first product; and said corresponding production volume corresponds to a production volume of a second product produced from an amount of the fossil-based resource, which is a predetermined proportion of the amount of the first product produced.

10. The method of transferring eco-value according to any one of Claim 1 to 9, which comprises

   a step of acquiring certification request information, the gist of which is a request for certification of a labeling right;
   a step of outputting certification information including information on a corresponding production volume, based on the certification request information acquired in the step of acquiring certification request information;
   a step of acquiring transfer request information, the gist of which is a request for transfer of the labeling right received i n correspondence with the output of the certification information according to the step of outputting said certification information;
   a step of acquiring acceptance request information, the gist of which is a request for acceptance of the labeling right; and
   a step of comparing the transfer request information acquired in the step of acquiring said transfer request information, and the acceptance request information acquired in the step of acquiring acceptance request information.

11. An apparatus for transferring eco-value, in relation to a right accrued by producing a first product by using plant-based resources, which is an apparatus for transferring eco-value for transferring a labeling right, which is a right to label a product that the products possesses environmentally-friendly value, to an entity who wishes to exercise the labeling right with respect to a second product produced by using a fossil-based resource equivalent to said plant-based resource, wherein said apparatus comprises

   a means for acquiring an environmentally-friendly value index, which is an index for environmentally-friendly value based on a production volume and a production process of the first product; and
   a means for computing a corresponding production volume of a second product based on a production process of the second product, onto which said labeling right is exercised, in which said volume corresponds to the environmentally-friendly value index acquired by the means for acquiring said environmentally-friendly value index.

12. The apparatus for transferring eco-value according to Claim 11, wherein said environmentally-friendly value index corresponds to an amount of carbon derived from plant-based and/or fossil-based resources used in producing said first product.

13. The apparatus for transferring eco-value according to Claim 11, wherein said environmentally-friendly value index corresponds to an amount of carbon derived from plant-based and/or fossil-based resources used in producing said first product; and to an amount of carbon derived from plant- and/or fossil-based resources in terms of energy in production used in said production.

14. The apparatus for transferring eco-value according to Claim 11, wherein said environmentally-friendly value index corresponds to an amount of carbon derived from plant- and/or fossil-based resources in terms of energy in production used for producing said first product.

15. The apparatus for transferring eco-value according to Claim 11, wherein said environmentally-friendly value index corresponds to an amount of carbon derived from plant- and/or fossil-based resources, which is contained in said first product; and to an amount of carbon derived from plant- and/or fossil-based resources in terms of energy in production used in said production.

16. The apparatus for transferring eco-value according to Claim 11, wherein said environmentally-friendly value index corresponds to an amount of carbon derived from plant- and/or fossil-based resources, which is contained in said first product.

17. The apparatus for transferring eco-value according to Claim 11, wherein said corresponding production volume corresponds to a production volume of a second product containing a predetermined proportion of an amount of carbon, which corresponds to the amount of carbon contained in said first product as produced.

18. The apparatus for transferring eco-value according to Claim 11, wherein said organic compound used in producing the first product is identical to an organic compound used in producing a second product; and said correspond ing production volume corresponds to the production volume of the second product produced by using an amount of said organic compound, which is a predetermined proportion of the amount of the organic compound used in producing said first product.

19. The apparatus for transferring eco-value according to Claim 11, wherein said fossil-based resource is identical to the first product; and said corresponding production volume corresponds to a production volume of a second product produced from an amount of the fossil-based resource, which is a predetermined proportion of the amount of the first product produced.

20. The apparatus for transferring eco-value according to any one of Claim 11 to 19, which comprises

a means for acquiring certification request information, the gist of which is a request for certification of a labeling right;
a means for outputting certification information including information on a corresponding production volume, based on the certification request information acquired in the means for acquiring certification request information;
a means for acquiring transfer request information, the gist of which is a request for transfer of the labeling right received in correspondence with the output of the certification information according to the means for outputting said certification information;
a step of acquiring acceptance request information, the gist of which is a request for acceptance of the labeling right; and
a means for comparing the transfer request information acquired in the means for acquiring said transfer request information, and the acceptance request information acquired in the means for acquiring acceptance request information.

Fig. 1

Fig. 2

Fig.3

Fig.4

Fig.4

Fig.5

Fig.6

Fig.7

Fig.8

Fig.9

Fig.10

Fig.11

Fig.12

Fig.13

Fig.14

Fig.15

Fig.16

Fig.17

Dealer of First product                    Dealer of Second product
                                           comsumer

| Manufacturer of ethylene (plant-based) or propylene (plant-based) etc. | Manufacturer of ethylene (fossil-based) or propylene (fossil-based) etc. |

Manufacturer of plastic ⟷ Manufacturer of plastic

Manufacturer of plastic product ⟶ Manufacturer of plastic product

| Manufacturer of products in which plastic products are used | Manufacturer of products in which plastic products are used |

Retailer ⟷ Retailer

Consumer ⟷ Consumer

EP 1 605 382 A1

Fig. 18

Fig. 19

Fig. 20

Environmentally-friendly value index:

Amount of carbon contained
in First product, for 100kg is 85.7kg

Amount of carbon contained
in the second product
200 (kg) is 171.4 (kg)

Corresponding production volume Q:
Q = 100 x 0.857/0.857 =100 kg
Note: Environmentally-friendly
value does not remain on the first product.

Fig.21

First product

```
          START
            │
            ▼
┌────────────────────────────┐  ╮ S2101
│ Acquisition of first product│
│(Organic Compounds Y:100 t   │
└────────────────────────────┘
            │
            ▼
┌────────────────────────────┐  ╮ S2102
│ Acquisition of information  │
│ on production process       │
│ of first product            │
│ (Organic compounds Y:       │
│ Amount of carbon: A tons    │
└────────────────────────────┘
            │
            ▼
┌────────────────────────────────┐
│Computation of                  │
│environmentally-friendly value  │
│index                           │
│      ╭───────────────────╮     │
│    ╱ <Environmentally-fr iendly╲│
│   │    value index)            │
│   │  To Organic Compound Y:    │
│   │ 100 tons, Amount of carbon in
│    ╲  organic compound X:     ╱ │
│      ╲      A tons       ╱      │
│        ╰───────────────╯        │
└────────────────────────────────┘  ╮ S2103
            │
            ▼
        ┌──────────┐
        │   END    │
        └──────────┘
```

Second product

```
          START
            │
            ▼
┌──────────────────────────────────┐  ╮ S2104
│ Acquisition of information on     │
│ production process of first product│
│ (Organic Compounds Y:10 tons      │
│ Organic Compounds X :             │
│           Amount of carbon 0.1A t │
└──────────────────────────────────┘
            │
            ▼
┌──────────────────────────────────┐  ╮ S2105
│ Acquisition of                    │
│ environmentally-friendly value index
│ To Organic Compound Y: 100 tons,  │
│ Amount of carbon in               │
│ Organic Compound X: A tons        │
└──────────────────────────────────┘
            │
            ▼
┌──────────────────────────────────┐  ╮ S2106
│ Computing of corresponding        │
│ production volume                 │
│ Amount of carbon in               │
│ Organic Compound X: 0.1A tons     │
│      ╭─────────────────────╮      │
│    ╱   < Corresponding       ╲    │
│   │    production volume >    │   │
│   ╲ Organic Compound X:10A ton╱   │
│      ╰─────────────────────╯      │
└──────────────────────────────────┘
            │
            ▼
        ┌──────────┐
        │   END    │
        └──────────┘
```

Fig. 22

**Plant-based resouce**
- Plant-based material
- ⬇
- Organic Compound X: Amount of carbon A tons
- ⬇
- First product Organic Compound Y:100tons

⟺ equivalence

**fossil-based resouce**
- fossil-based material
- ⬇
- Organic Compound X: Amount of carbon 0.1A tons
- ⬇
- Organic Compound Y : 10tons

⬇

Second product
Organic compound Z : 30tons,
Amount of carbon 0.3A tons

Environmentally-friendly value index:

To Organic Compound Y:100tons,
Amount of carbon in organic Compound X:
A tons

Corresponding production volume Q:
Q = 30 x (0.1A)/(0.3A) =10tons
Note: Environmentally-friendly
value for (100 - 10) = 90 on the first product

Fig.23

```
            ┌─────────────────────┐
            │   Information on     │
            │    first product    │
            │                     │
            │ Production volume of │
            │  first product, etc. │
            └─────────────────────┘
                        │
                        ▼
      ┌──────────────────────────────────────┐
      │  ┌────────────────────────────┐       │
      │  │ Means for acquiring        │       │
      │  │ environmentally-friendly   │───────┼──── 2 3 0 1
      │  │ value index                │       │
      │  └────────────────────────────┘       │
      │              │                        │
      │              ▼                        │
┌──────────┐│  ┌────────────────────────────┐       │
│Information││  │ Means for computing        │       │
│ on       ││  │ corresponding production   │───────┼──── 2 3 0 2
│ second   ││  │ volume                     │       │
│ product  ││  └────────────────────────────┘       │
│          ││                                 │
│Production││       Apparatus of transferring │
│volume of ││             eco-value           │
│second    │└──────────────────────────────────────┘
│product,  │                    │
│etc       │                2 3 0 0
└──────────┘
```

Information on
first product

Production volume of
first product, etc.

Means for acquiring
environmentally-friendly
value index

2 3 0 1

Information on
second product

Production volume of
second product, etc

Means for computing
corresponding production
volume

2 3 0 2

Apparatus of transferring
eco-value

2 3 0 0

Fig. 24

Fig. 25

Fig. 26

Fossil-based resouce M:
Amount of carbon β 2A kg

Plant-based resouce V:
Amount of carbon α 2A kg

Fossil-based resouce U:
Amount of carbon β 1A kg

Plant-based resouce U:
Amount of carbon α 1A kg

First product
Organic Compound X :
A kg

Plant-based resouces

Equivalence

Fossil-based resouce M:
Amount of carbon β 3B kg

Fossil-based resouce M:
Amount of carbon (α 1+β 1)B kg

Organic Compound X :
B kg

Fossil-based resouces

Second product
Organic Compound Y :
C kg (Amount of Carbon γ C kg)

Environmentally-friendly value index:
To First product A kg, Amount of carbon derived from
Plant-based resouce U α 1A kg and/or Amount of
carbon derived from fossil-based resouce U β 1A kg,
and Amount of carbon derived from plant-based
resouce V in terms of energy α 2A kg and/or Amount
of carbon derived from fossil-based resouce U
in terms of energy β 2A kg

Corresponding production volume Q:
(Case one: A is B or greather than B)
Q = C x ((B/A) x (α 1+α 2) A )/(γ C) = B x (α 1+α 2)
/ γ (kg)
Note) Environmentally-friendly value for
(a-b) (kg) remains on First product.
(Case two: A is less than B)
Q = C x (α 1 + α 2)A / (γ C) = A x
(α 1+α 2)/ γ (kg)
Note) Environmentally-friendly value does not remain
on First product.

Fig. 27

Fossil-based resouce M:
Amount of carbon
(β 2A+α 2B) kg

Plant-based resouce V:
Amount of carbon
α 2(A-B) kg

Fossil-based resouce U:
Amount of carbon
(β 1A+α 1B) kg

Plant-based resouce U:
Amount of carbon
α 1(A-B) kg

First product
Organic Compound X :
A kg

Plant-based resouces

Equivalence

Fossil-based resouce M:
Amount of carbon
(β 3-α 2)B kg

Plant-based resouce V:
Amount of carbon
α 2B kg

Fossil-based resouce U:
Amount of carbon
β 1B kg

Plant-based resouce U:
Amount of carbon
α 1B kg

Organic Compound X :
B kg

fossil-based resouces

Second product
Organic compound Y :
C kg (Amount of Carbon γ C kg)

Environmentally-friendly value index:
To First product A kg, Amount of carbon derived from
Plant-based resouce U α 1A kg and/or Amount of
carbon derived from Fossil-based resouce U β 1A kg,
and Amount of carbon derived from Plant-based
resouce V in terms of energy α 2A kg and/or Amount
of carbon derived from Fossil-based resouce U
in terms of energy β 2A kg

Corresponding production volume Q:
(Case one: A is B or greater than B)
Q = C x ((B/A) x (α 1+α 2) A )/(γ C) = B x (α 1+α 2)
/ γ (kg)
Note) Environmentally-friendly value for
(a-b) (kg) remains on the first product.
(Case two: A is less than B)
Q = C x (α 1 + α 2)A / (γ C) = A x
(α 1+α 2)/ γ (kg)
Note) Environmentally-friendly value does not remain
on the first product.

65

Fig. 28

Fossil-based
resouce W:
Amount of carbon
β 1A kg

Plant-based
resouce V:
Amount of carbon
α A kg

First product
Organic Compound X : A kg

Plant-based resouces

Equivalence

Fossil-based resouce W:
Amount of carbon β 2B kg

Organic compound X :
B kg

Fossil-based resouces

Second product
Organic Compound Y :
C kg (Amount of Carbon γ C kg)

Environmentally-friendly value index:
To first product A kg, Amount of carbon derived
from Plant-based resouce U α 1A kg and/or Amount
of carbon derived from fossil-based resource U
β 1A kg,
and Amount of carbon derived from plant-based
resouce V in terms of energy α 2A kg and/or Amount
of carbon derived from fossil-based resource U
in terms of energy β 2A kg

Corresponding production volume Q:
(Case 1: A is B or greater than B)
Q = C x ((B/A) x (α A)/(γ C) = B x α /γ  kg
Note: Environmentally-friendly value for
(a-b) (kg) remains on the first product.
(Case 2: A is less than B)
Q = C x (α A) / (γ C) = A x α /γ  kg
Note: Environmentally-friendly value does not remain
on the first product.

Fig. 29

Fossil-based
resouce U:
Amount of carbon
(β 1A+α B) kg

Plant-based
resouce V:
Amount of carbon
α 1(A-B) kg

First product
Organic Compound X :
A kg

Plant-based resouces

equivalence

Fossil-based
resouce W:
Amount of carbon
(β 2-α )B kg

Plant-based
resouce V :
Amount of carbon
α B kg

Organic Compound X :
B kg

Fossil-based resouces

Second product
Organic Compound Y :
C kg (Amount of Carbon γ C kg)

Environmentally-friendly value index:
To first product A kg, Amount of carbon derived
from Plant-based resouce U α 1A kg and/or Amount
of carbon derived from fossil-based resouce U
β 1A kg,
and Amount of carbon derived from plant-based
resouce V in terms of energy α 2A kg and/or Amount
of carbon derived from fossil-based resource U
in terms of energy β 2A kg

Corresponding production volume Q:
(Case 1: A is B or greater than B)
Q = C x ((B/A) x (α A)/(γ C) = B x α /γ  kg
Note: Environmentally-friendly value for
(a-b) (kg) remains on the first product.
(Case 2: A is less than than B)
Q = C x (α A) / (γ C) = A x α /γ  kg
Note: Environmentally-friendly value does not remain
on the first product.

EP 1 605 382 A1

Fig. 30

Fig. 31

67

Fig. 32

Fig. 33

Fig. 34

Fig. 35

Fig. 36

Plant-based resource is mainly used

Production process
of first product

First product : Organic Compound X: A tons
Amount of carbon A×α tons
(example :A=20(t),Amount of carbon10t)

Amount of carbon (plant-based)
used as material : a tons

Amount of carbon (fossil-based)
used as material : b tons)

Plant -based resouces

Equivalence

Fossil-based resource is mainly used

Production process
of second product

Organic compounds X : B tons :
Amount of carbon B×α
(Example : B= 10(t), Amount of carbon 9tons)

Amount of carbon (fossil-based)used as material : e tons

Fossil-based resources

Second product Y :C tons :
Amount of carbon C×β tons
(Example : C=8 (t), Amount of carbon 4 tons)

Organic compounds X used as material: B tons

Environmentally-friendly value index
first product Y in predetermined
proportion R: A tons
(Amount of carbon A × α tons)

Corresponding production volume
Q: Production volume of second product produced from fossil-based resource,
which is identical with the fossil-based resource of first product and of
which amount is the amount in predetermined proportion R
Relation between Amount of organic compound X as first product and
Amount of Organic Compound X, identical with the organic compound as
first product, used in Second product in predetermined proportion
R: is represented by the following formula.
(However, since second product is 8 tons, production volume of second product
to production volume of first product, for10 tons becomes 8 tons)

Fig.37

Apparatus for transferring eco-value

Fig.38

```
                    ┌─────────────┐
                    │  S T A R T  │
                    └─────────────┘
                           │
   ┌───────────────────────────────────────────────┐      S 3 8 0 1
   │ Acquisition of transfer request information    │
   │ and acceptance request information             │
   └───────────────────────────────────────────────┘
                           │                                S 3 8 0 2
   ┌───────────────────────────────────────────────┐
   │      Output of certification information       │
   └───────────────────────────────────────────────┘      S 3 8 0 3
                           │
   ┌───────────────────────────────────────────────┐
   │  Acquisition of transfer request information   │
   └───────────────────────────────────────────────┘
                           │                                S 3 8 0 4
   ┌───────────────────────────────────────────────┐
   │  Acquisition of acceptance request information │
   └───────────────────────────────────────────────┘
                           │                                S 3 8 0 5
   ┌───────────────────────────────────────────────┐
   │ Acquisition of transfer request               │
   │ information and acceptance request information │
   └───────────────────────────────────────────────┘
                           │
                    ┌─────────────┐
                    │   E N D     │
                    └─────────────┘
```

Fig.39

Network (Internet)

| Environmentally-friendly value creator | The third-party certification organization | System operator | Consumer of the environmentally-friendly value product | Manufacturer consuming the environmentally-friendly value products and manufacturing products by using them |
|---|---|---|---|---|
| Organic compounds (Plant-based) | | The apparatus for transferring eco-value | The fossil-based organic compound and the product in which the fossil-based organic compound is used | |

Initial certification system

Certification request for environmentally-friendly value

Information data of certification request for environmentally-friendly value (Fig. 42)

Certification request for environmentally-friendly value (Fig.43)

Means for acquiring certification request information

Means for outputting certification order information

Investigation by the third-party certification organization

Means for inputting certification result information

Certification Data for environmentally-friendly value (Fig.44)

Certification information database

Certification data for environmentally-friendly value (Fig. 44)

Means for outputting certification information

To Means for computing production volume of transferred product in Fig. 40

Fig. 40

Network (Internet)

| Environmentally-friendly value creator | The third-party certification organization | System operator | Consumer of the environmentally-friendly value product | Manufacturer consuming the environmentally-friendly value products and manufacturing products by using them |
|---|---|---|---|---|
| Organic compounds (Plant-based) | | The apparatus for transferring eco-value | The fossil-based organic compound and the product in which the fossil-based organic compound is used | |

Trading system of the environmentally-friendly value

Transfer request for the environmentally-friendly value

Means for acquiring transfer request information

Request data for transfer (Fig. 45)

Means for computing transfer index

Means for acquiring acceptance request

From the certification information database in Fig. 39

Means for computing acceptance index

Acceptance request for the environmentally-friendly value

Request data for acceptance (Fig. 47)

Means for comparison

Entry screen of transferable item information and transfer approval (Fig. 49)

Means for outputting transferable item information

Means for outputting acceptance item information

Entry screen of transferable item information and acceptance approval (Fig. 50)

Means for comparison

Transfer approval

Means for outputting trade contract information

Acceptance approval

Contract

Contract

Receive

Means for inputting/outputting payment information

payment

Environmentally-friendly value transfer deed

Means for outputting transfer/acceptance of the environmentally-friendly value

Acceptance of the environmentally-friendly value and certificate of product (Fig. 51)

To Fig. 41

Fig. 41

**Network (Internet)**

| Environmentally-friendly value creator Organic compounds (Plant-based) | The third-party certification organization | System operator The apparatus for transferring eco-value | Consumer of the environmentally-friendly value product The fossil-based organic compound and the product in which the fossil-based organic compound is used | Manufacturer consuming the environmentally-friendly value products and manufacturing products by using them |

**Final certification system**

From Means for outputting the certificate of transfer or acceptance of environment-ally-friendly value in fig. 40

Environmentally-friendly value transaction database

Means for acquiring certification request of the environmentally-friendly value product

Means for management of transaction history of the environmentally-friendly value

Means for outputting certification of the environment-ally-friendly value product

Request for periodical audit (for certification of appropriate operation)

Auditing report

Acceptance of the environmentally-friendly value

8. Request for certification of the environmentally-friendly value product

Request data for certification of the environmentally-friendly value product (Fig. 53)

Certification of the environmentally-friendly value product (Fig. 54)

74

Fig.42

Environmentally-friendly Value Certification Data

    (Entry screen)

    Client ID: XXXXXX

    Client name : XX Co.

We request for acquisition of an environmentally-friendly value certification by a third party
with respect to the following items:

1) Substance for environmental value certification (e.g. ethylene (plant-based))
2) Certification items of environmentally-friendly value
 -1 Origin of carbon contained in the object substance
 (Is carbon contained in ethylene plant- or fossil-based?)
 -2 Energy amount and energy source for production of the object substance
 (e.g. Electric power: X kwh/kg ethylene (thermal power 90% and hydroelectric power 10%) Heavy oil:
 X l/kg ethylene
3) Quantity (e.g. ethylene 100 (kg))
4) Production history of the object substance
 -1 Date of production
 -2 Lot No. of products
 -3 Name of factory and the address thereof
 -4 Name of plant material
 -5 Origin of plant material and the manufacturer thereof
 -6 Production process (e.g. sugar → ethanol → ethylene)
 -7 Amount and source of energy for production
5) Usage for the object substance
 (e.g., used for production of PE, PS, PET)
6) Secondary user of the object substance
 (e.g. X Plastic Industry Co., Y Plant )

Fig.43

<u>Environmentally-friendly Value Certification Ordering Data</u>

XX Certification Organization
We requst for certification of Environmentally-friendly value of the following data.
Certification ID of the origin of environmentally-friendly value  No. is granted to
Client ID:
Client name: X Co.
Address
POC (TEL, FAX, E-mail)
1) Object substance for environmental value certification (e.g. ethylene (plant-based))


1) Object substance for environmental value certification (e.g. ethylene (plant-based))
2) Certification items of environmentally-friendly value
 -1 Origin of carbon contained in the object substance
 (Is carbon contained in ethylene plant- or fossil-based?)
 -2 Energy amount and energy source for production of the object substance
 (e.g. Electric power: X kwh/kg ethylene (thermal power 90% and hydroelectric power 10%) Heavy oil:
 X l/kg ethylene
3) Quantity (e.g. ethylene 100 (kg))
4) Production history of the object substance
 -1 Date of production
 -2 Lot No. of products
 -3 Name of factory and the address thereof
 -4 Name of plant material
 -5 Origin of plant material and the manufacturer thereof
 -6 Production process (e.g. sugar → ethanol → ethylene)
 -7 Amount and source of energy for production
5) Plan for use of the object substance
   (e.g. used for production of PE, PS, PET)
6) Secondary user of the object substance
   (e.g. X Plastic Industry Co., Y Plant )

Fig.44

Environmentally-friendly Value Certification Data

Environmentally-friendly value of the product produced by the following manufacturer
is certified as below.
Client ID:
Client name: X Co.
Certification ID of the origin of environmentally-friendly value  No.

1) Object substance for environmental value certification (e.g. ethylene (plant-based))
2) Certification items of environmentally-friendly value

-1 Carbon contained in the molecular structure of the object substance X is plant-based as shown
in the following production history.
  Amount of object substance (e.g. ethylene): X kg
-2 Energy amount for production
  To substance for environmental value certification 1 kg:
  Electric power: X kwh/kg ethylene (thermal power 90% and hydroelectric power 10%)
  Heavy oil: X l/kg ethylene
  Natural gas: X Nm3/kg ethylene
3) Production history of the object substance
 -1 Date of production
 -2 Lot No. of products
 -3 Name of factory and the address thereof
 -4 Name of plant material
 -5 Origin of plant material and the manufacturer thereof
 -6 Production process (e.g. sugar → ethanol → ethylene)
 -7 Amount and source of energy for production
4) Usage for the object substance
  (e.g., used for production of PE, PS, PET)
5) Secondary user of the object substance
  (e.g. X Plastic Industry Co., Y Plant )

Certifier:   Certification Organization   (month)   (date)  (year)

                         (Digital signature)

Fig.45

Transfer Request Data    | Reference No. XXX |

(Entry screen)
Client ID: XXX
Client name: XXX Co.
(1) Certification ID of the source of environmentally-friendly value  No. XXX
(2) Name of the substance of transferor of an environmental value (e.g., ethylene)
(3) Environmental value requested to be transferred
 -1 Source of carbon contained in the object substance
 (plant-based: XX %; fossil-based: YY %)
 (e.g. plant-based: 100 %; fossil-based: 0 %)
 -2 Energy amount and energy source for production of the object substance
 Amount of carbon in which fossil-based resource is used may be used as conversion.
 (e.g., Electric power: X kwh/kg ethylene (90% of thermal power, and 10% of hydroelectric power)
 Heavy oil: X l/kg ethylene
(4) Quantity: XX kg in object substance, subscription to sale of forward contracts possible other than spots
 (e.g., ethylene 100 kg) (e.g., 1,000 kg by Y month of 20XX)
(5) Suggested transfer price: Unit price: X yen/ kg ethylene environmental value
※ The entry screen changes according to the trading types, i.e., trades involving prices designated
by buyers or sellers, auction, and reverse-auction.
※ The transfer price is may be indicated, inclusive of the source of carbon contained in the product
and the energy for production, or itemized

Fig.46

Method of computation of transfer index
(1)
The production volume of the first product is converted to the amount of plant-based carbon
(X kg of the plant-based carbon) of the substance of transferor of an environmentally-friendly
value (the first product).
(Example)
In case of ethylene, the amount of plant-based carbon is computed from the molecular weight
by using the number of moles.
  Ethylene: C2H4, the molecular weight: 28 and the number of moles: 24
  Amount of ethylene: X kg ×24÷28= Y kg carbon (I)
  The percentage of the plant-based carbon from the transfer request data of Fig. 45 is multiplied.
    (I)× percentage of plant-based carbon: X % = Y kg carbon  (II)
(2)
Conversion to a unit price: Conversion to a suggested price for transfer per unit weight of
plant-based carbon (X yen/ plant-based carbon kg)
(Example)
Conversion to unit price of the plant-based carbon of the suggested price for transfer
    Unit price: X yen/ kg ethylene environmental value ÷ (II)
(3)
Conversion of energy for production: Conversion to the energy for production per unit carbon is made.
(Example)
The energy for production of unit weight of the substance of transferor of an environmentally-friendly
value is divided by the total amount of carbon.

Fig.47

Acceptance Request Data    | Referece No. XXX |
(Entry screen)
Client ID: XXX
Client name: XXX Co.
(1) Name of the object substance for acceptance of environmental value and history thereof
 Name of substance: XXX (e.g., polystylene)
 History
 - Material name and basic unit
e.g., 0.3 kg of Naphtha-based ethylene and 0.8 kg of Naphtha-based benzene,
     Amount of styrene-monomer: 1.1 kg
 - Manufacturer of material, Manufacturing plant
 - Energy for production
(2) Classification of swap or allotment of value: swap ◎, allotment ◎
  In case of allotment, the data is necessary, which indicates the purchase of the source of substance
 for environmentally-friendly value as  in a system in which substances with an actual of
 environmentally-friendly value are traded.
(3) Purpose for purchase of value
 -1 For a grant of an environmentally-friendly value to a product ◎
 -2 For speculation ◎
(4) Environmental value requested for acceptance
  -1 Percentage of plant-based carbon: X% (e.g., 10%)
   (X% of plant-based carbon of total number of molecular of carbon is required)
 -2 Existence of request for swap or allotment of energy for production
(5) Quantity: X kg (e.g., in 100 kg of polystyrene)
   Offer of subscription of sale of forward contracts other than spot may be permitted.
(6) Suggested price for acceptance: X yen/kg of Y% Z of organic compound
   (e.g., X yen/kg of 10% of plant-based polystyrene)
* The entry screen changes according to the trading types, i.e., trades involving prices designated
by buyers or sellers, auction, and reverse-auction

Fig.48

Method of computation of production volume for acceptance
(1)
The substance of transferee of an environmentally-friendly value (the second product)
is converted to the amount of carbon requesting for an environmentally-friendly value
(X kg of the plant-based carbon).
(Example)
To polystyrene: 100 kg, 10% of an environmentally-friendly value is required: Polystyrene
is $(C6H5-CH=CH2)n$, total number of moles $(104)n$, and the number of moles of carbon:
$(12 \times 8)n=(96)n$; therefore, the unit weight of polystyrene X: $96 \div 104$
Moreover, the 10% of carbon requires the environmentally-friendly value, therefore:
1 kg$X96 \div 104X10\%=0.923$ kg C (III) Furthermore, in case of considering production loss,
the conversion of basic unit is done.
(2)
Conversion to a unit price: Conversion to a unit price per unit of the acceptance of
the environmentally-friendly value (X yen/ plant-based carbon kg)
(Example)
X yen/ kg 10% plant-based polystyrene $\div$ (III)
(3)
Selection of the object substance of value swappable or value allottable and percentage of
swap or allotment. (according to the conditions of trade)
(Example)
Assume that the object substance, to which an environmentally-friendly value is required to be allotted,
is polystyrene. Since polystyrene is produced by deriving ethylene and benzene, if derivative
is included in the conditions, ethylene, benzene, and polystyrene are selected as the object of
acceptance of value, and they are used for data matching. In cases where polystyrene is produced from
ethylene and benzene, and the percentage of carbon from ethylene is 25%; the substance of transferee of
the environmentally-friendly value is matched with ethylene within the scope of 25% at maximum.
(4)
Conversion of energy for production: conversion to energy for production per unit carbon.
(Example)
The energy for production if unit weight of the substance of transferee of the environmentally-friendly
value is divided by the total amount of carbon.

# EP 1 605 382 A1

Fig. 49

**Entry screen (output screen) of transferable item information and transfer approval**

Client ID: XXXXX
Client name: X Co

| verifi-cation | Certification of the source of the environmentally-friendly value | Substance for the environmentally-friendly value | | | Amount | Possible transferee | Possible sale price | | Energy amount after conversion | Substance of trading partner | Sales approval | Swap/Allotment |
|---|---|---|---|---|---|---|---|---|---|---|---|---|
| | | Substance name | | Spot / Future | | | Origin of carbon | Energy | | | | |
| XXXXX | XXXXXXX | ethylene | | Spot | XXkg | A chemical | XXX/kg | XXX/kg | — | ethylene | Tranfer appro-val button | Allotment |
| XXXXX | XXXXXXX | ethylene | | Spot | XXkg | B products | XXX/kg | XXX/kg | XXkgC/kg ethylene | polystyrene | Tranfer appro-val button | Swap |
| XXXXX | XXXXXXX | ethylene | | Spot | XXkg | A chemical | XXX/kg | XXX/kg | — | polystyrene | Tranfer appro-val button | Allotment |
| XXXXX | | ethylene | | Forward subscription | XXkg | C motors | Variable price X/kg | XXX/kg | XXkgC/kg ethylene | PET | Tranfer appro-val button | Swap |
| XXXXX | XXXXXXX | propylene | | Spot | XXkg | B products | XXX/kg | XXX/kg | XXkgC/kg propylene | poly-propylene | Tranfer appro-val button | Swap |
| XXXXX | XXXXXXX | propylene | | Forward subscriptio | XXkg | A chemical | Variable price X/kg | XXX/kg | XXkgC/kg propylene | propylene | Tranfer appro-val button | Swap |
| XXXXX | XXXXXXX | propylene | | Spot | XXkg | C motors | XXX/kg | XXX/kg | XXkgC/kg propylene | poly-propylene | Tranfer appro-val button | Swap |

Fig. 50

**Entry screen (output screen) of transferable item information and transfer approval**

Client ID: XXXXX
Client name: X Co

| verifi-cation No. | Certification of the source of the environmentally-friendly value | Substance for the environmentally-friendly value | | | Amount | Possible transferee | Possible sale price | | Energy amount after conversion | Substance of trading partner | Sales approval | Swap/Allotment |
|---|---|---|---|---|---|---|---|---|---|---|---|---|
| | | Substance name | | Spot / Forward | | | Origin of carbon | Energy | | | | |
| XXXXX | XXXXXXX | ethylene | | Spot | XXkg | A chemical | XXX/kg | XXX/kg | XXkgC/kg ethylene10% | ethylene | Tranfer appro-val button | Allotment |
| XXXXX | XXXXXXX | poly-styrene | | Spot | XXkg | B products | XXX/kg | XXX/kg | XXkgC/kgpoly-styrene20% | ethylene | Tranfer appro-val button | Allotment |
| XXXXX | | propylene | | Forward Subscription | XXkg | A chemical | XXX/kg | XXX/kg | XXkgC/kg propylene10% | propylene | Tranfer appro-val button | Swap |

Means for comparison

Flow of the means for comparison

1) The transfer request data and the acceptance request data, which correspond to the value exchange trading or the value assignment trading, are matched based on the data of 4 the means for computing the corresponding production volume of transfer and 6 the means for computing the corresponding production volume of acceptance.

2) According to the data matched, conversion is executed on the data, which is outputted to 7 Entry screen (output screen) for the transferable item information and the transfer approval and 8 Entry screen (output screen) for the acceptable item information and the acceptance approval. After that, the data is transmitted to the means for outputting information.

Fig.51

Acceptance of Environmentally-friendly Value and Certification of product
Client ID:
Client name: A Co.

It is certified that A Co. accepts the environmentally-friendly value created by B Co. using
the following processes and that the product possesses the following environmental value:

1) Certification ID of the provider of environmentally-friendly value  No.
2) Transaction ID No. ○○○ is granted
3) Name of product: X resin
4) Production volume: X kg

 -1 Percentage of carbon derived from plants in relation to the total amount of carbon
contained in the product: X %
 -2 Energy for production (converted to carbon: X kg C)

  The basis for the above computation will be described. If the certification number of
the third party for energy
for production of the fossil-based organic compound is provided, it will be described as well.
5) History of Environmentally-friendly value
-1 Name of substance for environmental value certification (e.g. ethylene (plant-based))
-2 Source of the environmentally-friendly value

-3 Carbon contained in the molecular structure of the object substance (ethylene) is plant-based
as shown in
the following production history.

  Amount of the substance for environmental certification (e.g. ethylene): X kg and converted to
  carbon: X kg
-3 Energy amount for production
  To substance for environmental value certification 1 kg:
  Electric power  kwh/kg ethylene (thermal power 90% and hydroelectric power 10%)
  Heavy oil  l/kg ethylene
  Natural gas  Nm3/kg ethylene
-4 Production history of the object substance
 -1 Date of production
 -2 Lot No. of products
 -3 Name of factory and the address thereof
 -4 Name of plant material
 -5 Origin of plant material and the manufacturer thereof
 -6 Production process (e.g. sugar → ethanol → ethylene)
 -7 Amount and source of energy for production
 -8 Secondary product of the substance providing environmental value
    (e.g., used for production of PE, PS, PET)
 -9 Secondary user of the substance providing environmental value
    (e.g. X Plastic Industry Co., Y Plant )

Fig.52

Acceptance of Environmentally-friendly Value and Certification of transferability
Client ID:
Client name: A Co.
It is certified that A Co. accepts the environmentally-friendly value created by B Co. using
the following processes and that the product possesses the following transferable environmental value

1) Certification ID of the provider of environmentally-friendly value  No.
2) Transferable transaction ID No.    is granted
3) Name of product: X resin
4) Production volume: X kg

 -1 Percentage of carbon derived from plants in relation to the total amount of carbon
contained in the product: X %
 -2 Energy for production (converted to carbon: X kg C)

  The basis for the above computation will be described. If the certification number of
the third party for energy
for production of the fossil-based organic compound is provided, it will be described as well.
5) History of Environmentally-friendly value
-1 Name of substance for environmental value certification (e.g. ethylene (plant-based))
-2 Source of the environmentally-friendly value

-3 Carbon contained in the molecular structure of the object substance (ethylene) is plant-based
as shown in
the following production history.

  Amount of the substance for environmental certification (e.g. ethylene): X kg and converted to
  carbon: X kg
-3 Energy amount for production
  To substance for environmental value certification 1 kg:
  Electric power  kwh/kg ethylene (thermal power 90% and hydroelectric power 10%)
  Heavy oil  l/kg ethylene
  Natural gas  Nm3/kg ethylene
-4 Production history of the object substance
 -1 Date of production
 -2 Lot No. of products
 -3 Name of factory and the address thereof
 -4 Name of plant material
 -5 Origin of plant material and the manufacturer thereof
 -6 Production process (e.g. sugar → ethanol → ethylene)
 -7 Amount and source of energy for production
 -8 Secondary product of the substance providing environmental value
   (e.g., used for production of PE, PS, PET)
 -9 Secondary user of the substance providing environmental value
   (e.g. X Plastic Industry Co., Y Plant )

Fig.53

```
Request Data for Certification of Product with Environmentally-friendly Value
(Entry screen)
Client ID:
Client name: X Co.

We request for certification of the environmental value of the organic compound A used in
B product produced by us.

1) Certification ID of the source of environmentally-friendly value  No.
2) Transaction ID (direct value trader) No.
3) Specification of the product for request of certification
 -1 Organic compound in product
 -2 Amount: X kg
 -3 Object for use: A parts of B product
 -4 Production Lot No.   of A parts
 -5 Production Date
```

Fig.54

Certification of Environmentally-friendly Value Product

Client ID:

Client name: X Co.

It is certified that A parts produced by X Co. possesses the environmentally-friendly value created by B Co. using the following processes:

1) Certification history

 -1 Certification ID of the source of environmentally-friendly value  No.

 -2 Transaction ID (direct value trader) No.

 -3 Certification ID of product   No.   is granted.

2) Object product: X cleaner, Y chassis: X kg

3) Name of product: X resin

4) Plant-based carbon percentage: X %

5) Energy for production (converted to carbon: X kgC/ PS 10%)

6) Source of the environmentally-friendly value

-1 Carbon contained in the molecular structure of the object substance (ethylene) is plant-based as shown in the following production history.

 Amount of the substance for environmental certification (e.g. ethylene): X kg and converted to carbon: X kg-2 Energy amount for production

 To substance for environmental value certification 1 kg:

 Electric power  kwh/kg ethylene (thermal power 90% and hydroelectric power 10%)

 Heavy oil  l/kg ethylene

 Natural gas  Nm3/kg ethylene

-2 Energy amount for production

 To substance for environmental value certification 1 kg:

 Electric power  kwh/kg ethylene (thermal power 90% and hydroelectric power 10%)

 Heavy oil  l/kg ethylene

 Natural gas  Nm3/kg ethylene

7) Production history of the object substance

 -1 Date of production

 -2 Lot No. of products

 -3 Name of factory and the address thereof

 -4 Name of plant material

 -5 Origin of plant material and the manufacturer thereof

 -6 Production process (e.g. sugar → ethanol → ethylene)

 -8 Secondary product of the substance providing environmental value

    (e.g., used for production of PE, PS, PET)

 -9 Secondary user of the substance providing environmental value

    (e.g. X Plastic Industry Co., Y Plant )

 -7 Amount of energy for production

 -8 Secondary product of the substance providing environmental value

    (e.g., used for production of PE, PS, PET)

 -9 Secondary user of the substance providing environmental value

    (e.g. X Plastic Industry Co., Y Plant )

    (e.g. X Plastic Industry Co., Y Plant )

Fig.55

Network
(Internet)

**Initial certification system**

| Environmentally-friendly value creator | The third-party certification organization | System operator | Consumer of the environmentally-friendly value product | Manufacturer consuming the environmentally-friendly value products and manufacturing products by using them |
|---|---|---|---|---|

Environmentally-friendly value creator

Organic compounds (Plant-based)

The apparatus for transferring eco-value

Consumer of the environmentally-friendly value product

The fossil-based organic compound and the product in which the fossil-based organic compound is used

Certification request for environmentally-friendly value

Means for acquiring certification request information

Information data of certification request for environmentally-friendly value (Fig. 42)

Certification request for environmentally-friendly value (Fig. 59)

Means for outputting certification order information

Investigation by the third-party certification organization

Means for inputting certification result information

Certification for environmentally-friendly value (Fig. 60)

Certification information database

Means for outputting certification information database

Certification data for environmentally-friendly value (Fig. 44)

To Means for acquiring request information of assignment in Fig. 56

---

Fig.56

Network
(Internet)

**Final certification system**

| Environmentally-friendly value creator Organic compounds (Plant-based) | The third-party certification organization | System operator | Consumer of the environmentally-friendly value product | Manufacturer consuming the environmentally-friendly value products and manufacturing products by using them |
|---|---|---|---|---|

The apparatus for transferring eco-value

The fossil-based organic compound and the product in which the fossil-based organic compound is used

From the certification information database in Fig. 55

Means for acquiring assignment request information

3. Request for assignment of the environmentally-friendly value

Request data for assignment Fig. 61)

Means for computing the assigned production volume

Method of computing the assigned production volume (Fig. 62)

Means for outputting the assignment of the environmentally-friendly value

Certificate of the environmentally-friendly value product (Fig. 63)

To the environmentally-friendly value assignment database in Fig. 57

Fig. 57

Fig.58

Environmentally-friendly Value Certification Request Information Data

(Entry screen)

Client ID: XXXXXX

Client name : XX Co.

We request for acquisition of an environmentally-friendly value certification by a third party with respect to the following items:

1) Substance for environmental value certification (e.g. ethylene (plant-based))
2) Certification items of environmentally-friendly value
 -1 Origin of carbon contained in the object substance
 (Is carbon contained in ethylene plant- or fossil-based?)
 -2 Energy amount and energy source for production of the object substance
 (e.g. Electric power: X kwh/kg ethylene (thermal power 90% and hydroelectric power 10%) Heavy oil: X l/kg ethylene
3) Quantity (e.g. ethylene 100 (kg))
4) Production history of the object substance
 -1 Date of production
 -2 Lot No. of products
 -3 Name of factory and the address thereof
 -4 Name of plant material
 -5 Origin of plant material and the manufacturer thereof
 -6 Production process (e.g. sugar → ethanol → ethylene)
 -7 Amount and source of energy for production
5) Usage for the object substance
 (e.g., used for production of PE, PS, PET)
6) Secondary user of the object substance
 (e.g. X Plastic Industry Co., Y Plant )

Fig.59

Certification ID of the provider of environmentally-friendly value  No. is granted to

XX Certification Organization
We requst for certification of Environmentally-friendly value of the following data.
Certification ID of the origin of environmentally-friendly value  No. is granted to
Client ID:
Client name: X Co.
Address
POC (TEL, FAX, E-mail)

1) Substance for environmental value certification (e.g. ethylene (plant-based))
2) Certification items of environmentally-friendly value
-1 Origin of carbon contained in the object substance
(Is carbon contained in ethylene plant- or fossil-based?)
-2 Energy amount and energy source for production of the object substance
(e.g. Electric power: X kwh/kg ethylene (thermal power 90% and hydroelectric power 10%) Heavy oil:
X l/kg ethylene
3) Quantity (e.g. ethylene 100 (kg))
4) Production history of the object substance
-1 Date of production
-2 Lot No. of products
-3 Name of factory and the address thereof
-4 Name of plant material
-5 Origin of plant material and the manufacturer thereof
-6 Production process (e.g. sugar → ethanol → ethylene)
-7 Amount and source of energy for production
5) Plan for use of the object substance
 (e.g. used for production of PE, PS, PET)
6) Secondary user of the object substance
 (e.g. X Plastic Industry Co., Y Plant )

Fig.60

Certification ID of the provider of environmentally-friendly value  No. is granted to

Environmentally-friendly value of the product produced by the following manufacturer
is certified as below.
Client ID:
Client name: X Co.
Certification ID of the origin of environmentally-friendly value  No.

1) Object substance for environmental value certification (e.g. ethylene (plant-based))
2) Certification items of environmentally-friendly value

-1 Carbon contained in the molecular structure of the object substance X is plant-based as shown
in the following production history.
 Amount of object substance (e.g. ethylene): X kg
-2 Energy amount for production
 To substance for environmental value certification 1 kg:
 Electric power: X kwh/kg ethylene (thermal power 90% and hydroelectric power 10%)
 Heavy oil: X l/kg ethylene
 Natural gas: X Nm3/kg ethylene
3) Production history of the object substance
 -1 Date of production
 -2 Lot No. of products
 -3 Name of factory and the address thereof
 -4 Name of plant material
 -5 Origin of plant material and the manufacturer thereof
 -6 Production process (e.g. sugar → ethanol → ethylene)
 -7 Amount and source of energy for production
4) Usage for the object substance
 (e.g., used for production of PE, PS, PET)
5) Secondary user of the object substance
 (e.g. X Plastic Industry Co., Y Plant )

Certifier:   Certification Organization   (month)  (date) (year)

                        (Digital signature)

Fig.61

Environmentally-friendly Value Allotment Request Data
(Entry screen)
Client ID: XXX
Client name: XXX Co.
(1) Certification ID of the source of environmentally-friendly value  No. XXX
(2) Name of the substance for certification of an environmental value (e.g., ethylene)
(3) Environmental value requested to be allotted
-1 Source of carbon contained in ethylene
(plant-based or fossil-based and percentage thereof)
(e.g. plant-based: 100 %; fossil-based: 0 %)
-2 Energy amount and energy source for production of the object substance
(e.g., Electric power: X kwh/kg ethylene (90% of thermal power, and 10% of hydroelectric power)
Heavy oil: X l/kg ethylene)
 -3 Amount of energy for production of fossil-based ethylene
    If there is the certification ID of the third-party certification organization, it will be indicated: XXX
(4) Allotment request  Polyethylene: 20% of plant-based: 5,000 kg
(5) Basic unit necessary for substantial chemical conversion from the substance, which is the source of
environmentally-friendly value, to organic compound, which is requested to be allotted.
    [Substantial amount of an environmentally-friendly value substance, which is necessary
for producing derivative for allotment request per unit weight, and other necessary substances and
amount thereof; in cases where the derivative of amount for allotment request is produced from
the environmentally-friendly value substance]
    (e.g., only 1.1 kg of ethylene is necessary for producing 1 kg of polyethylene)

Fig.62

Method of computation of corresponding production volume for allotment

1. Computation of allotment of necessary volume of a substance with an environmentally-friendly value

(Example of computation of allotment) The production volume of the organic compound of the originator of the environmentally-friendly value, which has been certificated, is computed based on the allotment request data of Fig. 61.

(Example)

Assume that the substance with an environmentally-friendly value is 2.000 kg of ethylene, and is allotted to 5,000 kg of polyethylene: plant-based 20%. In cases where the definition of percentage of plan-based is that percentage of the number of moles of plant-based carbon of total the number of moles of carbon contained in the object substance of computation of percentage of plan-based is greening percentage; the production volume of the organic compound of the originator of the environmentally-friendly value is converted to amount of carbon contained in the amount of substance providing an environmentally-friendly value, after that, conversion is done by the basic unit suggested in Fig. 61.

The number of moles of the carbon from ethylene of the number of moles (28)n of polyethylene (C2H4)n is (12×2)n=(24)n. In theory the number of moles of carbon of the total number of moles (24)n ÷ the number of moles of carbon from ethylene (24)n = 1. Therefore, in cases where 20% of carbon per unit weight of polyethylene is set to plant-based carbon, it follows ratio 1×20%. From the data of Fig. 61, in cases where 1.1 kg of ethylene to 1 kg of polyethylene; 1.1 kg × 20% of ethylene is plant-based, substantially. Therefore, 20% plant-based carbon of 5,000 kg of ethylene is: 5,000 kg × 20% × 1.1 kg = 1,100 kg. To 2,000 kg of ethylene with an environmentally-friendly value, 1,100 kg of the plant-based ethylene is allotted.

2. Computation of energy of organic compound, to which an environmentally-friendly value is allotted

The energy of organic compound, to which an environmentally-friendly value is allotted, is computed by amount of energy for production of organic compound with an environmentally-friendly value to the above necessary amount of ethylene + remaining amount of energy to a necessary amount of fossil-based organic compound.

Fig.63

Certification of Environmentally-friendly Value Product
(Entry screen)
Client ID:
Client name: X Co.
It is certified that the environmentally-friendly value created by B Co. using the following
 processes is assigned to the product of A Co.


1) Certification ID of the provider of environmentally-friendly value  No.
2) Transaction ID No. ○○○ is granted
3) Name of product: X resin
4) Production volume: X kg
 -1 Percentage of carbon derived from plants in relation to the total amount of carbon
contained in the product: X %
 -2 Energy for production (converted to carbon: X kg C)
   The basis for the above computation will be described. If the certification number of
the third party for energy
for production of the fossil-based organic compound is provided, it will be described as well.
5) History of Environmentally-friendly value
-1 Name of substance for environmental value certification (e.g. ethylene (plant-based))
-2 Source of the environmentally-friendly value
-3 Carbon contained in the molecular structure of the object substance (ethylene) is plant-based
as shown in the following production history.
 Amount of the substance for environmental certification (e.g. ethylene): X kg and converted to
 carbon: X kg
-3 Energy amount for production
 To substance for environmental value certification 1 kg:
 Electric power  kwh/kg ethylene (thermal power 90% and hydroelectric power 10%)
 Heavy oil  l/kg ethylene
 Natural gas  Nm3/kg ethylene
-4 Production history of the object substance
 -1 Date of production
 -2 Lot No. of products
 -3 Name of factory and the address thereof
 -4 Name of plant material
 -5 Origin of plant material and the manufacturer thereof
 -6 Production process (e.g. sugar → ethanol → ethylene)
 -7 Amount and source of energy for production

Fig.64

Request Data for Certification of Product with Environmentally-friendly Value
(Entry screen)
Client ID:
Client name: X Co.
We request for certification of the environmental value of the organic compound A
used in B product produced by us.

1) Certification ID of the source of environmentally-friendly value  No.
2) Assignment ID    No.
3) Specification of the product for request of certification
 -1 Organic compound in product
 -2 Amount: X kg
 -3 Object for use: A parts of B product
 -4 Production Lot No.   of A parts
 -5 Production Date

Fig.65

Certification of Environmentally-friendly Value Product
Client ID:
Client name: X Co.

It is certified that A parts produced by X Co. possesses the environmentally-friendly value created
by B Co. using the following processes:
1) Certification history
 -1 Certification ID of the provider of environmentally-friendly value  No.
 -2 Transaction ID of the direct value trader  No.    is granted.
 -3 Certification ID of the present product   No.   is granted.
2) Object product: X cleaner, Y chassis: X kg
3) Name of product: X resin
4) Plant-based carbon percentage: X %
5) Energy for production (converted to carbon: X kgC/ PS 10%)
6) Source of the environmentally-friendly value
-1 Carbon contained in the molecular structure of the object substance (ethylene) is plant-based
as shown in the following production history.
 Amount of the substance for environmental certification (e.g. ethylene): X kg and
 converted to carbon: X kg
-2 Energy amount for production
 To substance for environmental value certification 1 kg:
 Electric power  kwh/kg ethylene (thermal power 90% and hydroelectric power 10%)
 Heavy oil  l/kg ethylene
 Natural gas  Nm3/kg ethylene
7) Production history of the object substance
 -1 Date of production
 -2 Lot No. of products
 -3 Name of factory and the address thereof
 -4 Name of plant material
 -5 Origin of plant material and the manufacturer thereof
 -6 Production process (e.g. sugar → ethanol → ethylene)
 -8 Secondary product of the substance providing environmental value
    (e.g., used for production of PE, PS, PET)
 -9 Secondary user of the substance providing environmental value
    (e.g. X Plastic Industry Co., Y Plant )
 -7 Amount of energy for production

## INTERNATIONAL SEARCH REPORT

| | International application No. |
|---|---|
| | PCT/JP2004/002865 |

**A. CLASSIFICATION OF SUBJECT MATTER**
Int.Cl$^7$ G06F17/60

According to International Patent Classification (IPC) or to both national classification and IPC

**B. FIELDS SEARCHED**

Minimum documentation searched (classification system followed by classification symbols)
Int.Cl$^7$ G06F17/60

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-178167 A (Hitachi, Ltd.), 27 June, 2003 (27.06.03), Full text; all drawings (Family: none) | 1–20 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 April, 2004 (02.04.04) | 20 April, 2004 (20.04.04) |

| Name and mailing address of the ISA/ | Authorized officer |
|---|---|
| Japanese Patent Office | |
| Facsimile No. | Telephone No. |

Form PCT/ISA/210 (second sheet) (January 2004)